(19) Europäisches Patentamt
European Patent Office
Office européen des brevets

(11) **EP 4 694 348 A1**

(12) **EUROPEAN PATENT APPLICATION**
published in accordance with Art. 153(4) EPC

(43) Date of publication:
**11.02.2026 Bulletin 2026/07**

(21) Application number: **24784764.3**

(22) Date of filing: **22.03.2024**

(51) International Patent Classification (IPC):
**H04W 36/08** (2009.01)   **H04W 72/0457** (2023.01)

(52) Cooperative Patent Classification (CPC):
**H04W 36/08; H04W 72/0457**

(86) International application number:
**PCT/JP2024/011425**

(87) International publication number:
**WO 2024/209973 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.04.2023 JP 2023060805**

(71) Applicant: **Mitsubishi Electric Corporation**
**Chiyoda-ku**
**Tokyo 100-8310 (JP)**

(72) Inventors:
• **MOCHIZUKI, Mitsuru**
**Tokyo 100-8310 (JP)**
• **SHIMODA, Tadahiro**
**Tokyo 100-8310 (JP)**

(74) Representative: **Mewburn Ellis LLP**
**Aurora Building**
**Counterslip**
**Bristol BS1 6BX (GB)**

(54) **BASE STATION AND COMMUNICATION SYSTEM**

(57)   A base station is a base station of a communication system that supports dual connectivity in which a communication terminal is simultaneously connected to two base stations, in which, when the base station operates as a master base station that is a master node of the dual connectivity, the base station decides another base station that operates as a secondary base station that is a secondary node of the dual connectivity, by using a model that has been trained using information acquired from a communication terminal connected to a serving base station and other neighboring base stations.

FIG. 13

EP 4 694 348 A1

**Description**

[Technical Field]

The present disclosure relates to a radio communication technology.

[Background Art]

In the 3rd Generation Partnership Project (3GPP), which is a standardization organization for mobile communication systems, a 5th generation (hereinafter, may be referred to as "5G") radio access system has been studied (see, for example, Non Patent Document 2) as a successor to Long Term Evolution (LTE) and Long Term Evolution Advanced (LTE-A), which is one of 4th generation radio access systems (see Non Patent Document 1). The 5G radio access technology is referred to as "new radio access technology" (commonly called "New Radio" or "NR"). An NR system has been studied based on an LTE system and an LTE-A system.

For example, in Europe, an organization called METIS has compiled the requirements for 5G (see Non Patent Document 3). The requirements for the 5G radio access system include, relative to the LTE system, a 1,000-fold increase in system capacity, a 100-fold increase in data transmission speed, a reduction of data processing latency to one-fifth, and a 100-fold increase in the number of simultaneously connected communication terminals, for achieving further reduction in power consumption and reduction in equipment costs (see Non Patent Document 3).

In order to satisfy such requirements, in 3GPP, the standardization of 5G has been studied (see Non Patent Documents 4 to 23).

As an NR access method, orthogonal frequency division multiplexing (OFDM) is used in a downlink direction, and either OFDM or discrete Fourier transform-spread-OFDM (DFT-s-OFDM) is used in an uplink direction. In addition, the 5G system does not incorporate circuit switching and relies only on a packet-switched communication, similar to LTE and LTE-A.

Higher frequencies can be used in NR than in LTE for improving the transmission speed and reducing the processing latency.

In NR, which may use higher frequencies compared to LTE, cell coverage is secured by forming a narrow beam-shaped transmission and reception range (beamforming) and changing the beam's direction (beam sweeping).

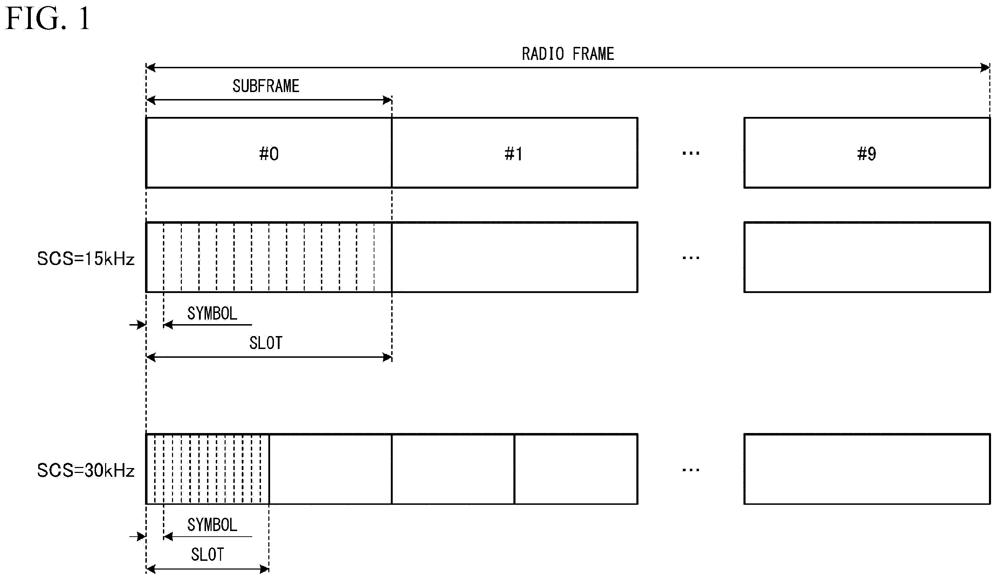

Decisions regarding a frame configuration in the NR system in 3GPP, which are described in Non Patent Document 1 (Chapter 5), will be described with reference to FIG. 1. FIG. 1 is an explanatory diagram showing a configuration of a radio frame used in an NR-based communication system. In FIG. 1, one radio frame is 10 ms. The radio frame is divided into 10 subframes having the same size. In the frame configuration in NR, one or a plurality of numerologies, that is, a plurality of subcarrier spacings (SCS) are supported. In NR, regardless of the subcarrier spacing, one subframe is 1 ms, and one slot is composed of 14 symbols. In addition, the number of slots included in one subframe is one when the subcarrier spacing is 15 kHz, and the number of slots corresponding to other subcarrier spacings increases in proportion to the subcarrier spacing (see Non Patent Document 11 (3GPP TS 38.211)).

Decisions regarding a channel configuration in the NR system in 3GPP are described in Non Patent Document 2 (Chapter 5) and Non Patent Document 11.

A physical broadcast channel (PBCH) is a channel for downlink transmission from a base station device (hereinafter, may be simply referred to as a "base station") to a communication terminal device (hereinafter, may be referred to as a "communication terminal" or a "terminal"), such as a mobile terminal device (hereinafter, may be simply referred to as "user equipment"). The PBCH is transmitted together with a downlink synchronization signal.

The downlink synchronization signal in NR includes a primary synchronization signal (P-SS) and a secondary synchronization signal (S-SS). The synchronization signals are transmitted from the base station with a predetermined period and a predetermined duration as a synchronization signal burst (hereinafter, may be referred to as an SS burst). The SS burst is composed of a synchronization signal block (hereinafter, may be referred to as an SS block) for each beam of the base station.

The base station transmits the SS block of each beam by changing the beam within the duration of the SS burst. The SS block is composed of the P-SS, the S-SS, and the PBCH.

A physical downlink control channel (PDCCH) is a channel for downlink transmission from the base station to the communication terminal. The PDCCH carries downlink control information (DCI). The DCI includes resource allocation information of a downlink shared channel (DL-SCH), which is one of the transport channels described below, resource allocation information of a paging channel (PCH), which is one of the transport channels described below, hybrid automatic repeat request (HARQ) information on the DL-SCH, and the like.

In addition, an uplink scheduling grant may be included in the DCI. The DCI may include an acknowledgement (Ack)/negative acknowledgement (Nack) which is a response signal to the uplink transmission. Further, in order to flexibly switch between the DL and the UL in the slot, the DCI may include a slot format indication (SFI). The PDCCH or the DCI is also referred to as an L1/L2 control signal.

In NR, a time-frequency area as a candidate in which the PDCCH is included is provided. This area is referred to as a control resource set (CORESET). The communication terminal monitors the CORESET and acquires the PDCCH.

A physical downlink shared channel (PDSCH) is a channel for downlink transmission from the base station to the communication terminal. The downlink shared channel (DL-SCH) as the transport channel and the PCH as the transport channel are mapped to the PDSCH.

A physical uplink control channel (PUCCH) is a channel for uplink transmission from the communication terminal to the base station. The PUCCH carries uplink control information (UCI). The UCI includes an Ack/Nack, channel state information (CSI), a scheduling request (SR), and the like, which are response signals to the downlink transmission. The CSI is composed of rank indicator (RI), precoding matrix indicator (PMI), and channel quality indicator (CQI) reports. The RI is rank information of a channel matrix in multiple input multiple output (MIMO). The PMI is information on a precoding weight matrix used in MIMO. The CQI is quality information indicating a quality of the received data or a quality of a communication path. The UCI may be carried by a PUSCH described below. The PUCCH or the UCI is also referred to as the L1/L2 control signal.

The physical uplink shared channel (PUSCH) is a channel for uplink transmission from the communication terminal to the base station. An uplink shared channel (UL-SCH), which is one of the transport channels, is mapped to the PUSCH.

A physical random access channel (PRACH) is a channel for uplink transmission from the communication terminal to the base station. The PRACH carries a random access preamble.

A downlink reference signal (reference signal (RS)) is a known symbol in the NR-based communication system. Four types of downlink reference signals are defined as below. The four types of downlink reference signals include a demodulation reference signal (DM-RS) as a UE-specific reference signal, a phase tracking reference signal (PT-RS), a positioning reference signal (PRS), and a channel state information reference signal (CSI-RS). The measurements of the physical layer of the communication terminal include reference signal received power (RSRP) measurement and reference signal received quality (RSRQ) measurement.

Similarly, an uplink reference signal is a known symbol in the NR-based communication system. Three types of uplink reference signals are defined as below. The three types of uplink reference signals include a demodulation reference signal (DM-RS), a phase tracking reference signal (PT-RS), and a sounding reference signal (SRS).

A transport channel described in Non Patent Document 2 (Chapter 5) will be described. Among downlink transport channels, a broadcast channel (BCH) is broadcast throughout the entire coverage of the base station (cell). The BCH is mapped to the physical broadcast channel (PBCH).

Retransmission control in accordance with an HARQ is applied to the downlink shared channel (DL-SCH). The DL-SCH can be broadcast throughout the entire coverage of the base station (cell). The DL-SCH supports dynamic or semi-static resource allocation. The semi-static resource allocation is also referred to as semipersistent scheduling. The DL-SCH supports discontinuous reception (DRX) of the communication terminal in order to reduce power consumption of the communication terminal. The DL-SCH is mapped to the physical downlink shared channel (PDSCH).

The paging channel (PCH) supports the DRX of the communication terminal in order to enable low power consumption of the communication terminal. The PCH is required to be broadcast throughout the entire coverage of the base station (cell). The PCH is mapped to a physical resource such as the physical downlink shared channel (PDSCH) that can be dynamically used for traffic.

Among uplink transport channels, the retransmission control in accordance with the HARQ is applied to the uplink shared channel (UL-SCH). The UL-SCH supports dynamic or semi-static resource allocation. The semi-static resource allocation is also referred to as a configured grant. The UL-SCH is mapped to the physical uplink shared channel (PUSCH).

A random access channel (RACH) is limited to control information. The RACH has a risk of contention. The RACH is mapped to the physical random access channel (PRACH).

The HARQ will be described. The HARQ is a technology for improving the communication quality of the transmission path by a combination of automatic repeat request (ARQ) and forward error correction. The HARQ has the advantage that forward error correction operates effectively even for the transmission path in which the communication quality changes, by the retransmission. In particular, it is also possible to obtain further quality improvement by combining, when retransmission, a reception result of the first transmission and a reception result of the retransmission.

An example of the retransmission method will be described. When received data cannot be correctly decoded on a reception side, in other words, when a cyclic redundancy check (CRC) error has occurred (CRC = NG), "Nack" is transmitted from the reception side to a transmission side. The transmission side that has received "Nack" retransmits the data. When the received data can be correctly decoded on the reception side, in other words, when the CRC error has not occurred (CRC = OK), "Ack" is transmitted from the reception side to the transmission side. The transmission side that has received "Ack" transmits next data.

Another example of the retransmission method will be described. When the CRC error has occurred on the reception side, the repeat request is issued from the reception side to the transmission side. The repeat request is issued by toggling a new data indicator (NDI). The transmission side that has received the repeat request retransmits the data. When the CRC error has not occurred on the reception side, the repeat request is not issued. When the transmission side has not received the repeat request for a predetermined time, the transmission side considers that the CRC error has not occurred on the reception side.

A logical channel described in Non Patent Document 1 (Chapter 6) will be described. A broadcast control channel (BCCH) is a downlink channel for broadcasting system control information. The BCCH as the logical channel is mapped to the broadcast channel (BCH) or the downlink shared channel (DL-SCH) as the transport channel.

The paging control channel (PCCH) is a downlink channel for transmitting paging information and changes of system information. The PCCH, which is the logical channel, is mapped to the paging channel (PCH) which is the transport channel.

A common control channel (CCCH) is a channel for transmitting control information between the communication terminal and the base station. The CCCH is used when the communication terminal does not have an RRC connection with a network. In the downlink direction, the CCCH is mapped to the downlink shared channel (DL-SCH), which is the transport channel. In the uplink direction, the CCCH is mapped to the uplink shared channel (UL-SCH) which is the transport channel.

A dedicated control channel (DCCH) is a channel for transmitting dedicated control information between the communication terminal and the network in a one-to-one manner. The DCCH is used when the communication terminal has the RRC connection with the network. The DCCH is mapped to the uplink shared channel (UL-SCH) in the uplink and is mapped to the downlink shared channel (DL-SCH) in the downlink.

A dedicated traffic channel (DTCH) is a channel for one-to-one communication with a communication terminal for transmission of user information. The DTCH is present both in the uplink and the downlink. The DTCH is mapped to the uplink shared channel (UL-SCH) in the uplink and is mapped to the downlink shared channel (DL-SCH) in the downlink.

The location tracking of the communication terminal is performed in units of an area consisting of one or more cells. The location tracking is performed to track the location of the communication terminal even in an idle state and to call the communication terminal, in other words, to enable the communication terminal to receive a call. The area for tracking the location of the communication terminal is referred to as a tracking area (TA).

In NR, the call of the communication terminal is supported in a range with units of an area smaller than the tracking area. This range is referred to as a RAN notification area (RNA). Paging of the communication terminal in an RRC_INACTIVE state, which will be described below, is performed in this range.

In NR, carrier aggregation (CA) in which two or more component carriers (CCs) are aggregated (also referred to as "aggregation") has been studied in order to support wide transmission bandwidths. The CA is described in Non Patent Document 1.

When the CA is configured, the UE, which is the communication terminal, has a single RRC connection with the network (NW). In the RRC connection, one serving cell provides non-access stratum (NAS) mobility information and security input. This cell is referred to as a primary cell (PCell). A secondary cell (SCell) is configured to form a set of serving cells together with the PCell in accordance with a capability of the UE. The set of serving cells consisting of one PCell and one or more SCells are configured for one UE.

In addition, in 3GPP, in order to further increase a communication capacity, there is dual connectivity (abbreviated as DC) in which the UE is connected to two base stations to perform communication. The DC is described in Non Patent Documents 1 and 22.

Among the base stations that perform dual connectivity (DC), one may be referred to as a "master base station (master node: MN)", and the other may be referred to as a "secondary base station (secondary node: SN)". A group of serving cells configured by the master base station is collectively referred to as a master cell group (MCG), and a group of serving cells configured by the secondary base station may be collectively referred to as a secondary cell group (SCG). In the DC, the primary cell in the MCG or the SCG is referred to as a special cell (SpCell or SPCell). The special cell in the MCG is referred to as the PCell, and the special cell in the SCG is referred to as a primary SCG cell (PSCell).

In addition, in NR, the base station configures part of the carrier frequency band (hereinafter, may be referred to as a bandwidth part (BWP)) in advance for the UE, and the UE performs transmission and reception with the base station in the BWP, thereby reducing power consumption in the UE.

Further, in 3GPP, it has been studied to support a service (which may be an application) using sidelink (SL) communication (also referred to as PC5 communication) in an evolved packet system (EPS) described below and in a 5G core system (see Non Patent Documents 1, 2, and 26 to 28). In the SL communication, communication is performed between the terminals. Examples of the service using the SL communication include a vehicle-to-everything (V2X) service and a proximity-based service. In the SL communication, not only direct communication between the terminals but also communication between the UE and the NW via a relay has been proposed (see Non Patent Documents 26 and 28).

The physical channel (see Non Patent Documents 2 and 11) used in the SL will be described. A physical sidelink broadcast channel (PSBCH) carries information related synchronization with the system and is transmitted from the UE.

A physical sidelink control channel (PSCCH) carries control information from a UE for sidelink communication and V2X sidelink communication.

A physical sidelink shared channel (PSSCH) carries data from the UE for sidelink communication and V2X sidelink communication.

A physical sidelink feedback channel (PSFCH) carries HARQ feedback on the sidelink from a UE that has received the transmitted PSSCH to a UE that has transmitted the PSSCH.

The transport channel (see Non Patent Document 1) used in the SL will be described. A sidelink broadcast channel (SL-BCH) has a predetermined transport format and is mapped to the PSBCH which is the physical channel.

A sidelink shared channel (SL-SCH) supports broadcast transmission. The SL-SCH supports both UE autonomous resource selection and resource allocation scheduled by the base station. There is a risk of contention when the UE autonomous resource selection is performed, and there is no contention when a dedicated resource is allocated to the UE by the base station. Further, the SL-SCH supports dynamic link adaptation by changing transmit power, modulation, and coding. The SL-SCH is mapped to the PSSCH, which is the physical channel.

The logical channel (see Non Patent Document 2) used in the SL will be described.

A sidelink broadcast control channel (SBCCH) is a sidelink channel for broadcasting sidelink system information from one UE to other pieces of UE. The SBCCH is mapped to the SL-BCH which is the transport channel.

A sidelink traffic channel (STCH) is a one-to-many sidelink traffic channel for transmitting the user information from one UE to other pieces of UE. The STCH is used only by a UE having a sidelink communication capability and a UE having a V2X sidelink communication capability. One-to-one communication between two pieces of UE having the sidelink communication capability is also achieved by the STCH. The STCH is mapped to the SL-SCH which is the transport channel.

A sidelink control channel (SCCH) is a sidelink control channel for transmitting the control information from one UE to other pieces of UE. The SCCH is mapped to the SL-SCH which is the transport channel.

In LTE, the SL communication has been limited to broadcast only. In NR, as the SL communication, in addition to the broadcast, support for unicast and groupcast has been studied (see Non Patent Document 27 (3GPP TS 23.287)).

In the unicast communication or the groupcast communication in the SL, the HARQ feedback (Ack/Nack), a CSI report, and the like are supported.

In addition, in 3GPP, integrated access and backhaul (IAB) in which both an access link, which is a link between the UE and the base station, and a backhaul link, which is a link between the base stations, are provided wirelessly has been studied (see Non Patent Documents 2, 20, and 29).

Some new technologies are required for mobile communication systems. For example, introduction of artificial intelligence (AI)/machine learning (ML) into the RAN is required in order to improve communication performance. In 3GPP, discussions on such a new technology have started (Non Patent Documents 30 and 31).

[Citation List]

[Patent Document]

[Patent Document 1]
3GPP TS 36.300 V17.3.0

[Patent Document 2]
3GPP TS 38.300 V17.3.0

[Patent Document 3]
"Scenarios, requirements and KPIs for 5G mobile and wireless system", ICT-317669-METIS/D1.1

[Patent Document 4]
3GPP TR 23.799 V14.0.0

[Patent Document 5]
3GPP TR 38.801 V14.0.0

[Patent Document 6]
3GPP TR 38.802 V14.2.0

[Patent Document 7]

3GPP TR 38.804 V14.0.0

[Patent Document 8]
3GPP TR 38.912 V16.0.0

[Patent Document 9]
3GPP RP-172115

[Patent Document 10]
3GPP TS 23.501 V18.0.0

[Patent Document 11]
3GPP TS 38.211 V17.4.0

[Patent Document 12]
3GPP TS 38.212 V17.4.0

[Patent Document 13]
3GPP TS 38.213 V17.4.0

[Patent Document 14]
3GPP TS 38.214 V17.4.0

[Patent Document 15]
3GPP TS 38.321 V17.3.0

[Patent Document 16]
3GPP TS 38.322 V17.2.0

[Patent Document 17]
3GPP TS 38.323 V17.3.0

[Patent Document 18]
3GPP TS 37.324 V17.0.0

[Patent Document 19]
3GPP TS 38.331 V17.3.0

[Patent Document 20]
3GPP TS 38.401 V17.3.0

[Patent Document 21]
3GPP TS 38.413 V17.3.0

[Patent Document 22]
3GPP TS 37.340 V17.3.0

[Patent Document 23]
3GPP TS 38.423 V17.3.0

[Patent Document 24]
3GPP TS 38.305 V17.3.0

[Patent Document25]
3GPP TS 23.273 V18.0.0

[Patent Document 26]
3GPP TR 23.703 V12.0.0

[Patent Document 27]
3GPP TS 23.287 V17.5.0

[Patent Document 28]
3GPP TS 23.303 V17.0.0

[Patent Document 29]
3GPP TS 38.340 V17.3.0

[Patent Document 30]
3GPP TR 37.817 V17.0.0

[Patent Document 31]
3GPP RP-213602

[Patent Document 32]
3GPP R3-224427

[Patent Document 33]
3GPP TS 38.314 V17.2.0

[Summary of Invention]

[Technical Problem]

In the mobile communication system, the number of required key performance indicators (KPIs) such as delay, reliability, connection density, user experience, and energy efficiency is increasing, and it is required to consistently optimize these KPIs. Therefore, a study on a technology of improving various KPIs by introducing AI/ML into the mobile communication system and collecting or analyzing data has begun (Non Patent Documents 30 and 31). However, a use case in which the introduction of the AI/ML is studied is limited to network energy saving, load balancing, and mobility optimization, and other use cases have not yet been studied. Therefore, there is an issue that it is not possible to optimize various KPIs in various communication statuses.

In view of the above-described issue, one object of the present disclosure is to obtain a base station that achieves a communication system capable of introducing AI/ML in various communication statuses and executing an effective procedure in accordance with the communication status.

[Solution to Problem]

The present disclosure relates to a base station of a communication system that supports dual connectivity in which a communication terminal is simultaneously connected to two base stations, in which, when the base station operates as a master base station that is a master node of the dual connectivity, the base station decides another base station that operates as a secondary base station that is a secondary node of the dual connectivity, by using a model that has been trained using information acquired from a communication terminal connected to a serving base station and other neighboring base stations.

Advantageous Effects of Invention

With the base station according to the present disclosure, it is possible to achieve the communication system capable of executing an effective procedure in accordance with the communication status.

The object, characteristics, aspects, and advantages of the present disclosure will be more apparent from the following detailed description and the accompanying drawings.

[Brief Description of Drawings]

FIG. 1 is an explanatory diagram showing a configuration of a radio frame used in an NR-based communication system.

FIG. 2 is a block diagram showing an overall configuration of an NR-based communication system 210 discussed in 3GPP.

FIG. 3 is a configuration diagram showing DC by base stations connected to an NG Core.

FIG. 4 a block diagram showing a configuration of user equipment 202 shown in FIG. 2.

FIG. 5 is a block diagram showing a configuration of a base station 213 shown in FIG. 2.

FIG. 6 is a block diagram showing a configuration of a 5GC unit.

FIG. 7 is a flowchart showing an outline from a cell search to an idle mode performed by a communication terminal (UE) in the NR-based communication system.

FIG. 8 is a diagram showing an example of a cell configuration in an NR system.

FIG. 9 is a connection configuration diagram showing an example of a connection configuration of terminals in SL communication.

FIG. 10 is a connection configuration diagram showing an example of a connection configuration of base stations that supports integrated access and backhaul.

FIG. 11 is a diagram showing a configuration example of a learning device related to a communication system, in Embodiment 1.

FIG. 12 is a flowchart related to learning processing of the learning device, in Embodiment 1.

FIG. 13 is a diagram showing a configuration example of an inference device related to the communication system, in Embodiment 1.

FIG. 14 is a flowchart related to inference processing of the inference device, in Embodiment 1.

FIG. 15 is a sequence diagram showing an example of an SN addition procedure using AI/ML for DC, in Embodiment 1.

FIG. 16 is a sequence diagram showing an example of an SN change procedure using the AI/ML for DC, in Embodiment 1.

FIG. 17 is a sequence diagram showing another example of the SN change procedure using the AI/ML for DC, in Embodiment 1.

FIG. 18 is a diagram showing a first half part of a sequence showing an example of an MN HO procedure accompanied by the SN change using the AI/ML for DC, in Embodiment 1.

FIG. 19 is a diagram showing a second half part of the sequence showing the example of the MN HO procedure accompanied by the SN change using the AI/ML for DC, in Embodiment 1.

FIG. 20 is a sequence diagram showing an example of a CA procedure using AI/ML for CA, in Embodiment 2.

FIG. 21 is a sequence diagram showing an example of an HO procedure using AI/ML for CA-considered HO, in Embodiment 3.

FIG. 22 is a sequence diagram showing an example of an HO procedure using AI/ML for beam-considered HO, in Embodiment 4.

FIG. 23 is a sequence diagram showing an example of a packet duplication procedure using AI/ML for packet duplication, in Embodiment 5.

[Description of Embodiments]

Embodiment 1.

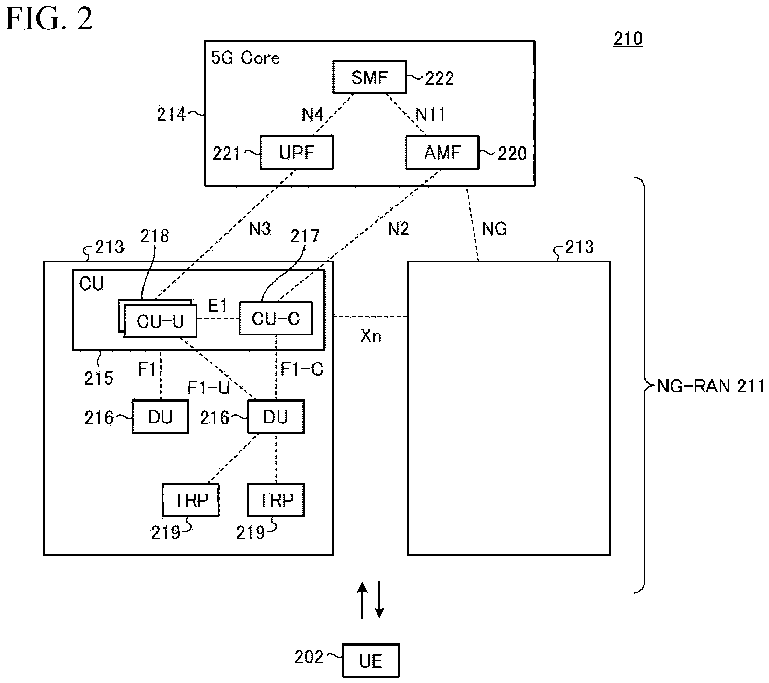

FIG. 2 is a block diagram showing an overall configuration of an NR-based communication system 210 discussed in 3GPP. FIG. 2 will be described. A radio access network is referred to as a next generation radio access network (NG-RAN) 211. A mobile terminal device (hereinafter, referred to as "user equipment (UE)") 202, which is a communication terminal device, can perform radio communication with a base station device (hereinafter, referred to as an "NG-RAN NodeB (gNB)") 213, and transmits and receives signals by radio communication. The NG-RAN 211 is composed of one or a plurality of NG-RAN NodeBs 213.

Here, the term "communication terminal device" includes not only a mobile terminal device such as a mobile phone terminal device that can move, but also a nonmobile device such as a sensor. Hereinafter, the "communication terminal device" may be simply referred to as a "communication terminal".

An access stratum (AS) protocol is terminated between the UE 202 and the NG-RAN 211. As the AS protocol, for example, radio resource control (RRC), service data adaptation protocol (SDAP), packet data convergence protocol (PDCP), radio link control (RLC), medium access control (MAC), and physical layer (PHY) are used. The RRC is used in a control plane (hereinafter, may be referred to as a C plane, a C-plane, or a CP), the SDAP is used in a user plane (hereinafter, may be referred to as a U plane, a U-plane, or a UP), and the PDCP, the MAC, the RLC, and the PHY are used in both the C plane and the U plane.

The radio resource control (RRC) protocol between the UE 202 and the NG-RAN NodeB 213 performs broadcast, paging, RRC connection management, and the like. As the states between the NG-RAN NodeB 213 and the UE 202 in the RRC, there are RRC_IDLE, RRC_CONNECTED, and RRC_INACTIVE.

In the RRC_IDLE, public land mobile network (PLMN) selection, system information (SI) broadcast, paging, cell re-selection, mobility, and the like are performed. In the RRC_CONNECTED, the user equipment has an RRC connection and can transmit and receive data to and from the network. In addition, in the RRC_CONNECTED, a handover (HO), a neighbor cell measurement, and the like are performed. In the RRC_INACTIVE, system information (SI) broadcast, paging, cell re-selection, mobility, and the like are performed while the connection between a 5G core unit 214 and the NG-RAN NodeB 213 is maintained.

The gNB 213 is connected to the 5G core unit (hereinafter, may be referred to as a "5GC unit") 214 having an Access and Mobility Management Function (AMF), a Session Management Function (SMF), a User Plane Function (UPF), and the like, through an NG interface. Control information and/or user data are communicated between the gNB 213 and the 5GC unit 214. The NG interface is a general term for an N2 interface between the gNB 213 and an AMF 220, an N3 interface between the gNB 213 and a UPF 221, an N11 interface between the AMF 220 and an SMF 222, and an N4 interface between the UPF 221 and the SMF 222. A plurality of 5GC units 214 may be connected to one gNB 213. The gNBs 213 are connected through an Xn interface, and control information and/or user data are communicated between the gNBs 213.

The 5GC unit 214 is a higher-level device, specifically, a higher-level node, and performs control of connection between the NG-RAN NodeB 213 and the user equipment (UE) 202, distribution of a paging signal to one or a plurality of NG-RAN NodeBs (gNBs) 213 and/or an E-UTRAN NodeB (eNB), and the like. Further, the 5GC unit 214 performs mobility control in an idle state. The 5GC unit 214 manages the tracking area list when the user equipment 202 is in an idle state, an inactive state, or an active state. The 5GC unit 214 transmits a paging message to a cell belonging to the tracking area to which the user equipment 202 is registered, to start a paging protocol.

The gNB 213 may constitute one or a plurality of cells. In a case where one gNB 213 constitutes a plurality of cells, each cell is configured to be communicable with the UE 202.

The gNB 213 may be divided into a central unit (hereinafter, may be referred to as CU) 215 and a distributed unit (hereinafter, may be referred to as DU) 216. One CU 215 is formed in the gNB 213. One or a plurality of DUs 216 are formed in the gNB 213. One DU 216 constitutes one or a plurality of cells. The CU 215 is connected to the DU 216 through an F1 interface, and control information and/or user data are communicated between the CU 215 and the DU 216. The F1 interface is composed of an F1-C interface and an F1-U interface. The CU 215 has functions of the RRC, SDAP, and PDCP protocols, and the DU 216 has functions of the RLC, MAC, and PHY protocols. One or a plurality of transmission reception points (TRPs) 219 may be connected to the DU 216. The TRP 219 transmits and receives radio signals to and from the UE.

The CU 215 may be divided into a CU for a C plane (CU-C) 217 and a CU for a U plane (CU-U) 218. One CU-C 217 is formed in the CU 215. One or a plurality of CU-Us 218 are formed in the CU 215. The CU-C 217 is connected to the CU-U 218 through an E1 interface, and control information is communicated between the CU-C 217 and the CU-U 218. The CU-C 217 is connected to the DU 216 through the F1-C interface, and control information is communicated between CU-C 217 and DU 216. The CU-U 218 is connected to the DU 216 through the F1-U interface, and user data is communicated between the CU-U 218 and the DU 216.

In the 5G communication system, a Unified Data Management (UDM) function and a Policy Control Function (PCF) described in Non Patent Document 10 (3GPP TS 23.501) may be included. The UDM and/or the PCF may be included in the 5GC unit 214 shown in FIG. 2.

In the 5G communication system, a Location Management Function (LMF) described in Non Patent Document 24 (3GPP TS 38.305) may be provided. The LMF may be connected to the base station through the AMF as disclosed in Non Patent Document 25 (3GPP TS 23.273).

In the 5G communication system, a Non-3GPP Interworking Function (N3IWF) described in Non Patent Document 10 (3GPP TS 23.501) may be included. The N3IWF may terminate an access network (AN) with the UE in a non-3GPP access with the UE.

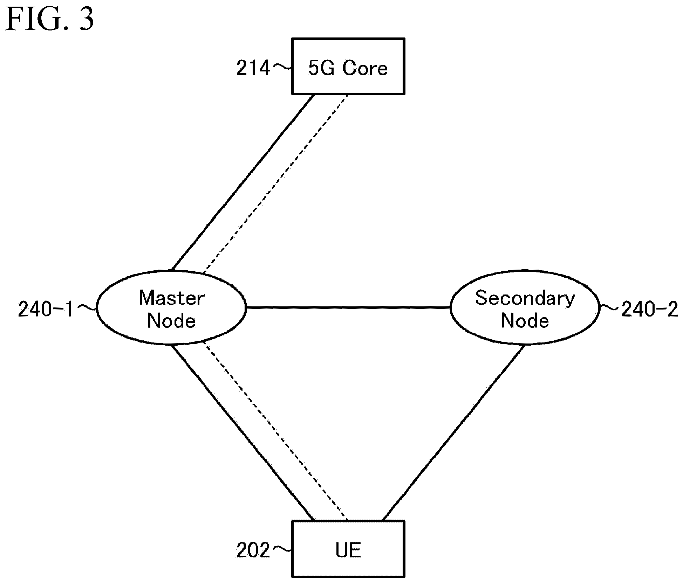

FIG. 3 is a diagram showing a configuration of dual connectivity (DC) connected to an NG Core. In FIG. 3, a solid line indicates U-Plane connection, and a broken line indicates C-Plane connection. In FIG. 3, a master base station 240-1 may be a gNB or an eNB. In addition, a secondary base station 240-2 may be a gNB or an eNB. For example, in FIG. 3, a DC configuration in which the master base station 240-1 is the gNB and the secondary base station 240-2 is the eNB may be referred to as an NG-EN-DC. In FIG. 3, an example is shown in which the U-Plane connection between the 5GC unit 214 and the secondary base station 240-2 is performed via the master base station 240-1, but the U-Plane connection may be directly performed between the 5GC unit 214 and the secondary base station 240-2. In addition, in FIG. 3, instead of the 5GC unit 214, an evolved packet core (EPC) that is a core network connected to an LTE system and an LTE-A system may be connected to the master base station 240-1. The U-Plane connection between the EPC and the secondary base station 240-2 may be directly performed.

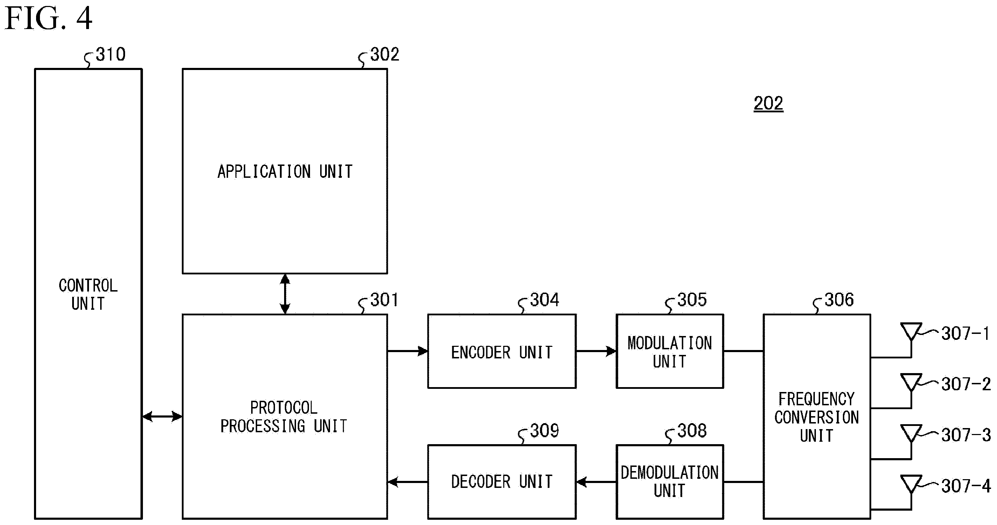

FIG. 4 is a block diagram showing a configuration of the user equipment 202 shown in FIG. 2. A transmission procedure of the user equipment 202 shown in FIG. 4 will be described. First, control data from a control unit 310 and user data from an application unit 302 are transmitted to a protocol processing unit 301. Buffering of the control data and the user data may be performed. The buffers of the control data and the user data may be provided in the control unit 310, may be provided in the application unit 302, or may be provided in the protocol processing unit 301. The protocol processing unit 301 performs protocol processing such as SDAP, PDCP, RLC, and MAC, for example, decides a transmission destination base station in DC and performs an operation such as adding a header in each protocol. The data on which the protocol processing has been performed is passed to the encoder unit 304 and subjected to the encoding processing such as forward error correction. Data that is directly output from the protocol processing unit 301 to the modulation unit 305 without being subjected to the encoding processing may be present. The modulation processing is performed on the data on which the encoding processing has been performed by the encoder unit 304 in the modulation unit 305. The modulation unit 305 may perform the precoding in MIMO. The modulated data is converted into the baseband signal, and then output to the frequency conversion unit 306 to be converted into the radio transmission frequency. Thereafter, the transmission signals are transmitted from antennas 307-1 to 307-4 to the base station 213. FIG. 4 shows a case where the number of antennas is four, but the number of antennas is not limited to four.

In addition, a reception procedure of the user equipment 202 is executed as follows. The radio signals from the base station 213 are received by the antennas 307-1 to 307-4. The received signal is converted from the radio reception frequency into the baseband signal by the frequency conversion unit 306, and is subjected to the demodulation processing in the demodulation unit 308. The weight calculation and the multiplication processing may be performed in the demodulation unit 308. The demodulated data is passed to the decoder unit 309 and is subjected to the decoding processing such as forward error correction. The decoded data is passed to the protocol processing unit 301 and is subjected to protocol processing such as MAC, RLC, PDCP, and SDAP, for example, removal of a header in each protocol. In the data on which the protocol processing has been performed, the control data is passed to the control unit 310, and the user data is passed to the application unit 302.

A series of procedures of the user equipment 202 is controlled by the control unit 310. Therefore, the control unit 310 is also connected to each of the units 302 and 304 to 309, which are not shown in FIG. 4.

Each unit of the user equipment 202, for example, the control unit 310, the protocol processing unit 301, the encoder unit 304, and the decoder unit 309 are implemented by a processing circuit including, for example, a processor and a memory. For example, the control unit 310 is implemented by the processor executing a program in which the series of procedures of the user equipment 202 is described. The program in which the series of procedures of the user equipment 202 is described is stored in the memory. Examples of the memory include a non-volatile memory and a volatile semiconductor memory, such as a random access memory (RAM), a read only memory (ROM), or a flash memory. Each unit of the user equipment 202, for example, the control unit 310, the protocol processing unit 301, the encoder unit 304, and the decoder unit 309 may be implemented by a dedicated processing circuit such as a field programmable gate array (FPGA), an application specific integrated circuit (ASIC), or a digital signal processor (DSP). In FIG. 4, the number of antennas used for transmission and the number of antennas used for reception by the user equipment 202 may be the same as or different from each other.

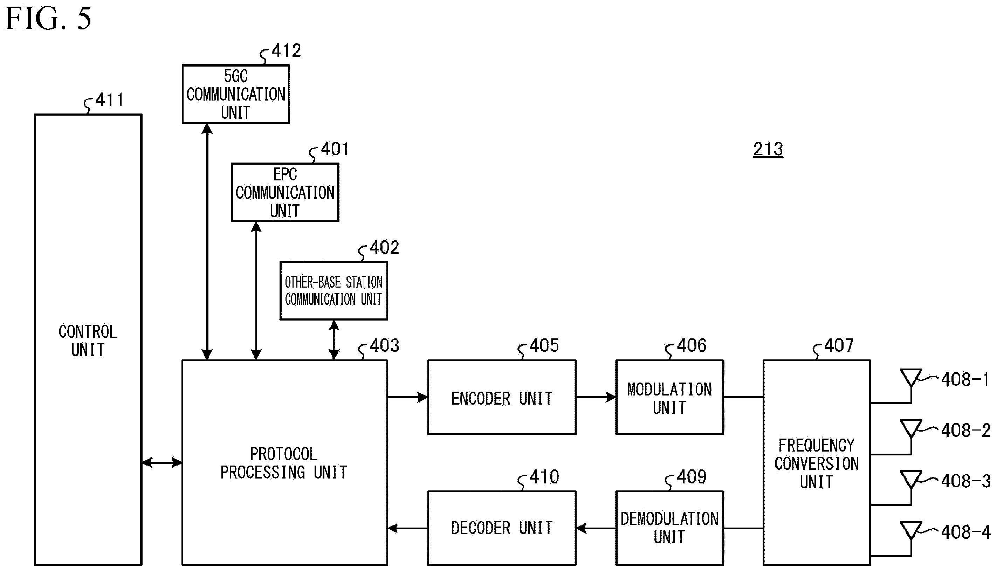

FIG. 5 is a block diagram showing a configuration of the base station 213 shown in FIG. 2. A transmission procedure of the base station 213 shown in FIG. 5 will be described. An EPC communication unit 401 transmits and receives data between the base station 213 and the EPC. A 5GC communication unit 412 transmits and receives data between the base station 213 and the 5GC (5GC unit 214 or the like). An other-base station communication unit 402 transmits and receives data to and from another base station. The EPC communication unit 401, the 5GC communication unit 412, and the other-base station communication unit 402 each perform information exchange with a protocol processing unit 403. The control data from the control unit 411 and the user data and the control data from the EPC communication unit 401, the 5GC communication unit 412, and the other-base station communication unit 402 are transmitted to the protocol processing unit 403. Buffering of the control data and the user data may be performed. The buffers of the control data and the user data may be provided in the control unit 411, may be provided in the EPC communication unit 401, may be provided in the 5GC communication unit 412, or may be provided in the other-base station communication unit 402.

The protocol processing unit 403 performs the protocol processing such as SDAP, PDCP, RLC, and MAC, for example, routing of transmission data in DC and addition of the header in each protocol. The data on which the protocol processing has been performed is passed to the encoder unit 405 and subjected to the encoding processing such as forward error correction. Data that is directly output from the protocol processing unit 403 to the modulation unit 406 without being subjected to the encoding processing may be present. In addition, the data may be transmitted from the protocol processing unit 403 to the other-base station communication unit 402. For example, in DC, the data, which is transmitted from the 5GC communication unit 412 or the EPC communication unit 401, may be transmitted to another base station, for example, the secondary base station via the other-base station communication unit 402. The encoded data is subjected to modulation processing by the modulation unit 406. The modulation unit 406 may perform the precoding in MIMO. The modulated data is converted into the baseband signal, and then output to the frequency conversion unit 407 to be converted into the radio transmission frequency. Thereafter, the transmission signals are transmitted from the antennas 408-1 to 408-4 to one or a plurality of pieces of the user equipment 202. FIG. 5 shows a case where the number of antennas is four, but the number of antennas is not limited to four.

In addition, a reception procedure of the base station 213 is executed as follows. The radio signals from one or a plurality of pieces of the user equipment 202 are received by the antennas 408-1 to 408-4. The received signal is converted from the radio reception frequency into the baseband signal by the frequency conversion unit 407, and is subjected to the demodulation processing in the demodulation unit 409. The demodulated data is passed to the decoder unit 410 and is subjected to the decoding processing such as forward error correction. The decoded data is passed to the protocol processing unit 403 and is subjected to protocol processing such as MAC, RLC, PDCP, and SDAP, for example, removal of a header in each protocol. In the data on which the protocol processing has been performed, the control data is passed to the control unit 411, the 5GC communication unit 412, the EPC communication unit 401, or the other-base station communication unit 402, and the user data is passed to the 5GC communication unit 412, the EPC communication unit 401, or the other-base station communication unit 402. The data, which is transmitted from the other-base station communication unit 402, may be transmitted to the 5GC communication unit 412 or the EPC communication unit 401. The data may be, for example, uplink data transmitted to the 5GC communication unit 412 or the EPC communication unit 401 via another base station in DC.

A series of procedures of the base station 213 is controlled by the control unit 411. Therefore, the control unit 411 is also connected to each of the units 401, 402, 405 to 410, and 412, which are not shown in FIG. 5.

Each unit of the base station 213, for example, the control unit 411, the protocol processing unit 403, the 5GC communication unit 412, the EPC communication unit 401, the other-base station communication unit 402, the encoder unit 405, and the decoder unit 410 are implemented by a processing circuit including a processor and a memory or a dedicated processing circuit such as an FPGA, an ASIC, or a DSP, similarly to the user equipment 202 described above. In FIG. 5, the number of antennas used for transmission and the number of antennas used for reception by the base station 213 may be the same as or different from each other.

As an example of the configuration of the CU 215 shown in FIG. 2, a configuration may be used in which a DU communication unit is provided, excluding the encoder unit 405, the modulation unit 406, the frequency conversion unit 407, the antennas 408-1 to 408-4, the demodulation unit 409, and the decoder unit 410 shown in FIG. 5. The DU communication unit is connected to the protocol processing unit 403. The protocol processing unit 403 in the CU 215 performs the protocol processing such as PDCP and SDAP.

As an example of the configuration of the DU 216 shown in FIG. 2, a configuration may be used in which a CU communication unit is provided, excluding the EPC communication unit 401, the other-base station communication unit 402, and the 5GC communication unit 412 shown in FIG. 5. The CU communication unit is connected to the protocol processing unit 403. The protocol processing unit 403 in the DU 216 performs the protocol processing such as PHY, MAC, and RLC.

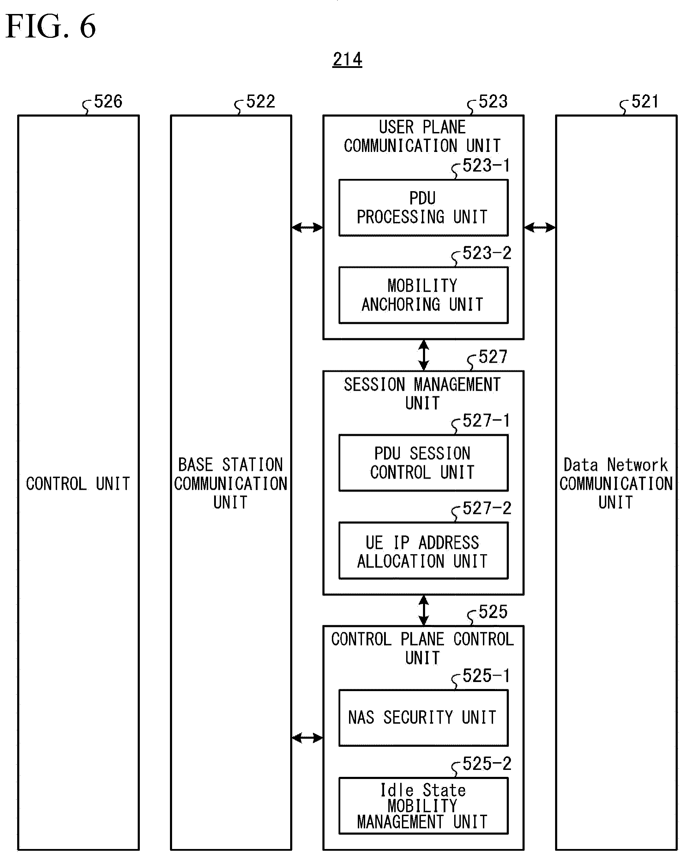

FIG. 6 is a block diagram showing a configuration of the 5GC unit. FIG. 6 shows the configuration of the 5GC unit 214 shown in FIG. 2 described above. FIG. 6 shows a case where the 5GC unit 214 shown in FIG. 2 includes the configuration of the AMF, the configuration of the SMF, and the configuration of the UPF. In the example shown in FIG. 6, the AMF may have a function of a control plane control unit 525, the SMF may have a function of a session management unit 527, and the UPF may have functions of a user plane communication unit 523 and a data network communication unit 521. The data network communication unit 521 transmits and receives data between the 5GC unit 214 and a data network. The base station communication unit 522 transmits and receives data through the NG interface between the 5GC unit 214 and the base station 213. The user data transmitted from the data network is passed from the data network communication unit 521 to the base station communication unit 522 via the user plane communication unit 523, and is transmitted to one or a plurality of base stations 213. The user data transmitted from the base station 213 is passed from the base station communication unit 522 to the data network communication unit 521 via the user plane communication unit 523, and is transmitted to the data network.

The control data transmitted from the base station 213 is passed from the base station communication unit 522 to the control plane control unit 525. The control plane control unit 525 may pass the control data to the session management unit 527. The control data may be transmitted from the data network. The control data transmitted from the data network may be transmitted from the data network communication unit 521 to the session management unit 527 via the user plane communication unit 523. The session management unit 527 may transmit the control data to the control plane control unit 525.

The user plane communication unit 523 includes a PDU processing unit 523-1, a mobility anchoring unit 523-2, and the like, and performs a general procedure on the user plane (hereinafter, may be referred to as a U-plane). The PDU processing unit 523-1 performs processing of a data packet, for example, the transmission and reception of packets with the data network communication unit 521 and the transmission and reception of packets with the base station communication unit 522. The mobility anchoring unit 523-2 is responsible for connecting a data path during UE mobility.

The session management unit 527 performs management of a PDU session provided between the UE and the UPF, and the like. The session management unit 527 includes a PDU session control unit 527-1, a UE IP address allocation unit 527-2, and the like. The PDU session control unit 527-1 manages the PDU session provided between the user equipment 202 and the 5GC unit 214. The UE IP address allocation unit 527-2 allocates an IP address to the user equipment 202 and the like.

The control plane control unit 525 includes an NAS security unit 525-1, an idle state mobility management unit 525-2, and the like, and performs a general procedure on the control plane (hereinafter, may be referred to as a C-Plane). The NAS security unit 525-1 performs security of a non-access stratum (NAS) message and the like. The idle state mobility management unit 525-2 performs mobility management in the idle state (RRC_IDLE state or simply referred to as idle), generation and control of the paging signal in the idle state, addition, deletion, update, and search of the tracking area of one or a plurality of pieces of subordinate user equipment 202, tracking area list management, and the like.

A series of procedures of the 5GC unit 214 is controlled by the control unit 526. Therefore, the control unit 526 is connected to each of the units 521 to 523, 525, and 527, which are not shown in FIG. 6. Each unit of the 5GC unit 214 is implemented by, for example, a processing circuit including a processor and a memory, or a dedicated processing circuit such as an FPGA, an ASIC, or a DSP, similarly to the control unit 310 of the user equipment 202 described above.

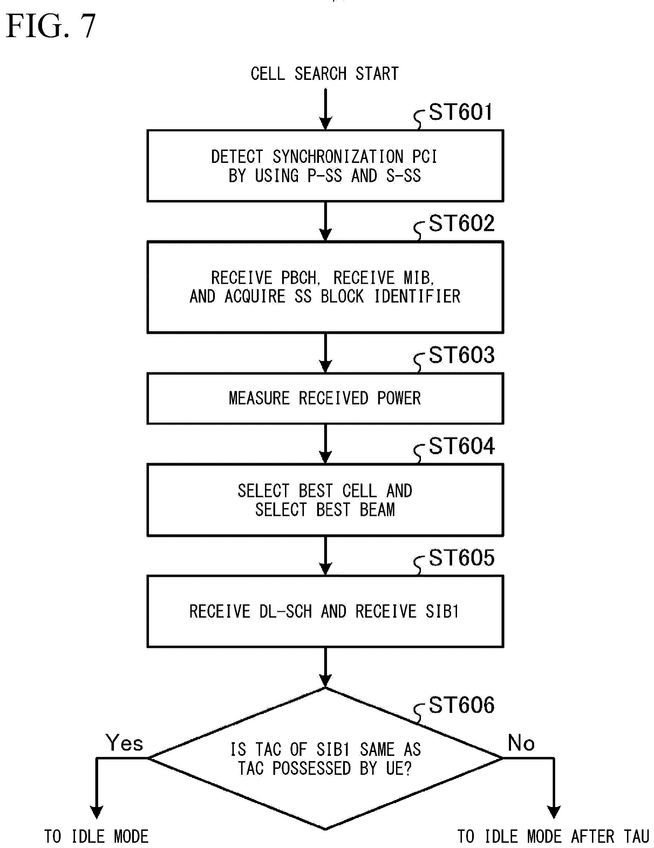

Next, an example of a cell search method in the communication system will be described. FIG. 7 is a flowchart showing an outline from the cell search to the idle mode performed by the communication terminal (UE) in the NR-based communication system. When the cell search is started, in step ST601, the communication terminal synchronizes a slot timing and a frame timing by using a primary synchronization signal (P-SS) and a secondary synchronization signal (S-SS) transmitted from a neighboring base station.

The P-SS and the S-SS are collectively referred to as a synchronization signal (SS). A synchronization code corresponding to a physical cell identifier (PCI) allocated to each cell on a one-to-one basis is allocated to the synchronization signal (SS). The number of PCIs is considered to be 1008. The communication terminal performs synchronization using the 1008 types of PCIs and detects (specifies) the PCI of the synchronized cell.

In step ST602, the communication terminal receives the PBCH for the next synchronized cell. A master information block (MIB) including cell configuration information is mapped to the BCCH on the PBCH. Therefore, the MIB is obtained by receiving the PBCH to obtain the BCCH. Examples of the information on the MIB include a system frame number (SFN), scheduling information of a system information block (SIB) 1, a subcarrier spacing such as SIB1, and information on a DM-RS location.

In addition, the communication terminal acquires an SS block identifier from the PBCH. Part of bit sequences of the SS block identifier is included in the MIB. The remaining bit sequence is included in an identifier used for the sequence generation of the DM-RS associated with the PBCH. The communication terminal acquires the SS block identifier by using the MIB included in the PBCH and the sequence of the DM-RS associated with the PBCH.

Next, in step ST603, the communication terminal measures the received power of the SS block.

Next, in step ST604, the communication terminal selects a cell having the best reception quality, for example, a cell having the highest received power, that is, the best cell from among the one or more cells detected up to step ST603. In addition, the communication terminal selects a beam having the best reception quality, for example, a beam having the highest received power of the SS block, that is, a best beam. For the selection of the best beam, for example, the received power of the SS block for each SS block identifier is used.

Next, in step ST605, the communication terminal obtains the system information block (SIB) 1 in the broadcast information BCCH by receiving the DL-SCH based on the scheduling information of the SIB1 included in the MIB. The SIB1 includes information related access to the cell, cell configuration information, and scheduling information of other SIBs (SIBk: integer $k \geq 2$). Further, the SIB1 includes a tracking area code (TAC).

Next, in step ST606, the communication terminal compares the TAC of the SIB1 received in step ST605 with a TAC portion of a tracking area identity (TAI) in the tracking area list already stored by the communication terminal. The tracking area list is also referred to as a TAI list. The TAI is identification information for identifying the tracking area, and is composed of a mobile country code (MCC), a mobile network code (MNC), and a tracking area code (TAC). The MCC is a country code. The MNC is a network code. The TAC is a code number of the tracking area.

When the TAC received in step ST605 is the same as the TAC included in the tracking area list as a result of the comparison in step ST606, the communication terminal enters the idle mode in the cell. In comparison, when the TAC received in step ST605 is not included in the tracking area list, the communication terminal requests a change of the tracking area in order to perform a tracking area update (TAU) to a core network (EPC) including the MME or the like through the cell.

A device (hereinafter, may be referred to as a "core network side device") constituting the core network updates the tracking area list based on an identification number (such as a UE-ID) of the communication terminal transmitted from the communication terminal together with a TAU request signal. The core network side device transmits the updated tracking area list to the communication terminal. The communication terminal rewrites (updates) the TAC list stored by the communication terminal based on the received tracking area list. Then, the communication terminal enters the idle mode in the cell.

Next, an example of a random access method in the communication system will be described. In the random access, 4-step random access and 2-step random access are used. In addition, for each of the 4-step random access and the 2-step random access, there are contention-based random access, that is, random access in which a timing contention with other user equipment may occur, and contention-free random access.

An example of the contention-based 4-step random access method will be described. As a first step, the user equipment transmits a random access preamble to the base station. The random access preamble may be selected from a predetermined range by the user equipment or may be individually allocated to the user equipment and notified from the base station.

In a second step, the base station transmits a random access response to the user equipment. The random access response includes uplink scheduling information used in a third step, the terminal identifier used in the uplink transmission of the third step, and the like.

In the third step, the user equipment performs the uplink transmission to the base station. The user equipment uses, for the uplink transmission, the information acquired in the second step. In a fourth step, the base station notifies the user equipment of whether or not the contention is solved. The user equipment, which has been notified that there is no contention, completes the random access procedure. The user equipment, which has been notified that there is the contention, starts the procedure from the first step again.

The contention-free 4-step random access method is different from the contention-based 4-step random access method in the following points. That is, before the first step, the base station allocates the random access preamble and the uplink scheduling to the user equipment in advance. In addition, the notification in the fourth step of whether or not the contention is solved is not necessary.

An example of the contention-based 2-step random access method will be described. As a first step, the user equipment performs the transmission of the random access preamble and the uplink transmission to the base station. In a second step, the base station notifies the user equipment of the presence or absence of the contention. The user equipment, which has been notified that there is no contention, completes the random access procedure. The user equipment, which has been notified that there is the contention, starts the procedure from the first step again.

The contention-free 2-step random access method is different from the contention-based 2-step random access method in the following points. That is, before the first step, the base station allocates the random access preamble and the uplink scheduling to the user equipment in advance. In addition, in the second step, the base station transmits a random access response to the user equipment.

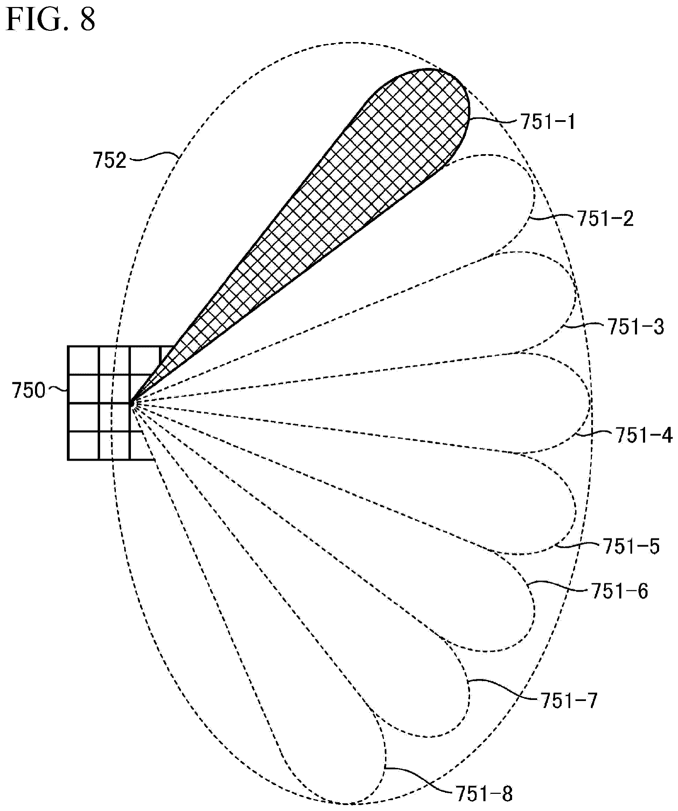

FIG. 8 shows an example of a cell configuration in NR. In the NR cell, a narrow beam is formed and transmitted by changing a direction. In the example shown in FIG. 8, a base station 750 performs transmission and reception with the user equipment by using a beam 751-1 at a certain time. At other times, the base station 750 performs transmission and reception with the user equipment by using a beam 751-2. Similarly, the base station 750 performs transmission and reception with the user equipment by using one or a plurality of beams 751-3 to 751-8.

In this way, the base station 750 constitutes a wide-range cell 752.

FIG. 8 shows an example in which the number of beams used by the base station 750 is eight, but the number of beams may be different from eight. Further, in the example shown in FIG. 8, the number of beams used by the base station 750 at the same time is set to one, but may more than one.

A concept of quasi-colocation (QCL) is used for the identification of the beams (see Non Patent Document 14 (3GPP TS 38.214)). The beam is identified by information indicating which reference signal (for example, SS block or CSI-RS) beam the beam can be regarded as equivalent to. The information may include, for example, a type of criterion by which the beams can be regarded as equivalent to each other, such as information related Doppler shift, Doppler spread, mean delay, delay spread, or spatial Rx parameters (see Non Patent Document 14 (3GPP TS 38.214)).

In 3GPP, the sidelink (SL) is supported for device-to-device (D2D) communication and vehicle-to-vehicle (V2V) communication (see Non Patent Documents 1 and 16). The SL is defined by a PC5 interface.

In SL communication, in addition to broadcast, unicast and groupcast are supported, and thus support for the PC5-S signalling has been studied (see Non Patent Document 27 (3GPP TS 23.287)). For example, the PC5-S signalling is performed in order to establish the SL, that is, a link for performing PC5 communication. The link is performed in the V2X layer and is also referred to as a layer 2 link.

In addition, in the SL communication, the support of RRC signalling has been studied (see Non Patent Document 27 (3GPP TS 23.287)). The RRC signalling in the SL communication is also referred to as PC5 RRC signalling. For example, it has been proposed to notify the UE capability between the pieces of UE that perform the PC5 communication, or to notify the configuration of the AS layer for performing the V2X communication using the PC5 communication.

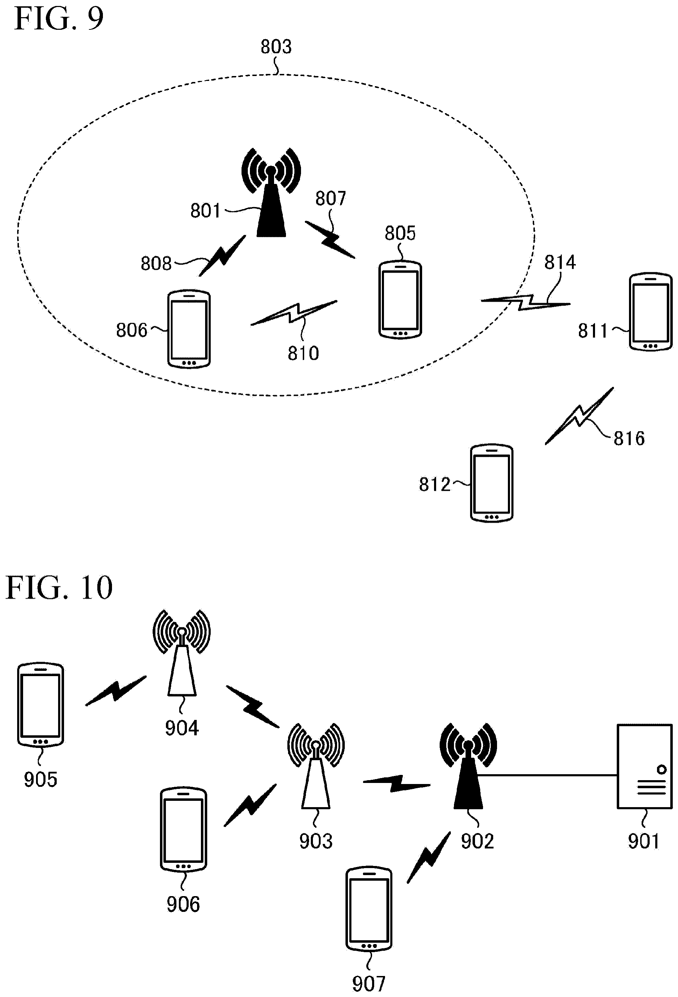

FIG. 9 shows an example of a connection configuration of the user equipment in the SL communication. In the example shown in FIG. 9, a UE 805 and a UE 806 are present within a coverage 803 of a base station 801. UL/DL communication 807 is performed between the base station 801 and the UE 805. UL/DL communication 808 is performed between the base station 801 and the UE 806. SL communication 810 is performed between the UE 805 and the UE 806. A UE 811 and a UE 812 are present outside the coverage 803. SL communication 814 is performed between the UE 805 and the UE 811. In addition, SL communication 816 is performed between the UE 811 and the UE 812.

In the SL communication, as an example of the communication between the UE and the NW via the relay, the UE 805 shown in FIG. 9 relays the communication between the UE 811 and the base station 801.

The same configuration as the configuration shown in FIG. 4 may be used for the UE that performs the relay. A procedure of the relay in the UE will be described with reference to FIG. 4. The procedure of the relay performed by the UE 805 in the communication from the UE 811 to the base station 801 will be described. A radio signal from the UE 811 is received by the antennas 307-1 to 307-4. The received signal is converted from the radio reception frequency into the baseband signal by the frequency conversion unit 306, and is subjected to the demodulation processing in the demodulation unit 308. The weight calculation and the multiplication processing may be performed in the demodulation unit 308. The demodulated data is passed to the decoder unit 309 and is subjected to the decoding processing such as forward error correction. The decoded data is passed to the protocol processing unit 301 and is subjected to the protocol processing such as MAC and RLC used for the communication with the UE 811, for example, removal of the header in each protocol. Further, the protocol processing of RLC, MAC, and the like used for the communication with the base station 801, for example, an operation such as adding the header in each protocol is performed. In the protocol processing unit 301 of the UE 811, the protocol processing of PDCP and SDAP may be performed. The data on which the protocol processing has been performed is passed to the encoder unit 304 and subjected to the encoding processing such as forward error correction. Data that is directly output from the protocol processing unit 301 to the modulation unit 305 without being subjected to the encoding processing may be present. The modulation processing is performed on the data on which the encoding processing has been performed by the encoder unit 304 in the modulation unit 305. The modulation unit 305 may perform the precoding in MIMO. The modulated data is converted into the baseband signal, and then output to the frequency conversion unit 306 to be converted into the radio transmission frequency. Thereafter, the transmission signals are transmitted from antennas 307-1 to 307-4 to the base station 801.

In the above description, the example of the relay performed by the UE 805 in the communication from the UE 811 to the base station 801 has been described, but the same procedure is also used in the relay of the communication from the base station 801 to the UE 811.

The 5G base station can support integrated access and backhaul (IAB) (see Non Patent Documents 2 and 20). A base station that supports IAB (hereinafter, may be referred to as an IAB base station) is composed of an IAB donor CU that is a CU of a base station that operates as an IAB donor that provides an IAB function, an IAB donor DU that is a DU of a base station that operates as an IAB donor, and an IAB node that is connected to the IAB donor DU and the UE using a radio interface. The F1 interface is provided between the IAB node and the IAB donor CU (see Non Patent Document 2).

FIG. 10 shows an example of the connection of the IAB base station. An IAB donor CU 901 is connected to an IAB donor DU 902. An IAB node 903 is connected to the IAB donor DU 902 using the radio interface. The IAB node 903 is connected to an IAB node 904 using the radio interface. That is, the IAB nodes may be connected in multiple stages. A UE 905 is connected to the IAB node 904 using the radio interface. A UE 906 may be connected to the IAB node 903 using the radio interface, and a UE 907 may be connected to the IAB donor DU 902 using the radio interface. A plurality of IAB donor DUs 902 may be connected to the IAB donor CU 901, a plurality of IAB nodes 903 may be connected to the IAB donor DU 902, and a plurality of IAB nodes 904 may be connected to the IAB node 903.

A backhaul adaptation protocol (BAP) layer is provided in the connection between the IAB donor DU and the IAB node and the connection between the IAB nodes (see Non Patent Document 29). The BAP layer performs operations such as routing of received data to the IAB donor DU and/or the IAB node, and mapping of received data to the RLC channel (see Non Patent Document 29).

As an example of the configuration of the IAB donor CU, the same configuration as that of the CU 215 is used.

As an example of the configuration of the IAB donor DU, the same configuration as that of the DU 216 is used. In the protocol processing unit of the IAB donor DU, processing of the BAP layer, for example, processing of adding a BAP header in downlink data, routing to the IAB node, removing the BAP header in uplink data, or the like is performed.

As an example of the configuration of the IAB node, a configuration excluding the EPC communication unit 401, the other-base station communication unit 402, and the 5GC communication unit 412 shown in FIG. 5 may be used.

A transmission/reception procedure in the IAB node will be described with reference to FIGS. 5 and 10. The transmission/reception procedure of the IAB node 903 in the communication between the IAB donor CU 901 and the UE 905 will be described. In the uplink communication from the UE 905 to the IAB donor CU 901, the radio signal from the IAB node 904 is received by the antenna 408 (some or all of the antennas 408-1 to 408-4). The received signal is converted from the radio reception frequency into the baseband signal by the frequency conversion unit 407, and is subjected to the demodulation processing in the demodulation unit 409. The demodulated data is passed to the decoder unit 410 and is subjected to the decoding processing such as forward error correction. The decoded data is passed to the protocol processing unit 403 and is subjected to the protocol processing such as MAC and RLC used for the communication with the IAB node 904, for example, removal of the header in each protocol. In addition, routing to the IAB donor DU 902 using the BAP header is performed, and the protocol processing such as RLC and MAC used for the communication with the IAB donor DU 902, for example, an operation such as adding the header in each protocol is performed. The data on which the protocol processing has been performed is passed to the encoder unit 405 and subjected to the encoding processing such as forward error correction. Data that is directly output from the protocol processing unit 403 to the modulation unit 406 without being subjected to the encoding processing may be present. The encoded data is subjected to modulation processing by the modulation unit 406. The modulation unit 406 may perform the precoding in MIMO. The modulated data is converted into the baseband signal, and then output to the frequency conversion unit 407 to be converted into the radio transmission frequency. Thereafter, the transmission signals are transmitted from the antennas 408-1 to 408-4 to the IAB donor DU 902. The same procedure is also performed in the downlink communication from the IAB donor CU 901 to the UE 905.

In the IAB node 904, the same transmission/reception procedure as that of the IAB node 903 is also performed. In the protocol processing unit 403 of the IAB node 903, for example, processing of adding the BAP header and routing to the IAB node 904 in the uplink communication, and processing of removing the BAP header in the downlink communication are performed as the processing of the BAP layer.

In the standard of the mobile communication system in 3GPP, there is a dual connectivity (DC) function in which the UE is connected to two base stations for high-speed and large-capacity communication. In order to satisfy the requirements of various KPIs together with high-speed and large-capacity communication, it is desired to execute more effective DC. In 3GPP, the introduction of the AI/ML into the mobile communication system has begun to be studied. A proposal has also been made for the introduction of the AI/ML into the DC (Non Patent Document 32). However, in this proposal, only the notification of the movement direction of the UE or traffic prediction information of the UE between the MN and the SN is disclosed, and nothing else is disclosed. This information alone is insufficient to optimize various KPIs and to execute more effective DC.

In the present embodiment, a method of enabling the introduction of the AI/ML into the DC and enabling more effective DC will be disclosed.

Learning of the model (may be referred to as training in the present specification) will be described. In the present specification, a model (including a trained model) may be referred to as an AI/ML model.

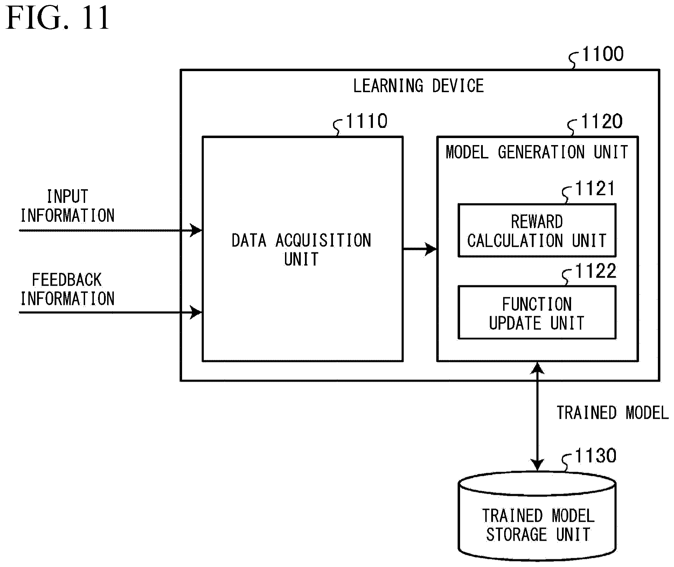

In the communication system according to the present embodiment, a configuration of a learning device 1100 shown in FIG. 11 is adopted. FIG. 11 is a diagram showing a configuration example of the learning device 1100 related to the communication system. The learning device 1100 includes a data acquisition unit 1110 and a model generation unit 1120. The trained model generated by the model generation unit 1120 is stored in a trained model storage unit 1130. FIG. 11 shows a configuration example in which the trained model storage unit 1130 is present outside the learning device 1100, but the trained model storage unit 1130 may be included in the learning device 1100. The learning device 1100 shown in FIG. 11 may be applied to the base station.

The data acquisition unit 1110 acquires input information and feedback information as training data.

The model generation unit 1120 learns output information based on the training data including the input information and the feedback information. That is, the model generation unit 1120 generates the trained model that infers the output information from the input information of the communication system.

A known algorithm such as supervised learning, unsupervised learning, or reinforcement learning can be used as a learning algorithm used by the model generation unit 1120. As an example, a case will be described in which the reinforcement learning is applied. In the reinforcement learning, an agent (subject of action) in a certain environment observes a current state (parameter of the environment) and decides an action to be taken. The environment is dynamically changed by the action of the agent, and the agent is given reward in accordance with the change in the environment. The agent repeats this procedure, and learns a policy of action that yields the greatest amount of reward through a series of actions. As a representative method of the reinforcement learning, Q-learning or TD-learning is known. For example, in a case of the Q-learning, a general update expression of an action value function Q(s, a) is represented by Expression (1).

$$Q(s_t, a_t) \leftarrow Q(s_t, a_t) + \alpha \left( r_{t+1} + \gamma \max_a Q(s_{t+1}, a) - Q(s_t, a_t) \right) \qquad \cdots (1)$$

In Expression (1), $s_t$ represents a state of an environment at a point in time t, and $a_t$ represents an action at the point in time t. The state changes to $s_{t+1}$ by the action $a_t$. Here, $r_{t+1}$ represents reward obtained by the change in the state, $\gamma$ represents a discount rate, and $\alpha$ represents a learning coefficient. In addition, $\gamma$ is in a range of $0 < \gamma \leq 1$ and $\alpha$ is in a range of $0 < \alpha \leq 1$. A best action $a_t$ in the state $s_t$ at the point in time t is learned by setting the action $a_t$ and the state $s_t$ using the input information.

In the update expression represented by Expression (1), the action value Q is increased in a case where the action value Q of the action a with the highest Q value at the point in time t+1 is greater than the action value Q of the action a executed at the point in time t, and the action value Q is decreased in the opposite case. In other words, the action value function Q(s, a) is updated such that the action value Q of the action a at the point in time t approaches the best action value at the point in time t+1. As a result, the best action value in a certain environment is sequentially propagated to the action value in the previous environment.

As described above, when the trained model is generated through the reinforcement learning, the model generation unit 1120 includes a reward calculation unit 1121 and a function update unit 1122.

The reward calculation unit 1121 calculates the reward based on the input information and the feedback information. The reward calculation unit 1121 calculates reward r based on reward criteria. For example, the reward r is increased (for example, reward of "1" is given) in a case of a reward increase criterion, whereas the reward r is decreased (for example, reward of "-1" is given) in a case of a reward decrease criterion.

The function update unit 1122 updates a function for deciding the output in accordance with the reward calculated by the reward calculation unit 1121, and outputs the function to the trained model storage unit 1130. For example, in a case of the Q-learning, the function is used as a function for calculating the output information of the action value function $Q(s_t, a_t)$ represented by Expression (1).

The learning device 1100 repeatedly executes the learning as described above. The trained model storage unit 1130 stores the action value function $Q(s_t, a_t)$, that is, the trained model updated by the function update unit 1122.

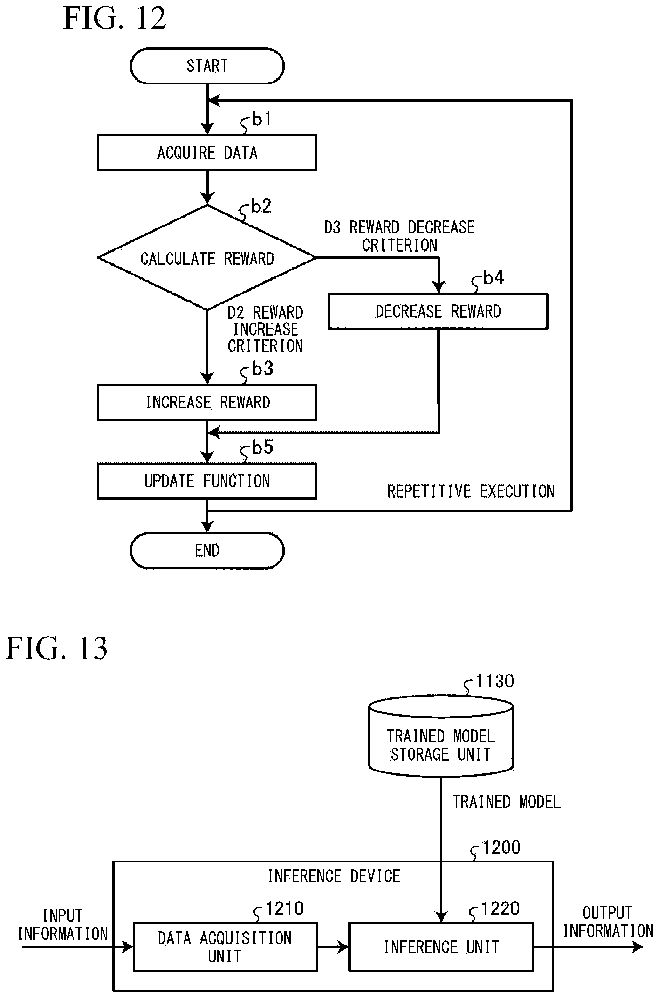

Next, learning processing of the learning device 1100 will be described with reference to FIG. 12. FIG. 12 is a flowchart showing the learning processing of the learning device.

In step b1, the data acquisition unit 1110 acquires the input information and the feedback information as the training data.

In step b2, the model generation unit 1120 calculates the reward based on the input information and the feedback information. Specifically, the reward calculation unit 1121 acquires the input information and the feedback information, and determines whether to increase the reward (step b3) or decrease the reward (step b4) based on a predetermined reward criterion.

When it is determined to increase the reward, the reward calculation unit 1121 increases the reward in step b3. On the other hand, when it is determined to decrease the reward, the reward calculation unit 1121 decreases the reward in step b4.

In step b5, the function update unit 1122 updates the action value function $Q(s_t, a_t)$ represented by Expression (1), which is stored in the trained model storage unit 1130, based on the reward calculated by the reward calculation unit 1121.

The learning device 1100 repeatedly executes the steps from step b1 to step b5 described above, and stores the generated action value function $Q(s_t, a_t)$ in the trained model storage unit 1130 as the trained model.

The inference using the trained model will be described.

FIG. 13 is a configuration diagram of an inference device 1200 related to the communication system. The inference device 1200 includes a data acquisition unit 1210 and an inference unit 1220.

The data acquisition unit 1210 acquires the input information.

The inference unit 1220 infers the output information using the trained model. That is, the output information suitable for the input information can be inferred by inputting the input information acquired by the data acquisition unit 1210 to the trained model.

In the present embodiment, the output information is output by using the trained model that has been trained by the model generation unit 1120 of the communication system, but the trained model may be acquired from another communication system, and the output information may be output based on this trained model.

In FIG. 13, the configuration example has been described in which the trained model storage unit 1130 is present outside the inference device 1200, but a configuration may be adopted in which the trained model storage unit 1130 is included in the inference device 1200. The inference device 1200 shown in FIG. 13 may be applied to the base station. The inference device 1200 may be applied to the same node as the learning device 1100 or may be applied to a different node from the learning device 1100.

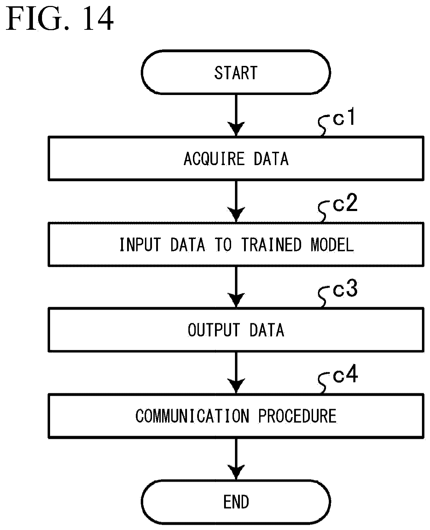

Next, a procedure of obtaining the output information using the inference device 1200 will be described with reference to FIG. 14.

In step c1, the data acquisition unit 1210 acquires the input information.

In step c2, the inference unit 1220 acquires the trained model from the trained model storage unit 1130, inputs the input information to the acquired trained model, and obtains the output information.

In step c3, the inference unit 1220 outputs the output information obtained by the trained model to the communication system.

In step c4, the communication system executes a communication procedure using the output information that is output. As a result, a more effective communication procedure using the trained model can be executed.

In the present embodiment, a case has been described in which the reinforcement learning is applied to the learning algorithm used by the inference unit 1220, but the present disclosure is not limited to this. As the learning algorithm, in addition to reinforcement learning, supervised learning, unsupervised learning, semisupervised learning, or the like can be applied.

In addition, as the learning algorithm used in the inference unit 1220, deep learning extraction of a feature value itself can be used, and machine learning may be executed in accordance with other known methods, such as a neural network, genetic programming, inductive logic programming, and a support vector machine.

The learning device 1100 and the inference device 1200 may be, for example, connected to the communication system via a network. In addition, the learning device 1100 and the inference device 1200 may be incorporated in the communication system. Further, the learning device 1100 and the inference device 1200 may be present on a cloud server.

In addition, the model generation unit 1120 may learn the output information using the training data acquired from a plurality of nodes. The model generation unit 1120 may acquire the training data from a plurality of nodes used in the same area, or may learn the output information using the training data collected from a plurality of nodes operating independently in different areas. In addition, it is also possible to add a node for collecting the training data as the target or remove the node from the target, in the middle of the procedure. Further, the learning device 1100 that has learned the output information for a certain node may be applied to another node, and the output information for the other node may be relearned and updated.

The AI/ML is introduced for the DC. In the present embodiment, an AI/ML model for DC is provided in the base station. The AI/ML model for DC is used for, for example, the selection of the SN. The AI/ML model for DC may be provided in the MN and/or the SN. The AI/ML model for DC is used for, for example, the selection of an SN change target and the selection of a PSCell change target.

The base station may transmit information on whether or not the base station include the AI/ML model for DC (which may be information on including the model) to the UE. The RRC signalling may be used for the transmission. The base station may transmit the information on whether or not the base station includes the AI/ML model for DC to the neighboring base station. Xn signalling may be used for the transmission. The base station may transmit the information on whether or not the base station includes the AI/ML model for DC to the core network (CN) node (which may be a function). For example, a Network Data Analysis Function (NWDAF) may be used as the CN node. The base station may transmit the information on whether or not the base station includes the AI/ML model for DC to a management node. For example, a management service (MnS) node or operation, administration, and management (OAM) may be used as the management node. In this way, the UE or the node that is notified of the information can recognize whether or not the base station that is a notification source includes the AI/ML model for DC. It is possible to recognize whether or not the AI/ML can be introduced in the DC using the base station. The MN and/or the SN may perform these types of transmission. The UE or node that is notified of the information can recognize whether or not the MN and/or the SN used for the DC includes the AI/ML model for DC.

Input information for the AI/ML model for DC is provided. Twenty-six examples of the input information for the AI/ML model for DC will be disclosed below.

(1) Information related location of UE.
(2) Information related radio measurement of UE.
(3) DC history information of UE.
(4) DC history information of UE from neighboring base station.
(5) Information related performance of UE on which DC is performed.
(6) Current resource status of base station.
(7) Predicted resource status of base station.
(8) Past DC failure information of UE.
(9) Past DC failure information of UE from neighboring base station.
(10) Past communication failure status of UE.
(11) Past communication failure status of UE from neighboring base station.
(12) Information related trajectory of UE.
(13) Information related current traffic of UE.
(14) Information related predicted traffic of UE.
(15) Information related layer 2 (L2) measurement of UE.
(16) Predicted value of information related L2 measurement of UE.
(17) Information related L2 measurement from neighboring base station.
(18) Predicted value of information related L2 measurement from neighboring base station.
(19) Connection base station history information of UE.
(20) Connection base station history information of UE from neighboring base station.
(21) Cell selection and cell re-selection history information of UE.
(22) Information related MDT of UE.
(23) Information related quality-of-experience (QoE) measurement of UE.
(24) Information related data amount of SN.
(25) Information related UL data split.
(26) Combination of (1) to (25).

For example, (1) may be information on coordinates, a serving cell identifier, information for identifying the DU to which the UE is connected, or information for identifying the TRP to which the UE is connected. In addition, a movement speed may be used. In addition, Time related information may be included. The location of the UE and the time thereof may be associated with each other. The location or the state of the UE can be used as the input information for training or inference.

For example, (2) may be a radio measurement result by the UE. For example, the RSRP, the RSRQ, or a signal-to-interference-noise ratio (SINR) may be used. The information related the location of the UE may be included. Time related information may be included. The radio measurement result and the information related the location or the time may be associated with each other. The reception quality depending on the location or the state of the UE can be used as the input information for training or inference.

For example, (3) may be information on the base station on which the UE has performed the DC in the past. For example, information for identifying the MN or information for identifying the SN may be used. Configuration information of the DC may be used. Configuration information of the MCG and the SCG may be used. Information for identifying the PCell, the PSCell, and the SPCell may be used. Configuration information of the PCell, the PSCell, and the SPCell may be used. Information related activation and deactivation of the SN may be used. Information related the termination of the DC may be used. Information on whether it is MN termination or SN termination may be used. Information related a bearer of the DC may be used. Configuration information of the bearer may be used. Information on whether it is an MCG bearer, an SCG bearer, or a split bearer may be used. Information related an RLC bearer may be used. Information related a path may be used. For example, information related a primary path or a secondary path may be used. A list of information on the base station on which the UE has performed the DC in the past may be used. In addition, the information related the location of the UE may be included. Time related information may be included. The information on the base station on which the DC has been performed in the past and the information related the location or the time may be associated with each other. Information related the DC can be used as the input information for training or inference.

(4) is the DC history information of the UE in the neighboring base station. The DC history information of the UE may be the information disclosed in (3).

For example, (5) may be a QoS of the UE on which the DC is performed. A packet loss rate or a delay time may be used. Information before the DC is performed may be used. Information after the DC is performed may be used. Information related the performance of the UE for each MN or each SN may be used. In addition, the information related the location of the UE may be included. Time related information may be included. The information related the performance of the UE on which the DC is performed and the information related the location or the time may be associated with each other. In addition, the association with the DC history information of the UE of (3) or (4) may be performed. The communication performance by the DC can be used as the input information for training or inference.

For example, (6) may be a current resource usage amount of the base station used in the DC. For example, a resource usage amount of the MN or the SN may be used. A resource usage amount per cell or a resource usage amount per TRP may be used. A usage amount of a frequency resource may be used. A usage amount of a time resource may be used. The usage amount of the frequency resource includes the number of carriers, the number of RBs, the number of subcarriers, and the like. The usage amount of the frequency resource may be in units of carriers, in units of physical resource blocks (PRBs), or in units of subcarriers. The usage amount of the time resource includes the number of subframes, the number of slots, the number of symbols, and the like. The usage amount of the time resource may be in units of subframes, in units of slots, or in units of symbols. Information related the load of the base station can be used as the input information for training or inference.

For example, (7) is information related a predicted resource of the base station used in the DC. The information related the resource of the base station may be the information disclosed in (6).

(8) is information related a past DC procedure failure of the UE. The DC procedure is, for example, the DC procedure described in Non Patent Document 22. For example, the DC procedure may be an SN addition procedure, an SN change procedure, an SN modification procedure, an SN release procedure, or the like. The information related the DC procedure failure may be, for example, past DC failure history information of the UE. For example, information on the base station with which the UE has failed the DC procedure in the past may be used. Information for identifying the MN or the SN with which the UE has failed in the DC procedure in the past may be used. Information for identifying the PCell, the PSCell, and the SPCell with which the UE has failed in the DC procedure in the past may be used. Information related the termination of the DC in which the UE has failed in the DC procedure in the past may be used. Information on whether it is MN termination or SN termination may be used. Information related the bearer of the DC in which the UE has failed in the DC procedure in the past may be used. Information on whether it is an MCG bearer, an SCG bearer, or a split bearer may be used. Information related an RLC bearer may be used. Information related a path may be used. For example, information related a primary path or a secondary path may be used. A list of information on the base station with which the UE has failed in the DC procedure in the past may be used. In addition, the information related the location of the UE may be included. Time related information may be included. The information related the DC failure in the past and the information related the location or the time may be associated with each other. Information related the DC procedure failure can be used as the input information for training or inference.

(9) is information related a past DC procedure failure of the UE in the neighboring base station. The information related the past DC failure of the UE may be the information disclosed in (8).

(10) is information related a past communication failure of the UE in the DC. For example, history information of the past communication failure of the UE may be used. The communication failure may be, for example, a radio link failure (RLF). For example, information related a communication failure in the MN or the SN may be used. For example, information for identifying the MN or the SN in which the communication failure has occurred may be used. For example, information for identifying the PCell, the PSCell, and the SPCell in which the communication failure has occurred may be used. Information related the termination of the DC in which the UE has caused the communication failure in the past may be used. Information on whether it is MN termination or SN termination may be used. Information related the bearer of the DC in which the UE has caused the communication failure in the past may be used. Information on whether it is an MCG bearer, an SCG bearer, or a split bearer may be used. Information related an RLC bearer may be used. Information related a path may be used. For example, information related a primary path or a secondary path may be used. A list of information on the MN, the SN, the PCell, the PSCell, the SPCell, and the like in which the UE has caused the communication failure in the past may be used. In addition, the information related the location of the UE may be included. Time related information may be included. The information related the past communication failure and the information related the location or the time may be associated with each other. Information related the communication failure can be used as the input information for training or inference.

(11) is information related a past communication failure of the UE in the DC in the neighboring base station. The information related the past communication failure of the UE may be the information disclosed in (10).

In (12), for example, the information related the location of the UE, which is disclosed in (1), may be applied as appropriate as the information related the trajectory of the UE. For example, the information on the base station that has performed the DC, which is disclosed in (3), may be used. For example, the information on the connection base station, which is disclosed in (19), may be used. For example, the information on the base station in which the cell selection or cell re-selection is performed, which is disclosed in (21), may be used. Information related the past and current trajectories of the UE may be used. The information related the past and current trajectories of the UE may be history information. The information related the trajectory may be information related a future trajectory of the UE. The information related the future trajectory may be predicted information. These pieces of information may be provided as a list. In addition, Time related information may be included. The information related the trajectory of the UE and the information related the time may be associated with each other. Information related the trajectory of the UE can be used as the input information for training or inference.

In (13), the traffic of the UE may be, for example, the number of pieces of UE to be connected. For example, a current traffic of the UE in the MN or the SN may be used. For example, a current traffic of the UE in the PCell, the PSCell, or the SPCell may be used. Information related the load of the base station can be used as the input information for training or inference.

For example, (14) is the information related the predicted traffic of the UE. The information related the traffic of the UE may be the information disclosed in (13).

For example, (15) may be a measurement result by the UE in L2 measurement information. The L2 measurement information may be, for example, information measured by the UE described in Non Patent Document 33. For example, a packet delay amount may be used. The L2 measurement result by the UE may be an L2 measurement result by the UE in the DC. For example, a L2 measurement result by the UE for the MN or the SN may be used. For example, a L2 measurement result by the UE for the PCell, the PSCell, or the SPCell may be used. In addition, the information related the location of the UE may be included. Time related information may be included. The information related the L2 measurement by the UE and the information related the location or the time may be associated with each other. Information related the communication performance with the base station can be used as the input information for training or inference.

(16) is a predicted value of the L2 measurement information. The predicted value is a predicted value of the L2 measurement information measured by the UE. A predicted value of the L2 measurement information measured by the UE in the DC may be used.

For example, (17) may be an L2 measurement result by the base station. An L2 measurement result in the neighboring base station may be used. The L2 measurement information by the base station may be, for example, information measured by the base station described in Non Patent Document 33. Examples thereof include the received number of RA preambles, the packet delay amount, the number of pieces of UE in the connected state, the number of contexts of the UE in the inactive state stored, a packet loss rate, PRB information used for multiple input multiple output (MIMO), the number of PDCP packets in a split data radio bearer (DRB), a total radio access network (RAN) delay amount in the split DRB, and the like. The L2 measurement result by the base station may be an L2 measurement result by the base station in the DC. For example, an L2 measurement result in the MN or the SN may be used. For example, an L2 measurement result in the PCell, the PSCell, or the SPCell may be used. An L2 measurement result by a base station in the neighboring base station may be used. In addition, the L2 measurement result related to the UE may include information related the location of the UE. Time related information may be included. The information related the L2 measurement by the UE and the information related the location or the time may be associated with each other. Information related the communication performance with the UE can be used as the input information for training or inference.

(18) is a predicted value of the L2 measurement information. The predicted value is a predicted value of the L2 measurement information measured by the base station. A predicted value of the L2 measurement information measured by the base station in the DC may be used. A predicted value of the L2 measurement information by the base station in the neighboring base station may be used.

For example, (19) may be information on a base station to which the UE has been connected in the past. For example, information for identifying the base station may be used. Information for identifying the cell may be used. Configuration information of the cell or the cell group may be used. A list of information on the base station to which the UE has been connected in the past may be used. In addition, the information related the location of the UE may be included. Time related information may be included. The information on the base station that has been connected in the past and the information related the location or the time may be associated with each other. The base station to which the UE has been connected in the past is not limited to the base station on which the DC has been performed. It is possible to perform the DC in which a more suitable base station is selected from among a larger number of base stations.

(20) is the history information of the base station to which the UE is connected, in the neighboring base station.

The connection base station history information of the UE may be the information disclosed in (3).

For example, (21) may be information on the base station in which the UE has performed the cell selection and/or the cell re-selection in the past. For example, information for identifying the base station may be used. Information for identifying the cell may be used. Configuration information of the cell or the cell group may be used. A list of the information on the base station in which the UE has performed the cell selection and/or the cell re-selection in the past may be used. In addition, the information related the location of the UE may be included. Time related information may be included. The information on the base station in which the cell selection and/or the cell re-selection has been performed in the past and the information related the location or the time may be associated with each other. Information in the RRC_Idle or RRC_Inactive state of the UE can be used as the input information. It is possible to perform more suitable DC from a larger number of base stations.

For example, (22) may be a measurement result by minimization of drive tests (MDT). For example, a measurement result by an immediate MDT may be used, or a logged measurement result by a Logged MDT may be used. A measurement result by a management-based MDT may be used. A measurement result by a signalling-based MDT may be used. A measurement result by a tracing function may be used. The measurement result by the MDT and the information related the location or the time of the UE may be associated with each other. Information measured by the MDT may be used as the information related the location or the time of the UE. By configuring the MDT for the UE, the measurement result by the MDT can be obtained as the input information for the AI/ML model for DC. More states or more information of the UE can be used as the input information.

For example, (23) may be a QoE measurement result (may be referred to as an application layer measurement result). The QoE measurement result and the information related the location or the time of the UE may be associated with each other. By configuring the QoE measurement for the UE, the measurement result by the QoE can be obtained as the input information for the AI/ML model for DC. The measurement information in the application layer of the UE can be used as the input information.

For example, (24) may be a data amount for which the SN has succeeded in transmission and/or succeeded in reception with the UE. The data amount may be, for example, the number of packets. For example, in the DL, the number of bytes of an SDAP service data unit (SDU) or a PDCP SDU that has succeeded in transmission to the UE may be used. In the UL, for example, the number of bytes of the SDAP SDU or the PDCP SDU that has succeeded in reception from the UE may be used. The information related the data amount of the SN and the information related the location or the time of the UE may be associated with each other. The information may be provided for each PDU session or may be provided for a plurality of PDU sessions in total. Alternatively, the information may be provided for the total number of PDU sessions. The information may be provided for each QoS flow. The information may include a radio access technology (RAT) type of the SN. By configuring the QoE measurement for the UE, the measurement result by the QoE can be obtained as the input information for the AI/ML model for DC. The measurement information in the application layer of the UE can be used as the input information.

For example, (25) may be configuration information of the UL data split. For example, a UL data split threshold information may be used. For example, information related the number of times the UL data split exceeds the threshold or a time thereof may be used. For example, information on which RAN node the UL data is transmitted to may be used. For example, information on the data amount to be transmitted to each RAN node of the UL data may be used. The information related the UL data split and the information related the location or the time of the UE may be associated with each other. For example, when the split bearer is configured for the UL, the threshold or the transmitted UL data amount can be used as the input information.

The base station including the AI/ML model for DC inputs, for training or inference, the input information for the AI/ML model for DC disclosed above to the AI/ML model for DC. In this way, more effective DC can be executed by using the AI/ML model for DC.

The base station transmits the input information for the AI/ML model for DC to the neighboring base station. The base station may transmit the input information for the AI/ML model for DC to the base station including the AI/ML model for DC. The base station including the AI/ML model for DC may transmit a request for the input information for the AI/ML model for DC to the neighboring base station. The request may include information related the UE to be subjected to the DC. The information related the UE may be an identifier of the UE. The base station that has received the request transmits the input information for the AI/ML model for DC to the base station that is the request source. The signalling between the base stations may be used for the transmission of the input information for the AI/ML model for DC or the request for the information, between the base stations. For example, Xn signalling may be used. For example, an Xn message may be provided for the predicted value. The MN and/or the SN used in the DC may perform these types of transmission. The signalling between the base stations may be used for the transmission. For example, Xn signalling may be used. For example, an Xn message may be provided for the predicted value. The transmission may be performed in the DC procedure.

The DU transmits the input information for the AI/ML model for DC to the CU. The DU may transmit the input information for the AI/ML model for DC to the CU including the AI/ML model for DC. The CU including the AI/ML model for DC may transmit the request for the input information for the AI/ML model for DC to the DU. The request may include information related the UE to be subjected to the DC. The information related the UE may be an identifier of the UE. The DU that has received the request transmits the input information for the AI/ML model for DC to the CU that is the request source. The CU-DU signalling may be used for the transmission of the input information for the AI/ML model for DC or the request for the information between the CU and the DU. For example, F1 signalling may be used. For example, an F1 message may be provided for the predicted value. These types of transmission may be performed between the CU and DU configured by the MN and/or the SN used in the DC. The CU-DU signalling may be used for the transmission. For example, F1 signalling may be used. For example, an F1 message may be provided for the predicted value. The transmission may be performed in the DC procedure.

The UE transmits the input information for the AI/ML model for DC to the base station. The UE may transmit the input information for the AI/ML model for DC to the base station including the AI/ML model for DC. The base station including the AI/ML model for DC may transmit the request for the input information for the AI/ML model for DC to the UE. The request may include information related the UE to be subjected to the DC. The information related the UE may be an identifier of the UE. The UE that has received the request transmits the input information for the AI/ML model for DC to the base station that is the request source. The signalling between the UE and the base station may be used for the transmission of the input information for the AI/ML model for DC or the request for the information, between the UE and the base station. For example, RRC signalling may be used. As another method, MAC signalling or L1/L2 signalling may be used. The information or the request for the information can be transmitted at an early stage. These types of transmission may be performed between the UE and the MN and/or the SN used in the DC. The UE may transmit the input information for the AI/ML model for DC for each MN or SN to the corresponding MN or SN. The MN or the SN can acquire the information on its own node from the UE. As another method, the UE may transmit the input information for the AI/ML model for DC for each MN or SN to any one node. The node can acquire the information from the UE. The node that has received the input information for the AI/ML model for DC from the UE may transmit the information to the node including the AI/ML model for DC. The node including the AI/ML model for DC can acquire the information from the UE. The signalling between the UE and the base station may be used for the transmission of the input information for the AI/ML model for DC or the request for the information between the UE and the MN and/or SN used in the DC. For example, RRC signalling may be used. For example, a signaling radio bearer (SRB) 3 may be used as UE-SN signalling. As another method, MAC signalling or L1/L2 signalling may be used. The signalling between the base stations may be used for the transmission of the input information for the AI/ML model for DC from the UE or for the request for the information to the UE between the MN and the SN. For example, Xn signalling may be used. For example, an Xn message may be provided for the predicted value. The transmission may be performed in the DC procedure.

The output information of the AI/ML model for DC will be disclosed. Ten examples of the output information of the AI/ML model for DC will be disclosed below.

     (1) Information related predicted trajectory of UE.
     (2) Predicted DC target information.
     (3) Priority of predicted DC target.
     (4) Predicted candidate PSCell information.
     (5) Probability of reaching predicted candidate PSCell.
     (6) Predicted DC procedure time.
     (7) Predicted resource status of base station.
     (8) Information related predicted traffic of UE.

(9) Information related predicted UL data split.

(10) Combination of (1) to (9).

For example, (1) may be predicted future trajectory information of the UE. The information related the trajectory of the UE may be the information disclosed in (12) of the example of the input information for the AI/ML model for DC. Information on the past and current trajectories may be included. History information of the past and current trajectories of the UE may be included together with the predicted future trajectory information of the UE. These pieces of information may be provided as a list. In addition, Time related information may be included. The information related the trajectory of the UE and the information related the time may be associated with each other.

(2) is the DC target information predicted by the AI/ML model. The DC target information may be, for example, information related a base station for DC in the DC procedure described in Non Patent Document 22. For example, information for identifying the SN selected for the DC may be used. Information for identifying the PCell, the PSCell, and the SPCell selected for the DC may be used. The DC target information may be, for example, configuration information of the DC. MCG configuration information may be used. SCG configuration information may be used. The DC target information may be, for example, information related the termination of the DC. Information on whether it is MN termination or SN termination may be used. The DC target information may be, for example, information related the bearer of the DC. Information on whether it is an MCG bearer, an SCG bearer, or a split bearer may be used. Information related an RLC bearer may be used. In addition, information related a predicted location of the UE may be included. Information related the predicted time may be included. The predicted DC target information and the information related the location or the time may be associated with each other. The predicted DC target information is not limited to one piece of information, but may be a plurality of pieces of information. Information on the prediction accuracy of the DC target information predicted by the AI/ML model may be included.

(3) is information on the priority of the predicted DC target indicated by the information disclosed in (2). The predicted DC target and the priority thereof may be associated with each other. For example, in the SN addition procedure, a plurality of predicted SNs may be output. The priority is given to each of the plurality of output predicted SNs.

(4) is prediction information of candidates for the PSCell in a conditional PSCell change (CPC) procedure. The number of candidates the PSCell is not limited to one, but may more than one. Information on the prediction accuracy of the predicted PSCell candidates may be included.

(5) is prediction information on a probability of the UE reaching the candidates the PSCell in the conditional PSCell change (CPC) procedure. Information on a confidence interval of the probability of reaching the candidate PSCell predicted by the AI/ML model may be included.

(6) is information on the predicted DC procedure time. The predicted DC procedure time may be provided, for example, for each DC target information. For example, the predicted DC procedure time may be provided for each PSCell candidate. The predicted DC procedure time and the predicted DC target information or the predicted PSCell candidate information may be associated with each other.

(7) is information on the predicted resource status of the base station. The information on the resource status of the base station may be the information disclosed in (7) of the example of the input information for the AI/ML model for DC. The resource status of the base station may be the predicted DC target in (2) or the predicted resource status in the predicted PSCell candidate in (4).

(8) is the information related the predicted traffic of the UE. The information related the traffic of the UE may be the information disclosed in (13) of the example of the input information for the AI/ML model for DC. The information related the predicted traffic of the UE may be the predicted DC target in (2) or the predicted traffic status of the UE in the predicted PSCell candidate in (4).

For example, (9) may be predicted UL data split configuration information. For example, predicted UL data split threshold information may be used. The information disclosed in (25) of the example of the input information for the AI/ML model for DC.

The RAN node or the UE that performs the DC procedure is notified of the output information of the AI/ML model for DC disclosed above as appropriate. In this way, more effective DC can be executed by using the AI/ML model for DC.

The base station transmits the output information of the AI/ML model for DC to the neighboring base station. The base station including the AI/ML model for DC may transmit the output information of the AI/ML model for DC to the base station involved in the DC. The base station involved in the DC may transmit the request for the output information of the AI/ML model for DC to the base station including the AI/ML model for DC. The base station that has received the request transmits the output information of the AI/ML model for DC to the base station that is the request source. The signalling between the base stations may be used for the transmission of the output information of the AI/ML model for DC or the request for the information, between the base stations. For example, Xn signalling may be used. For example, an Xn message may be provided for the predicted value. The MN and/or the SN used in the DC may perform these types of transmission. The signalling between the base stations may be used for the transmission. For example, Xn signalling may be used. For example, an Xn message may be provided for the predicted value. The transmission may be performed in the DC procedure.

The CU transmits the output information of the AI/ML model for DC to the DU. The CU including the AI/ML model for DC may transmit the output information of the AI/ML model for DC to the DU. The DU may transmit the request for the output information of the AI/ML model for DC to the CU including the AI/ML model for DC. The CU that has received the request transmits the output information of the AI/ML model for DC to the DU that is the request source. The CU-DU signalling may be used for the transmission of the output information of the AI/ML model for DC or the request for the information between the CU and the DU. For example, F1 signalling may be used. For example, an F1 message may be provided for the predicted value. These types of transmission may be performed between the CU and DU configured by the MN and/or the SN used in the DC. The CU-DU signalling may be used for the transmission. For example, F1 signalling may be used. For example, an F1 message may be provided for the predicted value. The transmission may be performed in the DC procedure.

The base station transmits the output information of the AI/ML model for DC to the UE. The base station including the AI/ML model for DC may transmit the output information of the AI/ML model for DC to the UE. The UE may transmit the request for the output information of the AI/ML model for DC to the base station including the AI/ML model for DC. The base station that has received the request transmits the output information of the AI/ML model for DC to the UE that is the request source. The signalling between the UE and the base station may be used for the transmission of the output information of the AI/ML model for DC or the request for the information, between the UE and the base station. For example, RRC signalling may be used. As another method, MAC signalling or L1/L2 signalling may be used. The information or the request for the information can be transmitted at an early stage. These types of transmission may be performed between the UE and the MN and/or the SN used in the DC. The output information of the AI/ML model for DC for each MN or SN may be transmitted from the corresponding MN or SN to the UE. The UE can acquire the information from the MN or the SN. As another method, the output information of the AI/ML model for DC for each MN or SN may be transmitted from any one node to the UE. The UE can acquire the information from the node. The signalling between the UE and the base station may be used for the transmission of the output information of the AI/ML model for DC or the request for the information between the UE and the MN and/or SN used in the DC. For example, RRC signalling may be used. For example, the SRB3 may be used as UE-SN signalling. As another method, MAC signalling or L1/L2 signalling may be used. The signalling between the base stations may be used for the transmission of the output information of the AI/ML model for DC from the UE or for the request for the information to the UE between the MN and the SN. For example, Xn signalling may be used. For example, an Xn message may be provided for the predicted value. The transmission may be performed in the DC procedure.

Feedback information by the DC procedure using the AI/ML model for DC will be disclosed. Five examples of the feedback information of the DC procedure using the AI/ML model for DC will be disclosed below.

(1) Information related performance of UE.
(2) Information related L2 measurement of UE.
(3) Information related L2 measurement of base station.
(4) Resource status of base station.
(5) Combination of (1) to (4).

For example, (1) may be (5) of the example of the input information for the AI/ML model for DC.

For example, (2) may be (15) of the example of the input information for the AI/ML model for DC.

For example, (3) may be (17) of the example of the input information for the AI/ML model for DC.

For example, (4) may be (6) of the example of the input information for the AI/ML model for DC.

The node involved in the DC notifies the node including the AI/ML model for DC, as appropriate, of the feedback information of the DC procedure using the AI/ML model for DC disclosed above. In this way, it is possible to evaluate the reward calculation and the like of the AI/ML model for DC, and to update the model. As a result, it is possible to execute more effective DC.

The base station transmits the feedback information of the DC procedure using the AI/ML model for DC to the neighboring base station. The base station involved in the DC may transmit the feedback information of the DC procedure using the AI/ML model for DC to the base station including the AI/ML model for DC. The base station including the AI/ML model for DC may transmit a request for the feedback information of the DC procedure using the AI/ML model for DC to the base station involved in the DC. The base station that has received the request transmits the feedback information of the DC procedure using the AI/ML model for DC to the base station that is the request source. The signalling between the base stations may be used for the transmission of the feedback information of the DC procedure using the AI/ML model for DC or the request for the information between the base stations. For example, Xn signalling may be used. The MN and/or the SN used in DC may perform these types of transmission. The signalling between the base stations may be used for the transmission. For example, Xn signalling may be used. The transmission may be performed in the DC procedure.

The DU transmits the feedback information of the DC procedure using the AI/ML model for DC to the CU. The DU involved in the DC may transmit the feedback information of the DC procedure using the AI/ML model for DC to the CU. The DU involved in the DC may transmit the feedback information of the DC procedure using the AI/ML model for DC to the CU including the AI/ML model for DC. The CU including the AI/ML model for DC may transmit the request for the feedback information of the DC procedure using the AI/ML model for DC to the DU. The DU that has received the request transmits the feedback information of the DC procedure using the AI/ML model for DC to the CU that is the request source. The CU-DU signalling may be used for the transmission of the feedback information of the DC procedure using the AI/ML model for DC or the request for the information between the CU and the DU. For example, F1 signalling may be used. These types of transmission may be performed between the CU and DU configured by the MN and/or the SN used in the DC. The CU-DU signalling may be used for the transmission. For example, F1 signalling may be used. The transmission may be performed in the DC procedure.

The UE transmits the feedback information of the DC procedure using the AI/ML model for DC to the base station. The UE may transmit the feedback information of the DC procedure using the AI/ML model for DC to the base station including the AI/ML model for DC. The base station including the AI/ML model for DC may transmit the request for the feedback information of the DC procedure using the AI/ML model for DC to the UE. The UE that has received the request transmits the feedback information of the DC procedure using the AI/ML model for DC to the base station that is the request source. The signalling between the UE and the base station may be used for the transmission of the feedback information of the DC procedure using the AI/ML model for DC or the request for the information between the UE and the base station. For example, RRC signalling may be used. As another method, MAC signalling or L1/L2 signalling may be used. The information or the request for the information can be transmitted at an early stage. These types of transmission may be performed between the UE and the MN and/or the SN used in the DC. The feedback information of the DC procedure using the AI/ML model for DC for each MN or SN may be transmitted from the UE to the corresponding MN or SN. The MN or the SN can acquire the information on its own node from the UE. As another method, the UE may transmit the feedback information of the DC procedure using the AI/ML model for DC for each MN or SN to any one node. The node can acquire the information from the UE. The node that has received the feedback information of the DC procedure using the AI/ML model for DC from the UE may transmit the information to the node including the AI/ML model for DC. The node including the AI/ML model for DC can acquire the information from the UE. The signalling between the UE and the base station may be used for the transmission of the feedback information of the DC procedure using the AI/ML model for DC or the request for the information between the UE and the MN and/or SN used in the DC. For example, RRC signalling may be used. For example, the SRB3 may be used as UE-SN signalling. As another method, MAC signalling or L1/L2 signalling may be used. The signalling between the base stations may be used for the transmission of the input information for the AI/ML model for DC from the UE or for the request for the information to the UE between the MN and the SN. For example, Xn signalling may be used. The transmission may be performed in the DC procedure.

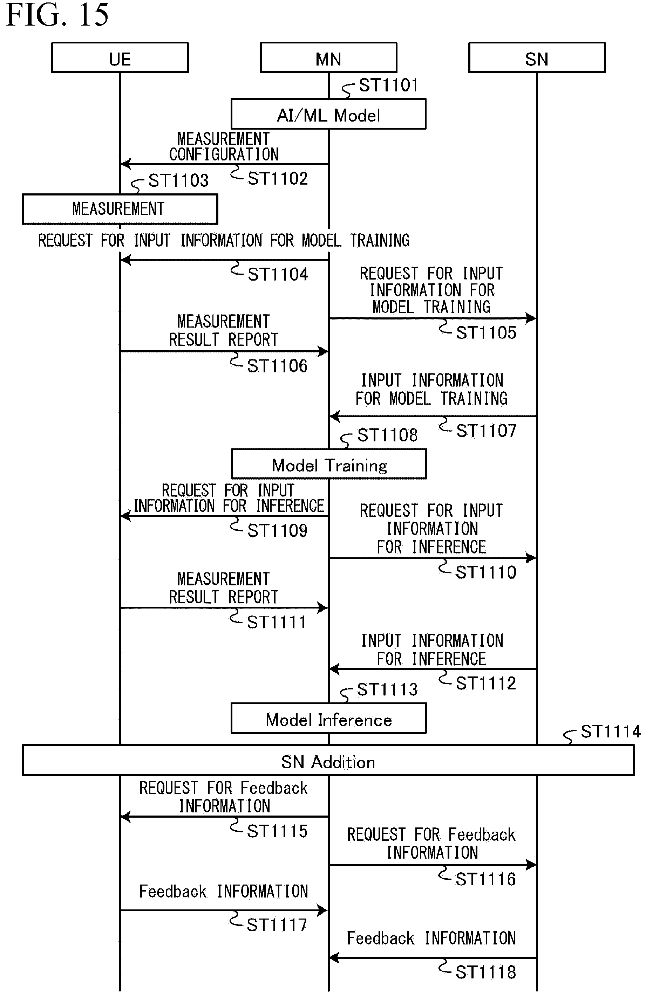

FIG. 15 is a diagram showing a sequence example of the SN addition procedure using the AI/ML for DC. An example is disclosed in which the base station that is the MN in the DC includes the AI/ML model for DC and performs training and inference. In step ST1101, the AI/ML model for DC is provided in the MN. In step ST1102, the MN performs a measurement configuration for the UE. For example, a radio measurement configuration is performed. RRC signalling may be used for the configuration. An RRCReconfiguration message may be used.

In step ST1103, the UE performs the measurement. The measurement by the UE may be, for example, the radio measurement or the L2 measurement. The measurement by the minimization drive test (MDT) may be used. For example, the measurement by the immediate MDT may be used, or the logged measurement by the Logged MDT may be used. The UE may perform the measurement using the measurement configuration received in step ST1102. Each measurement may be performed at the same timing or may be performed at different timings.

In step ST1104, the MN transmits the request for the input information for the AI/ML model for DC to the UE. Information indicating necessary information may be included in the request. The request may include information indicating a purpose of the input information for the AI/ML model for DC. For example, the request may include information indicating that the purpose is for model training. For example, this configuration is effective in a case where information for model training is provided in the input information for the AI/ML model for DC. For example, in a case where information for model training, information for inference, and information for feedback are present in the information stored in the UE, the UE can promptly detect the information of which the notification is to be given to the MN, and as a result, it is possible to promptly notify the MN from the UE of the information. For example, RRC signalling may be used for the transmission of the request. The request for the input information for the AI/ML model for DC may be included in the measurement configuration described above. The MN may transmit the request for the input information for the AI/ML model for DC to the UE by including the request in the measurement configuration in step ST1102. An amount of signalling can be reduced. In step ST1106, the UE transmits the input information for the AI/ML model for DC to the MN. As the information, the measurement result by the UE may be transmitted as a measurement result report. The measurement result may be the radio measurement result, the L2 measurement result, or the measurement result by the MDT. The logged measurement result by the Logged MDT may be a result measured when the UE is in the RRC_Inactive or RRC_Idle state. These measurement results may be transmitted by the same signalling or may be transmitted by different signalling.

The RRC signalling may be used for the transmission. For example, a Measurement Report message may be used for the transmission of the radio measurement result or the L2 measurement result. For example, a UE Information Response message may be used for the transmission of the measurement result by the MDT.

In step ST1105, the MN transmits the request for the input information for the AI/ML model for DC to the neighboring base station. The number of neighboring base stations is not limited to one, but may more than one. The neighboring base station may include the SN that is the DC target. In other words, the DC target SN may be selected within the neighboring base station. Information indicating necessary information may be included in the request. The request may include information indicating a purpose of the input information for the AI/ML model for DC. For example, the request may include information indicating that the purpose is for model training. For example, this configuration is effective in a case where information for model training is provided in the input information for the AI/ML model for DC. For example, in a case where information for model training, information for inference, and information for feedback are present in the information stored in the neighboring base station, the neighboring base station can promptly detect the information of which the notification is to be given to the MN, and as a result, it is possible to promptly notify the MN from the neighboring base station of the information. For example, the Xn signalling may be used for the transmission of the request. In step ST1107, the neighboring base station transmits the input information for the AI/ML model for DC (input information for model training) to the MN. For example, the Xn signalling may be used for the transmission of the information.

In step ST1108, the MN trains the AI/ML model for DC using the input information for the AI/ML model for DC stored in its own node and the input information for the AI/ML model for DC acquired from the UE and the neighboring base station. The AI/ML model for DC is updated by training. These procedures may be performed as appropriate. These procedures may be performed periodically or may be performed each time the DC is performed at the MN or at the neighboring base station.

The MN determines to configure the DC for the UE. In step ST1109, the MN transmits the request for the input information for the AI/ML model for DC to the UE. Information indicating necessary information may be included in the request. The request may include information indicating a purpose of the input information for the AI/ML model for DC. For example, the request may include information indicating that the purpose is for inference. For example, this configuration is effective in a case where information for inference is provided in the input information for the AI/ML model for DC. In step ST1111, the UE transmits the input information for the AI/ML model for DC to the MN. As the information, the measurement result by the UE may be transmitted as a measurement result report. The measurement result may be the radio measurement result, the L2 measurement result, or the measurement result by the MDT. The logged measurement result by the Logged MDT may be a result measured when the UE is in the RRC_Inactive or RRC_Idle state. For the signalling used for the transmission in step ST1109 and step ST1111, the method disclosed in step ST1104 and step ST1106 may be applied as appropriate.

In step ST1110, the MN transmits the request for the input information for the AI/ML model for DC to the neighboring base station. Information indicating necessary information may be included in the request. The request may include information indicating a purpose of the input information for the AI/ML model for DC. For example, the request may include information indicating that the purpose is for inference. For example, this configuration is effective in a case where information for inference is provided in the input information for the AI/ML model for DC. For example, the Xn signalling may be used for the transmission of the request. In step ST1112, the neighboring base station transmits the input information for the AI/ML model for DC (input information for inference) to the MN. For example, the Xn signalling may be used for the transmission of the information.

In step ST1113, the MN performs the inference using the AI/ML model for DC, by using the input information for the AI/ML model for DC stored in its own node and the input information for the AI/ML model for DC acquired from the UE and the neighboring base station. The MN derives the output information of the AI/ML model for DC by the inference.

In step ST1114, the MN performs the DC on the UE using the output information of the AI/ML model for DC. In the example of this drawing, the SN addition procedure is performed. The MN selects a DC target SN of the UE using the output information of the AI/ML model for DC. Further, the MN performs the configuration for the DC using the selected SN. The MN may transmit an SN addition request to the selected SN. The SN addition procedure is performed among the MN, the UE, and the SN. In this way, the DC procedure can be performed among the UE, the MN, and the SN by using the output information derived by the AI/ML model for DC.

In step ST1115, the MN transmits the request for the feedback information of the DC procedure using the AI/ML model for DC to the UE. Information indicating necessary information may be included in the request. For example, RRC signalling may be used for the transmission of the request. In step ST1117, the UE transmits the feedback information of the DC procedure using the AI/ML model for DC to the MN. The RRC signalling may be used for the transmission.

In step ST1116, the MN transmits the request for the feedback information of the DC procedure using the AI/ML model for DC to the SN. Information indicating necessary information may be included in the request. For example, the Xn signalling may be used for the transmission of the request. In step ST1118, the SN transmits the feedback information of the DC procedure using the AI/ML model for DC to the MN. For example, the Xn signalling may be used for the transmission of the information.

In this way, the MN can acquire the performance of the DC procedure using the AI/ML model for DC. The MN may evaluate the effect of the DC procedure when the AI/ML model for DC is used, by using the feedback information of the DC procedure using the AI/ML model for DC stored in its own node and the feedback information of the DC procedure using the AI/ML model for DC acquired from the UE and the SN.

In this way, the AI/ML is introduced into the SN addition procedure to enable a more effective SN addition procedure.

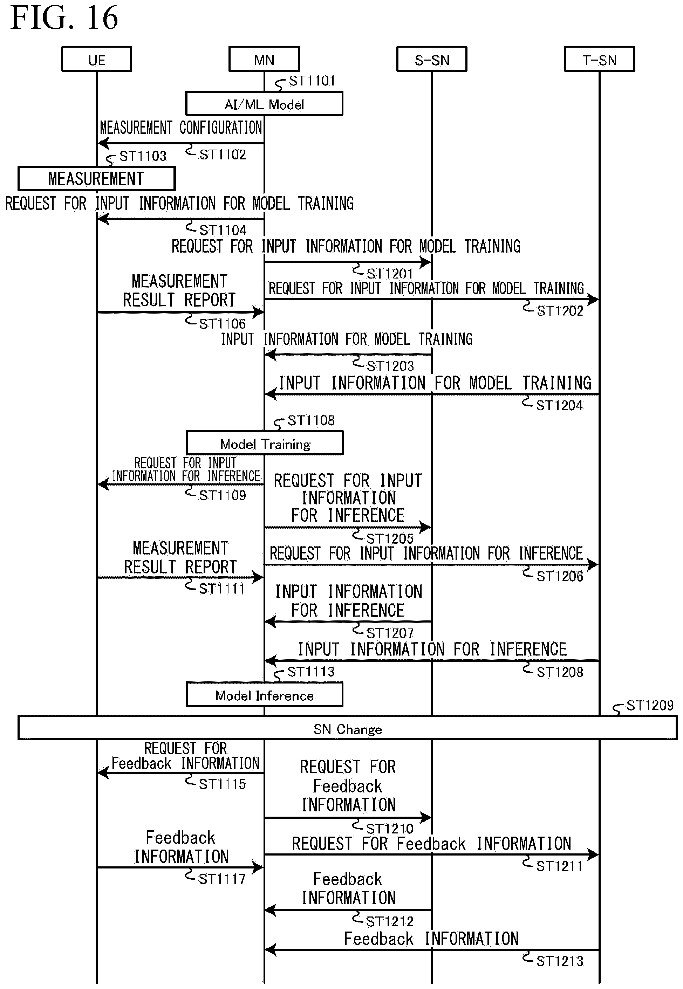

FIG. 16 is a diagram showing a sequence example of the SN change procedure using the AI/ML for DC. An example is disclosed in which the MN includes the AI/ML model for DC and performs training and inference. The steps common to those in FIG. 15 are denoted by the same step numbers, and the common description will be omitted.

In step ST1201 and step ST1202, the MN transmits the request for the input information for the AI/ML model for DC to the SN (change source SN (S-SN)) and the neighboring base station. The number of neighboring base stations is not limited to one, but may more than one. The neighboring base station may include a change target SN (T-SN). In other words, the change target SN may be selected within the neighboring base station. Information indicating necessary information may be included in the request. The request may include information indicating that the purpose is for model training. For example, this configuration is effective in a case where information for model training is provided in the input information for the AI/ML model for DC. For example, the Xn signalling may be used for the transmission of the request. In step ST1203 and step ST1204, the S-SN and the neighboring base station transmit the input information for the AI/ML model for DC (input information for model training) to the MN. For example, the Xn signalling may be used for the transmission of the information.

In step ST1205 and step ST1206, the MN transmits the request for the input information for the AI/ML model for DC to the S-SN and the neighboring base station. Information indicating necessary information may be included in the request. The request may include information indicating that the purpose is for inference. For example, this configuration is effective in a case where information for inference is provided in the input information for the AI/ML model for DC. For example, the Xn signalling may be used for the transmission of the request. In step ST1207 and step ST1208, the SN and the neighboring base station transmit the input information for the AI/ML model for DC (input information for inference) to the MN. For example, the Xn signalling may be used for the transmission of the information.

In step ST1209, the MN performs the DC on the UE using the output information of the AI/ML model for DC derived in step ST1113. In the example of this drawing, the SN change procedure is performed. For example, the SN change procedure initiated by the MN may be performed. The MN selects the T-SN using the output information of the AI/ML model for DC. In addition, the MN performs the configuration for the DC using the selected T-SN. The MN may transmit an SN change request to the T-SN. The SN addition procedure is performed among the MN, the UE, the S-SN, and the T-SN. In this way, the DC procedure can be performed among the UE, the MN, the S-SN, and the T-SN by using the output information derived by the AI/ML model for DC.

In step ST1210 and step ST1211, the MN transmits the request for the feedback information of the DC procedure using the AI/ML model for DC to the S-SN and the T-SN. Information indicating necessary information may be included in the request. For example, the Xn signalling may be used for the transmission of the request. In step ST1212 and step ST1213, the S-SN and the T-SN transmit the feedback information of the DC procedure using the AI/ML model for DC to the MN. For example, the Xn signalling may be used for the transmission of the information.

In this way, the MN can acquire the performance of the DC procedure using the AI/ML model for DC. The MN may evaluate the effect of the DC procedure when the AI/ML model for DC is used, by using the feedback information of the DC procedure using the AI/ML model for DC stored in its own node and the feedback information of the DC procedure using the AI/ML model for DC acquired from the UE, the S-SN, and the T-SN.

In this way, the AI/ML is introduced into the SN change procedure to enable a more effective SN change procedure.

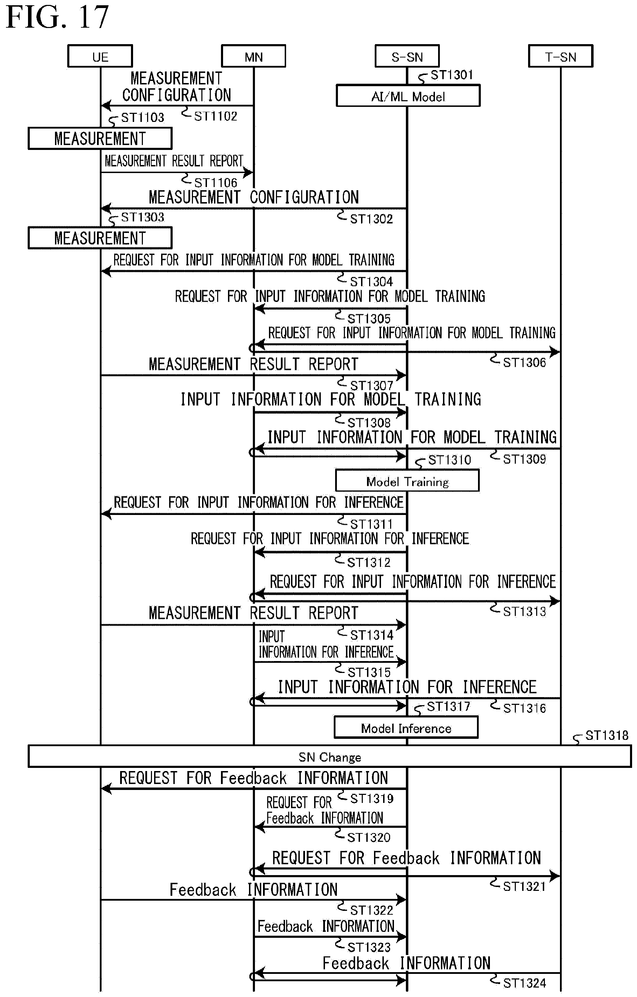

FIG. 17 is a diagram showing another sequence example of the SN change procedure using the AI/ML for DC. An example is disclosed in which the SN includes the AI/ML model for DC and performs training and inference. The steps common to those in FIGS. 15 and 16 are denoted by the same step numbers, and the common description will be omitted. In step ST1301, the AI/ML model for DC is provided in the S-SN. In step ST1302, the S-SN performs a measurement configuration for the UE. For example, a radio measurement configuration is performed. RRC signalling may be used for the configuration. An RRCReconfiguration message may be used.

In step ST1303, the UE performs the measurement. The measurement by the UE may be, for example, the radio measurement or the L2 measurement. The measurement by the minimization drive test (MDT) may be used. For example, the measurement by the immediate MDT may be used, or the logged measurement by the Logged MDT may be used. The UE may perform the measurement using the measurement configuration received in step ST1302. Each measurement may be performed at the same timing or may be performed at different timings.

In step ST1304, the S-SN transmits the request for the input information for the AI/ML model for DC to the UE. Information indicating necessary information may be included in the request. The request may include information indicating that the purpose is for model training. For example, this configuration is effective in a case where information for model training is provided in the input information for the AI/ML model for DC. For example, RRC signalling may be used for the transmission of the request. In step ST1307, the UE transmits the input information for the AI/ML model for DC to the S-SN. As the information, the measurement result by the UE may be transmitted as a measurement result report. The measurement result may be the radio measurement result, the L2 measurement result, or the measurement result by the MDT. The logged measurement result by the Logged MDT may be a result measured when the UE is in the RRC_Inactive or RRC_Idle state. These measurement results may be transmitted by the same signalling or may be transmitted by different signalling. The RRC signalling may be used for the transmission. For example, a Measurement Report message may be used for the transmission of the radio measurement result or the L2 measurement result. For example, a UE Information Response message may be used for the transmission of the measurement result by the MDT.

In step ST1305 and step ST1306, the S-SN transmits the request for the input information for the AI/ML model for DC to the MN and the neighboring base station. The transmission from the S-SN to the neighboring base station may be performed directly from the S-SN or may be performed via the MN. In the example of FIG. 17, a method of performing the transmission via the MN will be disclosed.

The number of neighboring base stations is not limited to one, but may more than one. The T-SN may be included in the neighboring base station. In other words, the T-SN may be selected within the neighboring base station. Information indicating necessary information may be included in the request. The request may include information indicating that the purpose is for model training. For example, this configuration is effective in a case where information for model training is provided in the input information for the AI/ML model for DC. For example, the Xn signalling may be used for the transmission of the request. In step ST1308 and step ST1309, the MN and the neighboring base station transmit the input information for the AI/ML model for DC to the S-SN. The transmission from the neighboring base station to the S-SN may be performed directly to the S-SN or may be performed via the MN. In the example of FIG. 17, a method of performing the transmission via the MN will be disclosed. For example, the Xn signalling may be used for the transmission of the information.

In step ST1310, the S-SN trains the AI/ML model for DC using the input information for the AI/ML model for DC stored in its own node and the input information for the AI/ML model for DC acquired from the UE, the MN, and the neighboring base station. The AI/ML model for DC is updated by training. These procedures may be performed as appropriate. These procedures may be performed periodically or may be performed each time the DC is performed at the MN, at the S-SN, or at the neighboring base station.

The S-SN determines to initiate the SN change. In step ST1311, the S-SN transmits the request for the input information for the AI/ML model for DC to the UE. Information indicating necessary information may be included in the request. The request may include information indicating that the purpose is for inference. For example, this configuration is effective in a case where information for inference is provided in the input information for the AI/ML model for DC. In step ST1314, the UE transmits the input information for the AI/ML model for DC to the S-SN. As the information, the measurement result by the UE may be transmitted as a measurement result report. The measurement result may be the radio measurement result, the L2 measurement result, or the measurement result by the MDT. The logged measurement result by the Logged MDT may be a result measured when the UE is in the RRC_Inactive or RRC_Idle state. For the signalling used for the transmission in step ST1311 and step ST1314, the method disclosed in step ST1304 and step ST1307 may be applied as appropriate.

In step ST1312 and step ST1313, the S-SN transmits the request for the input information for the AI/ML model for DC to the MN and the neighboring base station. The transmission from the S-SN to the neighboring base station may be performed directly from the S-SN or may be performed via the MN. In the example of FIG. 17, a method of performing the transmission via the MN will be disclosed. The number of neighboring base stations is not limited to one, but may more than one. The T-SN may be included in the neighboring base station. In other words, the T-SN may be selected within the neighboring base station. Information indicating necessary information may be included in the request. The request may include information indicating that the purpose is for inference. For example, this configuration is effective in a case where information for inference is provided in the input information for the AI/ML model for DC. For example, the Xn signalling may be used for the transmission of the request. In step ST1315 and step ST1316, the MN and the neighboring base station transmit the input information for the AI/ML model for DC (input information for inference) to the S-SN. The transmission from the neighboring base station to the S-SN may be performed directly to the S-SN or may be performed via the MN. In the example of FIG. 17, a method of performing the transmission via the MN will be disclosed. For example, the Xn signalling may be used for the transmission of the information.

In step ST1317, the S-SN performs the inference using the AI/ML model for DC, by using the input information for the AI/ML model for DC stored in its own node and the input information for the AI/ML model for DC acquired from the UE, the MN, and the neighboring base station. The S-SN derives the output information of the AI/ML model for DC by the inference.

In step ST1318, the S-SN performs the DC procedure using the output information of the AI/ML model for DC. In the example of this drawing, the SN change procedure is performed. The S-SN may select the T-SN using the output information of the AI/ML model for DC. The S-SN may perform the DC configuration using the selected T-SN. The S-SN triggers the MN to initiate the SN change procedure. The S-SN transmits the SN change request to the MN. The request may include information related the selected T-SN. The request may include the DC configuration. The SN change procedure is performed among the MN, the UE, the S-SN, and the T-SN in response to the SN change request initiated from the S-SN. In this way, the DC procedure can be performed among the UE, the MN, the S-SN, and the T-SN by using the output information derived by the AI/ML model for DC.

In step ST1319, the S-SN transmits the request for the feedback information of the DC procedure using the AI/ML model for DC to the UE. Information indicating necessary information may be included in the request. For example, RRC signalling may be used for the transmission of the request. In step ST1322, the UE transmits the feedback information of the DC procedure using the AI/ML model for DC to the S-SN. The RRC signalling may be used for the transmission.

In step ST1320 and step ST1321, the S-SN transmits the request for the feedback information of the DC procedure using the AI/ML model for DC to the MN and the T-SN. The transmission from the S-SN to the neighboring base station may be performed directly from the S-SN or may be performed via the MN. In the example of FIG. 17, a method of performing the transmission via the MN will be disclosed. For example, the Xn signalling may be used for the transmission of the request. In step ST1323 and step ST1324, the MN and the T-SN transmit the feedback information of the DC procedure using the AI/ML model for DC to the S-SN. The transmission from the T-SN to the S-SN may be performed directly to the S-SN or may be performed via the MN. In the example of FIG. 17, a method of performing the transmission via the MN will be disclosed. For example, the Xn signalling may be used for the transmission of the information.

In this way, the S-SN can acquire the performance of the DC procedure using the AI/ML model for DC. The S-SN may evaluate the effect of the DC procedure when the AI/ML model for DC is used, by using the feedback information of the DC procedure using the AI/ML model for DC stored in its own node and the feedback information of the DC procedure using the AI/ML model for DC acquired from the UE, the MN, and the T-SN.

In this way, the AI/ML is introduced into the SN change procedure to enable a more effective SN change procedure.

The MN may include the AI/ML model for DC. The MN may perform training and inference. In such a case, the SN change procedure initiated by the S-SN may be performed. For training the AI/ML model for DC, for example, steps ST1101 to ST1104, ST1106, ST1201 to ST1204, and ST1108 disclosed in FIG. 16 may be applied as appropriate. The inference may be performed by, for example, the MN that has received the SN change request from the S-SN. For the inference in the MN, step ST1109, step ST1111, step ST1205 to step ST1208, and step ST1113 disclosed in FIG. 16 may be applied as appropriate. The MN may perform the SN change procedure after the transmission and reception of the SN change request from the S-SN to the MN, by using the derived output information of the AI/ML model for DC. For example, step ST1209 disclosed in FIG. 16 may be applied as appropriate. The SN change target (T-SN) may be decided by the MN using, for example, the output information of the AI/ML model for DC derived by the MN. The SN change procedure may be performed using information related the T-SN decided by the MN. The request for the feedback information of the DC procedure using the AI/ML model for DC may be transmitted from the MN to the UE, the S-SN, and the T-SN, and the feedback information of the DC procedure using the AI/ML model for DC may be transmitted from the UE, the S-SN, and the T-SN to the MN. The MN can evaluate and update the model using the feedback information.

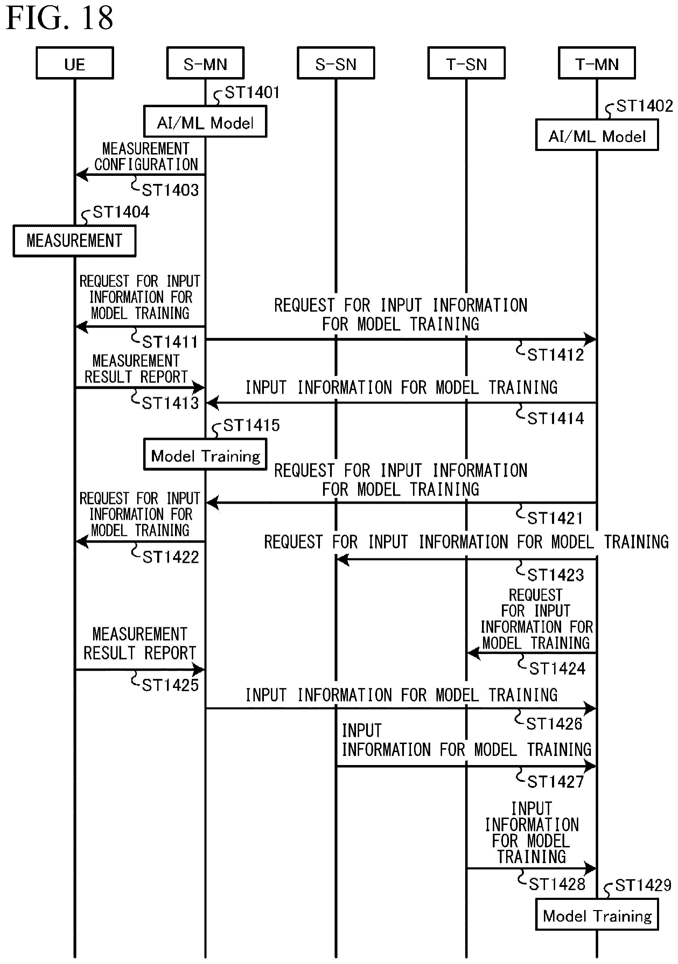

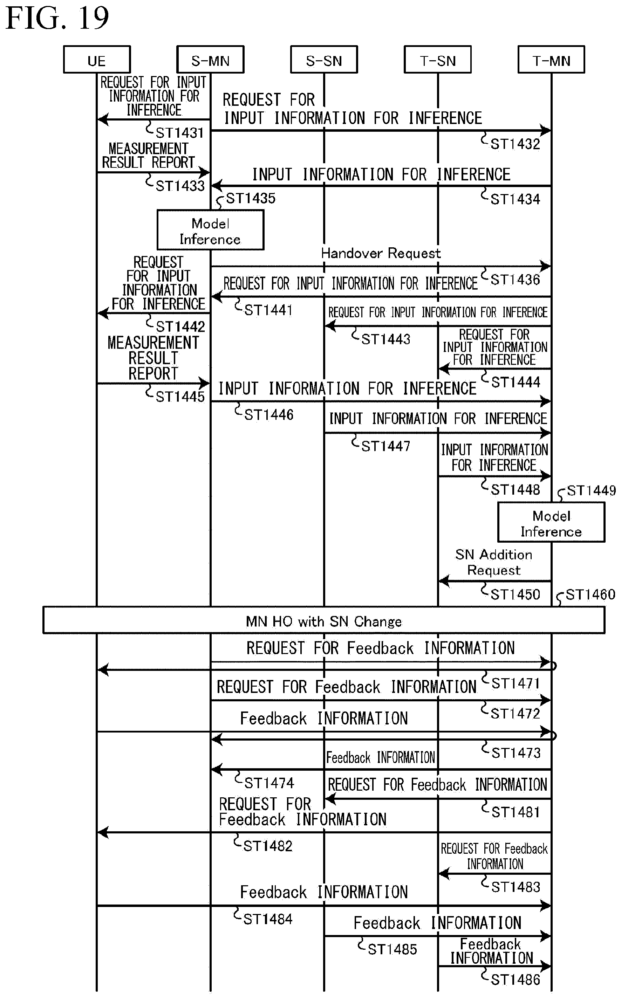

FIGS. 18 and 19 are diagrams showing a sequence example of an MN HO procedure accompanied by the SN change using the AI/ML for DC. FIG. 18 shows a first half part of the sequence example, and FIG. 19 shows a second half part of the sequence example. An example is disclosed in which the S-MN includes an AI/ML model for HO, the T-MN includes the AI/ML model for DC, and each of the S-MN and the T-MN performs training and inference. As the AI/ML model for HO, for example, an AI/ML model for Mobility disclosed in Chapter 5.3.2 of Non Patent Document 30 may be applied. In step ST1401, the AI/ML model for HO is provided in an HO source MN (S-MN). In step ST1402, the AI/ML model for DC is provided in an HO target base station (T-MN). In step ST1403, S-MN performs a measurement configuration for the UE. For example, a radio measurement configuration is performed. RRC signalling may be used for the configuration. An RRCReconfiguration message may be used.

In step ST1404, the UE performs the measurement. The measurement by the UE may be, for example, the radio measurement or the L2 measurement. The measurement by the minimization drive test (MDT) may be used. For example, the measurement by the immediate MDT may be used, or the logged measurement by the Logged MDT may be used. The UE may perform the measurement using the measurement configuration received in step ST1403. Each measurement may be performed at the same timing or may be performed at different timings.

In step ST1411, the S-MN transmits a request for input information for the AI/ML model for HO to the UE. The request may include information related the UE to be subjected to the HO. The information related the UE may be an identifier of the UE. Information indicating necessary information may be included in the request. The request may include information indicating a purpose of the input information for the AI/ML model for HO. The request may include information indicating that the purpose is for model training. For example, this configuration is effective in a case where information for model training is provided in the input information for the AI/ML model for HO. The S-MN may transmit the request for the input information for the AI/ML model to the UE. Information indicating necessary information may be included in the request. The request may include information indicating a purpose of the input information for the AI/ML model. For example, information indicating that the purpose is for HO may be included. For example, information indicating that the purpose is for training may be included. The UE can promptly detect the information to be transmitted to the S-MN, and as a result, it is possible to perform prompt notification to the S-MN from the UE. For example, RRC signalling may be used for the transmission of the request. In step ST1413, the UE transmits the input information for the AI/ML model for HO to the S-MN. As the information, the measurement result by the UE may be transmitted as a measurement result report. The measurement result may be the radio measurement result, the L2 measurement result, or the measurement result by the MDT. The logged measurement result by the Logged MDT may be a result measured when the UE is in the RRC_Inactive or RRC_Idle state. These measurement results may be transmitted by the same signalling or may be transmitted by different signalling. The RRC signalling may be used for the transmission. For example, a Measurement Report message may be used for the transmission of the radio measurement result or the L2 measurement result. For example, a UE Information Response message may be used for the transmission of the measurement result by the MDT.

In step ST1412, the S-MN transmits the request for the input information for the AI/ML model for HO to the neighboring base station. The request may include information related the UE to be subjected to the HO. The information related the UE may be an identifier of the UE. The number of neighboring base stations is not limited to one, but may more than one. The T-MN may be included in the neighboring base station. In other words, the T-MN may be selected within the neighboring base station. Information indicating necessary information may be included in the request. The request may include information indicating a purpose of the input information for the AI/ML model for HO. The request may include information indicating that the purpose is for model training. For example, this configuration is effective in a case where information for model training is provided in the input information for the AI/ML model for HO. The S-MN may transmit the request for the input information for the AI/ML model to the neighboring base station. Information indicating necessary information may be included in the request. The request may include information indicating a purpose of the input information for the AI/ML model. For example, information indicating that the purpose is for HO may be included. For example, information indicating that the purpose is for training may be included. The neighboring base station can promptly detect the information to be transmitted to the S-MN, and as a result, it is possible to perform prompt notification to the S-MN from the neighboring base station. For example, the Xn signalling may be used for the transmission of the request. In step ST1414, the neighboring base station transmits the input information for the AI/ML model for HO (input information for model training) to the S-MN. For example, the Xn signalling may be used for the transmission of the information.

In step ST1415, the S-MN trains the AI/ML model for HO using the input information for the AI/ML model for HO stored in its own node and the input information for the AI/ML model for HO acquired from the UE and the neighboring base station. The AI/ML model for HO is updated by training. These procedures may be performed as appropriate. These procedures may be performed periodically or may be performed each time the HO is performed at the MN or at the neighboring base station.

In step ST1421, step ST1423, and step ST1424, the base station (in FIG. 18, as an example, the T-MN) that has received the request for the input information for the AI/ML model for HO from the S-MN transmits the request for the input information for the AI/ML model for DC to the neighboring base station. The request may include information related the UE to be subjected to the DC. The information related the UE may be an identifier of the UE. The UE to be subjected to the DC may be the same as the UE to be subjected to the HO. The number of neighboring base stations is not limited to one, but may more than one. The S-MN may be included in the neighboring base station. For example, the base station that is the transmission source of the request for the input information for the AI/ML model for HO received in step ST1412 may be the neighboring base station. In step ST1422, the S-MN that has received the request may transmit the request for the input information for the AI/ML model for DC to the UE. The request may include information related the UE to be subjected to the DC. The information related the UE may be an identifier of the UE. The UE to be subjected to the DC may be the same as the UE to be subjected to the HO. The T-SN may be included in the neighboring base station to which the T-MN transmits the request for the input information for the AI/ML model for DC. In other words, the T-SN may be selected within the neighboring base station. Information indicating necessary information may be included in the request. The request may include information indicating a purpose of the input information for the AI/ML model for DC. The request may include information indicating that the purpose is for model training. For example, this configuration is effective in a case where information for model training is provided in the input information for the AI/ML model for DC. The T-MN may transmit the request for the input information for the AI/ML model to the neighboring base station. The S-MN may transmit the request for the input information for the AI/ML model to the UE. The request may include information related the subject UE. The information related the UE may be an identifier of the UE. Information indicating necessary information may be included in the request. The request may include information indicating a purpose of the input information for the AI/ML model. For example, information indicating that the purpose is for DC may be included. For example, information indicating that the purpose is for training may be included. The neighboring base station or the UE can promptly detect the information to be transmitted to the T-MN or the S-MN, and as a result, it is possible to perform prompt notification to the T-MN or the S-MN from the neighboring base station or the UE. For example, the Xn signalling may be used for the transmission of the request between the base stations. RRC signalling may be used for the transmission of the request from the base station to the UE.

In step ST1425, the UE transmits the input information for the AI/ML model for DC to the S-MN. As the information, the measurement result by the UE may be transmitted as a measurement result report. The measurement result may be the radio measurement result, the L2 measurement result, or the measurement result by the MDT. The logged measurement result by the Logged MDT may be a result measured when the UE is in the RRC_Inactive or RRC_Idle state. These measurement results may be transmitted by the same signalling or may be transmitted by different signalling. The RRC signalling may be used for the transmission. For example, a Measurement Report message may be used for the transmission of the radio measurement result or the L2 measurement result. For example, a UE Information Response message may be used for the transmission of the measurement result by the MDT.

In step ST1426, step ST1427, and step ST1428, the S-MN and the neighboring base station transmit the input information for the AI/ML model for DC to the T-MN. In step ST1426, the input information for the AI/ML model for DC received from UE in step ST1425 may be added to the input information for the AI/ML model for DC to be transmitted from S-MN to T-MN. In this way, the T-MN can acquire the information from the UE. For example, the Xn signalling may be used for the transmission of the information.

The request for the input information for the AI/ML model for DC may be transmitted from the T-MN to the S-SN. The T-MN may transmit the request to the S-SN via the S-MN. The S-SN may transmit the input information for the AI/ML model for DC to the T-MN. The S-SN may transmit the information to the T-MN via the S-MN. In this way, the T-MN can reliably obtain the input information on the S-SN used for the DC in the S-MN.

In step ST1429, the T-MN trains the AI/ML model for DC using the input information for the AI/ML model for DC stored in its own node and the input information for the AI/ML model for DC acquired from the UE, the S-MN, and the neighboring base station. The AI/ML model for DC is updated by training. These procedures may be performed as appropriate. These procedures may be performed periodically or may be performed each time the DC is performed at the T-MN, at the S-SN, at the T-SN, or the neighboring base station.

The processing for training the AI/ML model for HO and the processing for training the AI/ML model for DC need not be linked to each other. These pieces of processing may be performed at different timings. In the example disclosed above, the base station that has received the request for the input information for the AI/ML model for HO from the S-MN in step ST1412 performs the processing for training the AI/ML model for DC in step ST1421 to step ST1429. However, as another example, the base station may perform the processing for training the AI/ML model for DC even when the request for the input information for the AI/ML model for HO is not received. The base station including the AI/ML model for DC may perform the processing for training the AI/ML model for DC regardless of whether the request is received. In this way, for example, even when the AI/ML model is not used for the HO target, the AI/ML model can be used for the DC procedure.

The processing for training the AI/ML model for DC of steps ST1421 to ST1429 may be started after the T-MN receives an HO request message of step ST1436. When a period until the processing for training the AI/ML model for DC and the HO request is lengthened, the model may become unsuitable due to the movement of the UE, the radio wave propagation environment, or the change in other situations. By using such a method, the accuracy of the AI/ML model for DC can be improved. However, when the processing for training the AI/ML model for DC is performed after the HO request in this way, the procedures after the HO request may increase, and the time until the HO procedure may be lengthened. In order to solve such an issue, processing for training the AI/ML model for DC may be performed before the HO request and after the HO request. For example, in the training of the AI/ML model for DC after the HO request, a slight modification of the model may be performed. For example, in the training of the AI/ML model for DC after the HO request, the input information may be limited. For example, the input information may be limited to input information including a large temporal change. In this way, it is possible to shorten the time from the HO request to the HO procedure.

The S-MN determines the initiation of the HO. The S-MN may determine the initiation of the HO accompanied by the SN change. The S-MN may determine the initiation of the HO not accompanied by the SN change. The S-MN may determine the initiation of the HO, and the T-MN may determine whether or not to perform the SN change. In the examples of FIGS. 18 and 19, the T-MN determines whether or not to perform the SN change. The S-MN may use the AI/ML model for HO, for deciding the HO target.

In step ST1431 to step ST1434, among the S-MN, the UE, and the neighboring base station, the transmission of the request for the input information for the AI/ML model for HO for inference and the transmission of the input information for the AI/ML model for HO for inference are performed. As these procedures, the procedures of step ST1411 to step ST1414 described above may be applied as appropriate. The term "for model training" may be replaced with the term "for inference". In step ST1435, the S-MN performs the inference using the AI/ML model for HO, to derive output information of the AI/ML model for HO. The S-MN decides an HO target base station (T-MN) using the output information and performs a configuration for HO. In step ST1436, the S-MN transmits the HO request message to the T-MN.

The T-MN that has received the request message determines whether or not to perform the SN change. The T-MN may select the SN used for the DC. When the SN is the same as the S-SN, it may be determined not to perform the SN change, and when the SN is different from the S-SN, it may be determined to perform the SN change on the selected SN. The T-MN may use the AI/ML model for DC, for the selection of the SN.

In step ST1441 to step ST1448, the transmission of the request for the input information for the AI/ML model for DC for inference and the transmission of the input information for the AI/ML model for DC for inference are performed among the T-MN, the S-MN, the UE, and the neighboring base station. As these procedures, the procedures of step ST1412 to step ST1428 disclosed above may be applied as appropriate. The term "for model training" may be replaced with the term "for inference". In step ST1449, the T-MN performs the inference using the AI/ML model for DC, to derive the output information of the AI/ML model for DC. The T-MN decides the DC target base station (T-SN) using the output information and performs a DC configuration. In step ST1450, the T-MN transmits an SN addition request message to the T-SN.

In step ST1460, the HO procedure of the MN accompanied by the SN change is performed among the UE, the S-MN, the T-MN, the S-SN, and the T-SN. In this way, it is possible to perform the procedure by using the AI/ML model for HO and the AI/ML model for DC.

In step ST1471 and step ST1472, the S-MN transmits a request for feedback information of the HO procedure using the AI/ML model for HO to the UE and the T-MN. The S-MN may transmit the request for the feedback information of the HO procedure using the AI/ML model for HO for the UE to the T-MN. The T-MN may transmit the request for the feedback information of the HO procedure using the AI/ML model for HO to the UE. The S-MN can transmit the request to the UE via the T-MN. Information indicating necessary information may be included in the request. For example, RRC signalling may be used for the transmission of the request. In step ST1473 and step ST1474, the UE and the T-MN transmit the feedback information of the HO procedure using the AI/ML model for HO to the S-MN. The UE may transmit the feedback information of the HO procedure using the AI/ML model for HO to the T-MN. The T-MN may transmit the feedback information of the HO procedure using the AI/ML model for HO to the S-MN. The UE can transmit the information to the S-MN via the T-MN. The RRC signalling may be used for the transmission.

In step ST1481, step ST1482, and step ST1483, the T-MN transmits the request for the feedback information of the DC procedure using the AI/ML model for DC to the S-SN, the UE, and the T-SN. The transmission from the T-MN to the UE may be performed directly from the T-MN. In step ST1484, step ST1485, and step ST1486, the UE, the S-SN, and the T-SN transmit the feedback information of the DC procedure using the AI/ML model for DC to the T-MN. The transmission from the UE to the T-MN may be performed directly to the T-MN or may be performed via the S-MN. For example, the Xn signalling may be used for the transmission of the information between the base stations. For the transmission of the information between the UE and the base station, for example, RRC signalling may be used.

In this way, the T-MN can acquire the performance of the DC procedure using the AI/ML model for DC. The T-MN may evaluate the effect of the DC procedure when the AI/ML model for DC is used, by using the feedback information of the DC procedure using the AI/ML model for DC stored in its own node and the feedback information of the DC procedure using the AI/ML model for DC acquired from the UE and the T-SN.

In this way, it is possible to perform the HO procedure of the MN accompanied by the SN change, by using the AI/ML model for HO and the AI/ML model for DC. Even when the HO and the DC are performed in combination, the AI/ML for HO and the AI/ML for DC can be executed, and the procedure in which more effective HO and DC are combined can be executed.

The AI/ML model for HO may be included in the RAN node to be subjected to the HO (which may be either the HO source or the HO target). The AI/ML model for DC may be included in the RAN node to be subjected to the DC (which may be either the SN or the MN). In addition, the RAN node to be subjected to the HO and to be subjected to the DC may include the AI/ML model for HO and the AI/ML model for DC. A model having both functions of the AI/ML model for HO and the AI/ML model for DC may be provided. In this way, it is possible to avoid the HO or the DC using the AI/ML model from being restricted to a specific RAN node.

The transmission of the request for the input information for the AI/ML model for HO and the transmission of the request for the input information for the AI/ML model for DC may be performed together. The transmission of the input information for the AI/ML model for HO and the transmission of the input information for the AI/ML model for DC may be performed together. For example, these two types of transmission may be performed together when the model having both functions of the AI/ML model for HO and the AI/ML model for DC is used. The amount of signalling can be reduced.

With the method as disclosed in the present embodiment, it is possible to perform training and inference in the DC procedure by using the AI/ML model for DC. By using the result of inference using the AI/ML model for DC, for example, a more effective procedure can be performed in the selection of the SN, the selection of the SN change target, the selection of the PSCell change target, and the like. As a result, it is possible to achieve high-speed and large-capacity communication in the DC procedure and to optimize various KPIs.

In the above description, a method of performing the SN change procedure by using the AI/ML model for DC has been disclosed. The method disclosed above may be applied as appropriate to the SN modification procedure. For example, the method disclosed above may be applied to the PSCell change in the S-SN. The method disclosed above may be applied to the SCell change in the S-SN. Information indicating whether the SN change or the SN modification is performed may be provided, and the information may be included in the input information for the AI/ML model for DC, the request thereof, the output information, and the feedback information. The RAN node or UE that has received the information can recognize whether the information is the SN change or the SN modification. In this way, the AI/ML model for DC can be used even in the SN modification procedure, and a more effective SN modification procedure can be performed.

Embodiment 2.

In the standard of the mobile communication system in 3GPP, a carrier aggregation (CA) function is present for high-speed and large-capacity communication. In order to satisfy the requirements of various KPIs together with high-speed and large-capacity communication, it is desired to execute more effective CA. In the present embodiment, a method of enabling more effective CA in the mobile communication system will be disclosed.

In the present embodiment, the AI/ML is introduced for the CA. An AI/ML model for CA is provided in the base station. The configuration of the component carrier (CC) used for the CA is performed by using the AI/ML model for CA, for example. By introducing the AI/ML into the CA, more effective CA can be achieved.

The base station may transmit information on whether or not the base station includes the AI/ML model for CA (which may be information on including the model) to the UE. The RRC signalling may be used for the transmission. The base station may transmit the information on whether or not the base station includes the AI/ML model for CA to the neighboring base station. The Xn signalling may be used for the notification. The base station may transmit the information on whether or not the base station includes the AI/ML model for CA to the CN node (which may be a function). For example, a Network Data Analysis Function (NWDAF) may be used as the CN node. The base station may transmit the information on whether or not the base station includes the AI/ML model for CA to a management node. For example, the management service (MnS) node or the OAM may be used as the management node. In this way, the UE or the node that is notified of the information can recognize whether or not the base station that is a notification source includes the AI/ML model for CA.

Input information for the AI/ML model for CA is provided. Twenty-one examples of the input information for the AI/ML model for CA will be disclosed below.

(1) Information related location of UE.
(2) Information related radio measurement of UE.
(3) CA history information of UE.
(4) CA history information of UE from neighboring base station.
(5) Information related performance of UE on which CA is performed.
(6) Current resource status of base station.
(7) Predicted resource status of base station.
(8) Past CA failure information of UE.
(9) Past CA failure information of UE from neighboring base station.
(10) Past communication failure status of UE.
(11) Past communication failure status of UE from neighboring base station.
(12) Information related trajectory of UE.
(13) Information related current traffic of UE.
(14) Information related predicted traffic of UE.
(15) Information related L2 measurement of UE.
(16) Predicted value of information related L2 measurement of UE.
(17) Information related L2 measurement from neighboring base station.
(18) Predicted value of information related L2 measurement from neighboring base station.
(19) Carrier history information used for communication with UE.
(20) Band history information used for communication with UE.
(21) Combination of (1) to (20).

As (1) and (2), (1) and (2) of the examples of the input information for the AI/ML model for DC disclosed in Embodiment 1 may be applied as appropriate.

(3) is a history of past CA information. The CA information may be, for example, information on the SCell (which may be a CC) used for the CA. For example, information for identifying the SCell may be used. For example, configuration information of the SCell may be used. For example, information on the activation/deactivation of the SCell may be used. For example, information indicating which band the CC belongs to may be used. The information for identifying the band may be a band number determined by 3GPP. For example, information on the BWP used in the CA may be used. For example, BWP configuration information of the SCell used in the CA may be used. For example, information indicating which BWP is used for the CA may be used. For example, information related SUL may be used. For example, configuration information of the SUL used in the CA may be used. Past base station history information of the UE and information on the SCell used for the CA at each base station may be used. Information on a change history of the SCell used in the CA may be used. These pieces of information may be listed. In addition, the information related the location of the UE may be included. Time related information may be included. For example, the information on the SCell used in the past CA and the information related the location or the time may be associated with each other.

(4) is the CA history information of the UE in the neighboring base station. The CA history information of the UE may be the information disclosed in (3).

For example, (5) may be the QoS of the UE on which the CA is performed. A packet loss rate or a delay time may be used. Information before the CA is performed may be used. Information after the CA is performed may be used. Information for each change of the SCell used in the CA may be used. In addition, the information related the location of the UE may be included. Time related information may be included. The information related the performance of the UE on which the CA is performed and the information related the location or the time may be associated with each other. In addition, the association with the CA history information of the UE of (3) or (4) may be performed.

For example, (6) may be a current resource usage information of the base station used in the CA. For example, the number of SCells used in the CA may be used. Resource usage information for each SCell may be used. For example, usage information of the BWP used in the CA may be used. Usage information of a frequency resource may be used. Usage information of a time resource may be used. The usage information of the frequency resource may be in units of PRBs or in units of subcarriers.

For example, (7) is information related a predicted resource of the base station used in the CA. The information related the resource of the base station used in the CA may be the information disclosed in (6).

(8) is information related a past CA failure of the UE. For example, information on the deactivation of the SCell due to the communication quality may be used. For example, information related the number of times the HARQ maximum count is overrun in the SCell may be used. For example, information related the number of times of unsuccessful ARQ retransmission may be used. The information related the CA failure may be, for example, past CA failure history information of the UE. The past base station history information of the UE and the information related the CA failure at each base station may be used. These pieces of information may be listed. In addition, the information related the location of the UE may be included. Time related information may be included. The information related the CA failure in the past and the information related the location or the time may be associated with each other.

(9) is information related a past CA failure of the UE in the neighboring base station. The information related the past CA failure of the UE may be the information disclosed in (8).

(10) is information related a past communication failure of the UE in the CA. For example, history information of the past communication failure of the UE may be used. The communication failure may be, for example, an RLF. For example, information for identifying the base station in which the communication failure has occurred may be used. For example, information for identifying the PCell, the PSCell, and the SPCell in which the communication failure has occurred may be used. These pieces of information may be listed. In addition, the information related the location of the UE may be included. Time related information may be included. The information related the past communication failure and the information related the location or the time may be associated with each other.

(11) is information related a past communication failure of the UE in the CA in the neighboring base station. The information related the past communication failure of the UE may be the information disclosed in (10).

As the information related the trajectory of the UE in (12), for example, the information related the location of the UE, which is disclosed in (1), may be applied as appropriate. The information related the trajectory of the UE may be, for example, the information disclosed in (3), the information disclosed in (19), or the information disclosed in (20). Information related the past and current trajectories of the UE may be used. The information related the past and current trajectories of the UE may be history information. The information related the trajectory may be information on a future trajectory of the UE. The information related the future trajectory may be predicted information. These pieces of information may be provided as a list. In addition, Time related information may be included. The information related the trajectory of the UE and the information related the time may be associated with each other.

In (13), the traffic of the UE may be, for example, the number of pieces of UE to be connected. For example, the current traffic of the UE in the SCell may be used. The current traffic of the UE in the SCell used for the CA at the base station may be used.

In (14), the information related the traffic of the UE may be the information disclosed in (13).

For example, (15) may be a measurement result of the L2 measurement information in the SCell by the UE. As the L2 measurement information, (15) of the the input information example for the AI/ML model for DC disclosed in Embodiment 1 may be applied as appropriate. In addition, the UE location related information may be included. Time related information may be included. The information related the L2 measurement in the SCell by the UE and the information related the location or the time may be associated with each other.

(16) is a predicted value of the L2 measurement information in the SCell. The predicted value is a predicted value of the L2 measurement information in the SCell measured by the UE. A predicted value of the L2 measurement information in the SCell measured by the UE in the CA may be used.

For example, (17) may be a measurement result of the L2 measurement information in the SCell by the base station. A measurement result of the L2 measurement information in the SCell of the neighboring base station may be used. As the L2 measurement information, (17) of the example of the input information for the AI/ML model for DC disclosed in Embodiment 1 may be applied as appropriate. For example, a L2 measurement result in the SCell by the base station when the CA is performed may be used. In addition, the L2 measurement result related to the UE may include information related the location of the UE. Time related information may be included. The information related the L2 measurement by the UE and the information related the location or the time may be associated with each other.

(18) is a predicted value of the L2 measurement information in the SCell. The predicted value is a predicted value of the L2 measurement information in the SCell measured by the base station. A predicted value of the L2 measurement information in the SCell by the base station when the CA is performed may be used. A predicted value of the L2 measurement information of the SCell by the base station in the neighboring base station may be used.

(19) is information on a carrier that has been used for communication in the past by the UE. For example, information related a carrier frequency with which the UE communicates with the base station. Information for identifying the carrier frequency may be used. The information may be provided for each type of link, for example, downlink, uplink, sidelink, and the like. A list of information on the carrier that has been used for communication in the past by the UE may be used. In addition, the information related the location of the UE may be included. Time related information may be included. The information on the carrier that has been used for communication in the past and the information related the location or the time may be associated with each other. The information on the carrier that has been used for communication in the past by the UE is not limited to the carrier on which the CA has been performed. More optimal CA can be performed from more carriers.

(20) is information related a band that has been used for communication in the past by the UE. For example, information related a band with which the UE communicates with the base station may be used. Information for identifying the band may be used. The information may be provided for each type of link, for example, downlink, uplink, sidelink, and the like. A list of information on the band that has been used for communication in the past by the UE may be used. In addition, the information related the location of the UE may be included. Time related information may be included. The information on the band that has been used for communication in the past and the information related the location or the time may be associated with each other. The band information that has been used for communication in the past by the UE is not limited to the band on which the CA has been performed. More optimal CA can be performed from more bands.

The base station including the AI/ML model for CA inputs, for training or inference, the input information for the AI/ML model for CA disclosed above to the AI/ML model for CA. In this way, it is possible to execute more effective CA by using the AI/ML model for CA.

The base station transmits the input information for the AI/ML model for CA or the like to the neighboring base station. For the transmission of the input information for the AI/ML model for CA or the like between the base stations, the method of transmitting the input information for the AI/ML model for DC or the like between the base stations disclosed in Embodiment 1 may be applied as appropriate. The input information for the AI/ML model for DC may be applied as appropriate by being replaced with the input information for the AI/ML model for CA.

The DU transmits the input information for the AI/ML model for CA or the like to the CU. For the transmission of the input information for the AI/ML model for CA or the like between the CU and the DU, the method of transmitting the input information for the AI/ML model for DC or the like between the CU and the DU disclosed in Embodiment 1 may be applied as appropriate. The input information for the AI/ML model for DC may be applied as appropriate by being replaced with the input information for the AI/ML model for CA.

The UE transmits the input information for the AI/ML model for CA or the like to the base station. For the transmission of the input information for the AI/ML model for CA or the like between the UE and the base station, the method of transmitting the input information for the AI/ML model for DC or the like between the CU and the DU disclosed in Embodiment 1 may be applied as appropriate. The input information for the AI/ML model for DC may be applied as appropriate by being replaced with the input information for the AI/ML model for CA.

Output information of the AI/ML model for CA will be disclosed. Nine examples of the output information of the AI/ML model for CA will be disclosed below.

(1) Information related predicted trajectory of UE.
(2) Predicted CA information.
(3) Priority of predicted CA.
(4) Predicted candidate SCell information.
(5) Probability of reaching predicted candidate SCell.
(6) Predicted CA procedure time.
(7) Predicted resource status of base station.
(8) Information related predicted traffic of UE.
(9) Combination of (1) to (8).

For example, (1) may be predicted future trajectory information of the UE. The information related the trajectory of the UE may be the information disclosed in (12) of the example of the input information for the AI/ML model for CA. Information related the past and current trajectories may be included. History information of the past and current trajectories of the UE may be included together with the predicted future trajectory information of the UE. These pieces of information may be provided as a list. In addition, Time related information may be included. The information related the trajectory of the UE and the Time related information may be associated with each other.

(2) is the CA information predicted by the AI/ML model. The CA information may be the information disclosed in (3) of the example of the input information for the AI/ML model for CA. For example, information related the SCell for CA may be used. The number of SCells for CA may be one or more. For example, information for identifying the SCell selected for the CA may be used. Configuration information of the SCell selected for the CA may be used. For example, information indicating whether or not to perform the CA may be used. In addition, information related a predicted location of the UE may be included. Information related the predicted time may be included. The predicted CA information and the information related the location or the time may be associated with each other. The predicted CA information is not limited to one piece of information, but may be a plurality of pieces of information. Information on the prediction accuracy of the CA information predicted by the AI/ML model may be included.

For example, (3) is information on the priority of the predicted SCell for CA indicated by the information disclosed in (2). The predicted SCell for CA and the priority thereof may be associated with each other. As another example, information on the priority of the predicted CA information may be used. The predicted CA information and the priority thereof may be associated with each other.

(4) is information on the predicted candidate SCell for CA. For example, information for identifying the SCell may be used. Configuration information of the SCell may be used. The number of candidate SCells for CA is not limited to one, but may more than one. Information on the prediction accuracy of the predicted SCell candidates may be included.

(5) is prediction information indicating a probability that the candidate SCell for CA can serve the UE. Information on a confidence interval of the probability of reaching the candidate SCell for CA predicted by the AI/ML model may be included.

(6) is information on the predicted CA procedure time. The CA procedure time may be, for example, a time when the configuration of the CA is started, the time when the configuration of the CA is being performed, or the time when the configuration of the CA is completed. The CA procedure time may be provided, for example, for each CA. The CA procedure time may be provided, for example, for each SCell. For example, a time for activation of the SCell, a time during activation of the SCell, a time for deactivation of the SCell, or a time during deactivation of the SCell may be used. The predicted CA procedure time may be associated with the predicted CA information or SCell information and the predicted SCell candidate information.

(7) is information on the predicted resource status of the base station. The information on the resource status of the base station may be the information disclosed in (7) of the example of the input information for the AI/ML model for CA. The information on the resource status of the base station may be the predicted CA information in (2) or the predicted resource status in the predicted SCell candidate in (4).

(8) is the information related the predicted traffic of the UE. The information related the traffic of the UE may be the information disclosed in (13) of the example of the input information for the AI/ML model for CA. The information related the predicted traffic of the UE may be the predicted CA information in (2) or the predicted traffic status of the UE in the predicted SCell candidate in (4).

The notification of the output information of the AI/ML model for CA disclosed above is given to the RAN node or the UE that performs the CA procedure, as appropriate. In this way, it is possible to execute more effective CA by using the AI/ML model for CA.

The base station transmits the output information of the AI/ML model for CA or the like to the neighboring base station. For the transmission of the output information of the AI/ML model for CA or the like between the base stations, the method of transmitting the output information of the AI/ML model for DC or the like between the base stations disclosed in Embodiment 1 may be applied as appropriate. The output information of the AI/ML model for DC may be applied as appropriate by being replaced with the output information of the AI/ML model for CA.

The CU transmits the output information of the AI/ML model for CA or the like to the DU. For the transmission of the output information of the AI/ML model for CA or the like between the CU and the DU, the method of transmitting the output information of the AI/ML model for DC or the like between the CU and the DU disclosed in Embodiment 1 may be applied as appropriate. The output information of the AI/ML model for DC may be applied as appropriate by being replaced with the output information of the AI/ML model for CA.

The base station transmits the output information of the AI/ML model for CA or the like to the UE.

For the transmission of the output information of the AI/ML model for CA or the like between the UE and the base station, the method of transmitting the output information of the AI/ML model for DC or the like between the UE and the base station disclosed in Embodiment 1 may be applied as appropriate. The output information of the AI/ML model for DC may be applied as appropriate by being replaced with the output information of the AI/ML model for CA.

Feedback information by the CA using the AI/ML model for CA will be disclosed. Five examples of the feedback information of the CA procedure using the AI/ML model for CA will be disclosed below.

(1) Information related performance of UE.

(2) Information related L2 measurement of UE.

(3) Information related L2 measurement of base station.

(4) Resource status of base station.

(5) Combination of (1) to (4).

For example, (1) may be (5) of the example of the input information for the AI/ML model for CA.

For example, (2) may be (15) of the example of the input information for the AI/ML model for CA.

For example, (3) may be (17) of the example of the input information for the AI/ML model for CA.

For example, (4) may be (6) of the example of the input information for the AI/ML model for CA.

The node involved in the CA notifies the node including the AI/ML model for CA, as appropriate, of the feedback information of the CA procedure using the AI/ML model for CA disclosed above. In this way, it is possible to evaluate the AI/ML model for CA and to update the model. As a result, it is possible to execute more effective CA.

The base station transmits the feedback information of the CA procedure using the AI/ML model for CA or the like to the neighboring base station. For the transmission of the feedback information of the CA procedure using the AI/ML model for CA or the like between the base stations, the method of transmitting the feedback information of the DC procedure using the AI/ML model for DC or the like between the base stations disclosed in Embodiment 1 may be applied as appropriate. The feedback information of the DC procedure using the AI/ML model for DC may be applied as appropriate by being replaced with the feedback information of the CA procedure using the AI/ML model for CA.

The DU transmits the feedback information of the CA procedure using the AI/ML model for CA or the like to the CU. For the transmission of the feedback information of the CA procedure using the AI/ML model for CA or the like between the CU and the DU, the method of transmitting the feedback information of the DC procedure using the AI/ML model for DC or the like between the CU and the DU disclosed in Embodiment 1 may be applied as appropriate. The feedback information of the DC procedure using the AI/ML model for DC may be applied as appropriate by being replaced with the feedback information of the CA procedure using the AI/ML model for CA.

The UE transmits the feedback information of the CA procedure using the AI/ML model for CA or the like to the base station. For the transmission of the feedback information of the CA procedure using the AI/ML model for CA or the like between the UE and the base station, the method of transmitting the feedback information of the DC procedure using the AI/ML model for DC or the like between the CU and the DU disclosed in Embodiment 1 may be applied as appropriate. The feedback information of the DC procedure using the AI/ML model for DC may be applied as appropriate by being replaced with the feedback information of the CA procedure using the AI/ML model for CA.

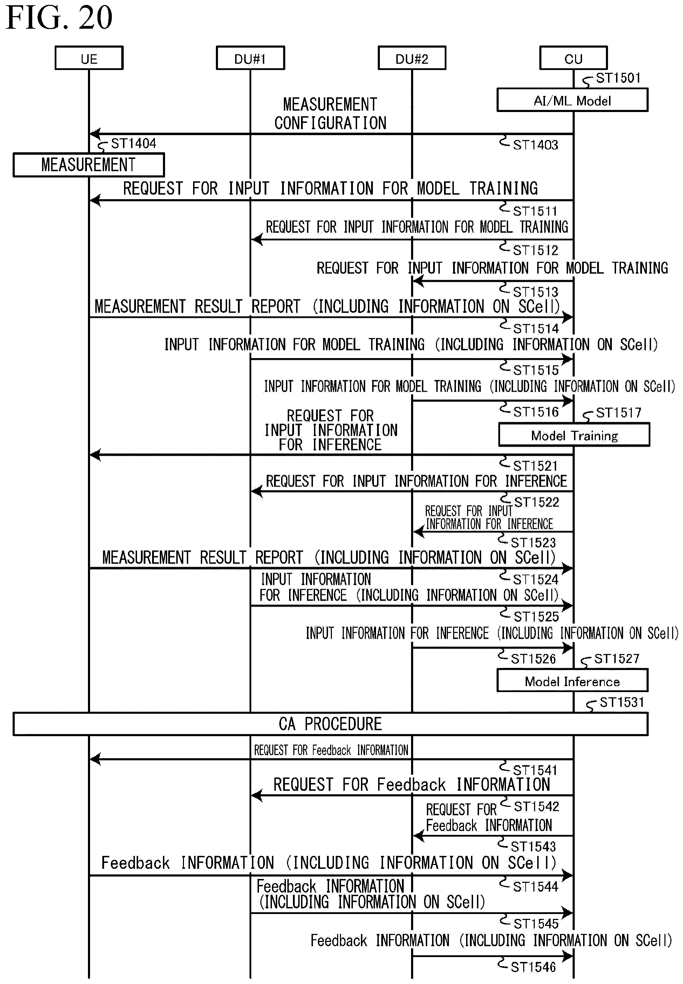

FIG. 20 is a diagram showing a sequence example of the CA procedure using the AI/ML for CA. An example is disclosed in which the CU includes the AI/ML model for CA and performs training and inference. The steps common to those in FIG. 18 are denoted by the same step numbers, and the common description will be omitted. In step ST1501, the AI/ML model for CA is provided in the CU.

In step ST1511, the CU transmits a request for the input information for the AI/ML model for CA to the UE. The request may include information related the UE to be subjected to the CA. The information related the UE may be an identifier of the UE. Information indicating necessary information may be included in the request. The request may include information indicating that the purpose is for model training. For example, this configuration is effective in a case where information for model training is provided in the input information for the AI/ML model for CA. For example, RRC signalling may be used for the transmission of the request. The CU may transmit the request to the DU to which the UE is connected. The DU transmits the request to the UE. The F1 signalling may be used for transmission from the CU to the DU. In step ST1514, the UE transmits the input information for the AI/ML model for CA to the CU. As the information, the measurement result by the UE may be transmitted as a measurement result report. The measurement result may be the radio measurement result, the L2 measurement result, or the measurement result by the MDT. The logged measurement result by the Logged MDT may be a result measured when the UE is in the RRC_Inactive or RRC_Idle state. These measurement results may be transmitted by the same signalling or may be transmitted by different signalling. The RRC signalling may be used for the transmission. For example, a Measurement Report message may be used for the transmission of the radio measurement result or the L2 measurement result. For example, a UE Information Response message may be used for the transmission of the measurement result by the MDT. The UE may transmit the information to the DU to which the UE is connected. The DU transmits the information to the CU.

In step ST1512 and step ST1513, the CU transmits the request for the input information for the AI/ML model for CA to the DU. The request may include information related the UE to be subjected to the CA. The information related the UE may be an identifier of the UE. The number of DUs is not limited to one, but may more than one. The DU may be connected to the CU. Information indicating necessary information may be included in the request. The request may include information indicating that the purpose is for model training. For example, this configuration is effective in a case where information for model training is provided in the input information for the AI/ML model for CA. For example, the F1 signalling may be used for the transmission of the request. In step ST1515 and step ST1516, the DU transmits the input information for the AI/ML model for CA to the CU. For example, the F1 signalling may be used for the transmission of the information.

In step ST1517, the CU trains the AI/ML model for CA using the input information for the AI/ML model for CA stored in its own node and the input information for the AI/ML model for CA acquired from the UE and the DU. The AI/ML model for CA is updated by training. These procedures may be performed as appropriate. These procedures may be performed periodically or may be performed each time HO is performed at the serving base station.

The CU determines to perform the CA. In step ST1521 to step ST1526, the transmission of the request for the input information for the AI/ML model for CA for inference and the transmission of the input information for the AI/ML model for CA for inference are performed among the UE, the DU, and the CU. As these procedures, the procedures of step ST1511 to step ST1516 described above may be applied as appropriate. The term "for model training" may be replaced with the term "for inference". In step ST1527, the CU performs the inference by the AI/ML model for CA, to derive the output information of the AI/ML model for CA. The CU uses the output information to decide the SCell or SCell candidate to be used in the CA, and performs a CA configuration. In step ST1531, the CA procedure is performed among the CU, the DU, and the UE. In this way, it is possible to perform the CA procedure among the CU, the DU, and the UE by using the output information derived by the AI/ML model for CA.

In step ST1541, step ST1542, and step ST1543, the CU transmits a request for the feedback information of the CA procedure using the AI/ML model for CA to the UE and the DU. The DU may be the DU involved in the CA. Information indicating necessary information may be included in the request. The transmission of the request from the CU to the UE may be performed via the DU. For example, RRC signalling may be used for the transmission of the request between the UE and the DU. For example, the F1 signalling may be used for the transmission of the request between the DU and the CU. In step ST1544, step ST1545, and step ST1546, the UE and the DU transmit the feedback information of the CA procedure using the AI/ML model for CA to the CU. The transmission of the information from the UE to the CU may be performed via the DU. For example, RRC signalling may be used for the transmission of the information between the UE and the DU. For example, F1 signalling may be used for the transmission of the information between the DU and the CU.

In this way, the CU can acquire the performance of the CA procedure using the AI/ML model for CA. The CU may evaluate the effect of the CA procedure when the AI/ML model for CA is used, by using the feedback information of the CA procedure using the AI/ML model for CA stored in its own node and the feedback information of the CA procedure using the AI/ML model for CA acquired from the UE and the DU.

In this way, it is possible to perform the CA procedure by using the AI/ML model for CA. A more effective CA procedure can be executed.

With the method as disclosed in the present embodiment, it is possible to perform training and inference in the CA procedure by using the AI/ML model for CA. By using the result of inference using the AI/ML model for CA, for example, a more effective procedure can be performed in the selection of the SCell, the selection of the SCell candidate, and the like. As a result, it is possible to achieve high-speed and large-capacity communication in the CA procedure and to optimize various KPIs.

Embodiment 3.

The HO procedure or DC procedure using AI/ML has been proposed. In order to optimize various types of KPIs, a method of more effectively performing the HO procedure or DC procedure using AI/ML is required. In the present embodiment, a method of enabling more effective HO procedure or DC procedure using AI/ML will be disclosed.

In the present embodiment, an AI/ML model for HO considering the CA (hereinafter, referred to as an AI/ML model for CA-considered HO) is introduced. In addition, an AI/ML model for DC considering the CA (hereinafter, referred to as an AI/ML model for CA-considered DC) is introduced. As the AI/ML model for HO, for example, an AI/ML model for Mobility disclosed in Chapter 5.3.2 of Non Patent Document 30 may be applied. As the AI/ML model for DC, for example, an AI/ML model for DC disclosed in Embodiment 1 may be applied as appropriate.

A method of considering the CA in the AI/ML model for HO and the AI/ML model for DC will be disclosed.

Input information for the AI/ML model for CA-considered HO and input information for the AI/ML model for CA-considered DC are provided. As the input information for the AI/ML model for CA-considered HO, the input information for the AI/ML model for HO and the input information for the AI/ML model for CA disclosed in Embodiment 2 are combined. As the input information for the AI/ML model for CA-considered DC, the input information for the AI/ML model for DC disclosed in Embodiment 1 and the input information for the AI/ML model for CA disclosed in Embodiment 2 are combined. Part or all of the pieces of information may be combined. In this way, the input information for the AI/ML model for HO and the input information for the AI/ML model for DC, which consider the CA, can be provided.

The base station transmits the input information for the AI/ML model for CA-considered HO and the input information for the AI/ML model for CA-considered DC (hereinafter, collectively referred to as "input information for the AI/ML model for CA-considered HO/DC"), and the like to the neighboring base station. For the transmission of the input information for the AI/ML model for CA-considered HO/DC or the like between the base stations, the method of transmitting the input information for the AI/ML model for DC or the like between the base stations disclosed in Embodiment 1 may be applied as appropriate. The input information for the AI/ML model for DC may be applied as appropriate by being replaced with the input information for the AI/ML model for CA-considered HO/DC.

The DU transmits the input information for the AI/ML model for CA-considered HO/DC or the like to the CU. For the transmission of the input information for the AI/ML model for CA-considered HO/DC or the like between the CU and the DU, the method of transmitting the input information for the AI/ML model for DC or the like between the CU and the DU disclosed in Embodiment 1 may be applied as appropriate. The input information for the AI/ML model for DC may be applied as appropriate by being replaced with the input information for the AI/ML model for CA-considered HO/DC.

The UE transmits the input information for the AI/ML model for CA-considered HO/DC or the like to the base station. For the transmission of the input information for the AI/ML model for CA-considered HO/DC or the like between the UE and the base station, the method of transmitting the input information for the AI/ML model for DC or the like between the UE and the base station disclosed in Embodiment 1 may be applied as appropriate. The input information for the AI/ML model for DC may be applied as appropriate by being replaced with the input information for the AI/ML model for CA-considered HO/DC.

Output information of the AI/ML model for HO considering the CA (output information of the AI/ML model for CA-considered HO) and output information of the AI/ML model for DC considering the CA (output information of the AI/ML model for CA-considered DC) are provided. As the output information of the AI/ML model for CA-considered HO, the output information of the AI/ML model for HO and the output information of the AI/ML model for CA disclosed in Embodiment 2 are combined. As the output information of the AI/ML model for CA-considered DC, the output information of the AI/ML model for DC disclosed in Embodiment 1 and the output information of the AI/ML model for CA disclosed in Embodiment 2 are combined. Part or all of the pieces of information may be combined. As the combination method, for example, information related the CA may be added to information on the HO target and the DC target. For example, the information related the SCell that performs the CA at the base station or at the PCell is added to the information on the base station or PCell as the HO target. For example, the information related the SCell that performs the CA at the base station or at the PSCell is added to the information on the base station or PSCell of the DC target. For example, the information related the CA may be added to information on the candidate PSCell for a conditional handover (CHO). Information on the candidate SCell may be added. For example, the information related the candidate SCell that performs the CA at the PCell is added to the information for each candidate PCell. For example, the information related the CA may be added to the information on the candidate PSCell for the CPC. Information on the candidate SCell may be added. For example, the information related the candidate SCell that performs the CA at the PSCell is added to the information for each candidate PSCell.

As another example of the combination method, for example, the information related the CA may be added to the UE traffic information of the base station as the HO target and the DC target. For example, the UE traffic information at the SCell predicted for the CA at the base station as the predicted HO target and DC target may be added.

As another example of the combination method, for example, the information related the CA may be added to the resource status information of the base station as the HO target and the DC target. For example, the resource status information of the SCell predicted for the CA at the base station as the predicted HO target and DC target may be added.

In this way, output information of the AI/ML model for HO/DC considering the CA can be provided.

The base station transmits the output information of the AI/ML model for CA-considered HO/DC or the like to the neighboring base station. For the transmission of the output information of the AI/ML model for CA-considered HO/DC or the like between the base stations, the method of transmitting the output information of the AI/ML model for DC or the like between the base stations disclosed in Embodiment 1 may be applied as appropriate. The output information of the AI/ML model for DC may be applied as appropriate by being replaced with the output information of the AI/ML model for CA-considered HO/DC.

The CU transmits the output information of the AI/ML model for CA-considered HO/DC or the like to the DU. For the transmission of the output information of the AI/ML model for CA-considered HO/DC or the like between the CU and the DU, the method of transmitting the output information of the AI/ML model for DC or the like between the CU and the DU disclosed in Embodiment 1 may be applied as appropriate. The output information of the AI/ML model for DC may be applied as appropriate by being replaced with the output information of the AI/ML model for CA-considered HO/DC.

The base station transmits the output information of the AI/ML model for CA-considered HO/DC or the like to the UE. For the transmission of the output information for the AI/ML model for CA-considered HO/DC or the like between the UE and the base station, the method of transmitting the output information for the AI/ML model for DC or the like between the UE and the base station disclosed in Embodiment 1 may be applied as appropriate. The output information for the AI/ML model for DC may be applied as appropriate by being replaced with the output information for the AI/ML model for CA-considered HO/DC.

Feedback information of the HO procedure using the AI/ML model for HO considering the CA (feedback information of the HO procedure using the AI/ML model for CA-considered HO) and feedback information of the DC procedure using the AI/ML model for DC considering the CA (feedback information of the DC procedure using the AI/ML model for CA-considered DC) are provided. As the feedback information of the HO procedure using the AI/ML model for CA-considered HO, the feedback information of the HO procedure using the AI/ML model for HO and the feedback information of the CA procedure using the AI/ML model for CA disclosed in Embodiment 2 are combined. As the feedback information of the DC procedure using the AI/ML model for CA-considered DC, the feedback information of the DC procedure using the AI/ML model for DC disclosed in Embodiment 1 and the feedback information of the CA procedure using the AI/ML model for CA disclosed in Embodiment 2 are combined. Part or all of the pieces of information may be combined. In this way, the feedback information of the HO procedure using the AI/ML model for HO considering the CA and the feedback information of the DC procedure using the AI/ML model for DC considering the CA can be provided.

The base station transmits the feedback information of the HO procedure using the AI/ML model for CA-considered HO and the feedback information of the DC procedure using the AI/ML model for CA-considered DC (hereinafter, collectively referred to as "feedback information of the HO/DC procedure using the AI/ML model for CA-considered HO/DC"), and the like to the neighboring base station. For the transmission of the feedback information of the HO/DC procedure using the AI/ML model for CA-considered HO/DC or the like between the base stations, the method of transmitting the feedback information of the DC procedure using the AI/ML model for DC or the like between the base stations disclosed in Embodiment 1 may be applied as appropriate. The feedback information of the DC procedure using the AI/ML model for DC may be applied as appropriate by being replaced with the feedback information of the HO/DC procedure using the AI/ML model for CA-considered HO/DC.

The DU transmits the feedback information of the HO/DC procedure using the AI/ML model for CA-considered HO/DC or the like to the CU. For the transmission of the feedback information of the HO/DC procedure using the AI/ML model for CA-considered HO/DC or the like between the CU and the DU, the method of transmitting the feedback information of the DC procedure using the AI/ML model for DC or the like between the CU and the DU disclosed in Embodiment 1 may be applied as appropriate. The feedback information of the DC procedure using the AI/ML model for DC may be applied as appropriate by being replaced with the feedback information of the HO/DC procedure using the AI/ML model for CA-considered HO/DC.

The UE transmits the feedback information of the HO/DC procedure using the AI/ML model for CA-considered HO/DC or the like to the base station. For the transmission of the feedback information of the HO/DC procedure using the AI/ML model for CA-considered HO/DC or the like between the UE and the base station, the method of transmitting the feedback information of the DC procedure using the AI/ML model for DC or the like between the CU and the DU disclosed in Embodiment 1 may be applied as appropriate. The feedback information of the DC procedure using the AI/ML model for DC may be applied as appropriate by being replaced with the feedback information of the HO/DC procedure using the AI/ML model for CA-considered HO/DC.

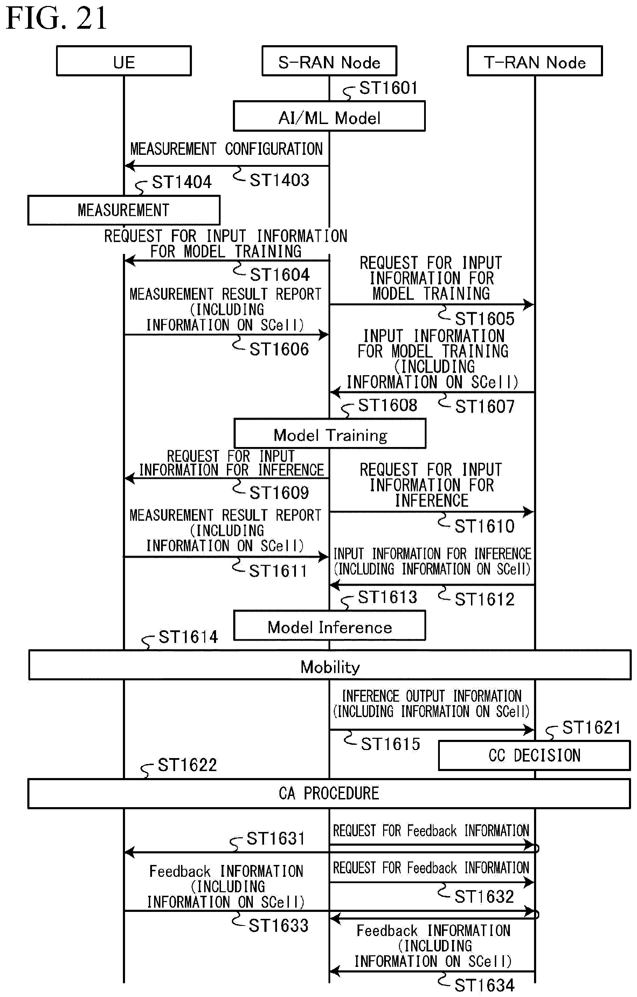

FIG. 21 is a diagram showing a sequence example of the HO procedure using the AI/ML for CA-considered HO. The steps common to those in FIG. 18 are denoted by the same step numbers, and the common description will be omitted. In step ST1601, the AI/ML model for CA-considered HO is provided in the RAN node (S-RAN node) that is the HO source.

In step ST1604, the S-RAN node transmits a request for the input information for the AI/ML model for CA-considered HO to the UE. The request may include information related the UE to be subjected to the HO. The information related the UE may be an identifier of the UE. Information indicating necessary information may be included in the request. The request may include information indicating that the purpose is for model training. For example, this configuration is effective in a case where information for model training is provided in the input information for the AI/ML model for CA-considered HO. For example, RRC signalling may be used for the transmission of the request. RRC signalling may be used for the transmission from the S-RAN node to the UE. In step ST1606, the UE transmits the input information for the AI/ML model for CA-considered HO to the S-RAN node. As the information, the measurement result by the UE may be transmitted as a measurement result report. The measurement result may be the radio measurement result, the L2 measurement result, or the measurement result by the MDT. The logged measurement result by the Logged MDT may be a result measured when the UE is in the RRC_Inactive or RRC_Idle state. These measurement results may be transmitted by the same signalling or may be transmitted by different signalling. The RRC signalling may be used for the transmission. For example, a Measurement Report message may be used for the transmission of the radio measurement result or the L2 measurement result. For example, a UE Information Response message may be used for the transmission of the measurement result by the MDT.

In step ST1605, the S-RAN node transmits a request for the input information for the AI/ML model for CA-considered HO to the neighboring base station. The request may include information related the UE to be subjected to the HO. The information related the UE may be an identifier of the UE. The number of neighboring base stations is not limited to one, but may more than one. The neighboring base station may include a T-RAN node. In other words, the T-RAN node may be selected within the neighboring base station. Information indicating necessary information may be included in the request. The request may include information indicating that the purpose is for model training. For example, this configuration is effective in a case where information for model training is provided in the input information for the AI/ML model for CA-considered HO. For example, the Xn signalling may be used for the transmission of the request. In step ST1607, the neighboring base station transmits the input information for the AI/ML model for CA-considered HO to the S-RAN node. For example, the Xn signalling may be used for the transmission of the information.

In step ST1608, the S-RAN node trains the AI/ML model for CA-considered HO using the input information for the AI/ML model for CA-considered HO stored in its own node and the input information for the AI/ML model for CA-considered HO acquired from the UE and the neighboring base station. The AI/ML model for CA-considered HO is updated by training. These procedures may be performed as appropriate. These procedures may be performed periodically or may be performed each time the HO is performed at the serving base station or at the neighboring base station.

The S-RAN node determines to perform the HO considering the CA. In step ST1609 to step ST1612, the transmission of the request for the input information for the AI/ML model for CA-considered HO for inference and the transmission of the input information for the AI/ML model for CA-considered HO for inference are performed among the UE, the S-RAN node, and the T-RAN node. As these procedures, the procedures of step ST1604 to step ST1607 described above may be applied as appropriate. The term "for model training" may be replaced with the term "for inference". In step ST1613, the S-RAN node performs the inference by the AI/ML model for CA-considered HO, to derive the output information of the AI/ML model for CA-considered HO. The S-RAN node decides the T-RAN node that is the HO target and performs an HO configuration in consideration into the CA at the HO target by using the output information. In step ST1614, the HO procedure is performed among the S-RAN node, the UE, and the T-RAN node.

In step ST1615, the S-RAN node may transmit the output information of the AI/ML model for CA-considered HO to the T-RAN node. For example, the S-RAN node selects the SCell or SCell candidate to be used for the CA in the T-RAN node by using the AI/ML model for CA-considered HO, and transmits information indicating the result of the selection as the output information of the AI/ML model for CA-considered HO. The S-RAN node transmits the information to the T-RAN node. In step ST1621, the T-RAN node decides the CC using the information. The decision of the SCell for CA may be performed. In step ST1622, the CA procedure is performed between the UE and the T-RAN node. The procedures of step ST1615 and/or step ST1621 and/or step ST1622 may be performed in the HO procedure of step ST1614. For example, the output information of the AI/ML model for CA-considered HO may be transmitted by being included in the HO request message transmitted from the S-RAN node to the T-RAN node. For example, the configuration of the SCell decided by the T-RAN node may be transmitted by being included in an HO request response message transmitted from the T-RAN node to the S-RAN node. The S-RAN node may transmit the configuration of the SCell decided by the T-RAN node by including the configuration in the RRCReconfiguration for HO to the UE.

In this way, the HO procedure considering the CA can be performed among the UE, the S-RAN node, and the T-RAN node by using the output information derived by the AI/ML model for CA-considered HO.

In step ST1631 and step ST1632, the S-RAN node transmits a request for the feedback information of the HO procedure using the AI/ML model for CA-considered HO to the UE and the T-RAN node. The transmission may be performed from the S-RAN node to the UE via the T-RAN node. Information indicating necessary information may be included in the request. In step ST1633 and step ST1634, the UE and the T-RAN node transmit the feedback information of the HO procedure using the AI/ML model for CA-considered HO to the S-RAN node. The transmission may be performed from the UE to the S-RAN node via the T-RAN node. For the transmission of the information between the UE and the base station, for example, RRC signalling may be used. For example, the F1 signalling may be used for the transmission of the information between the base stations.

In this way, the S-RAN node can acquire the performance of the CA-considered HO procedure using the AI/ML model for CA-considered HO. The S-RAN node may evaluate the effect of the CA-considered HO procedure when the AI/ML model for CA-considered HO is used, by using the feedback information of the HO procedure using the AI/ML model for CA-considered HO stored in its own node and the feedback information of the HO procedure using the AI/ML model for CA-considered HO acquired from the UE and the T-RAN node.

In this way, it is possible to perform the CA-considered HO procedure by using the AI/ML model for CA-considered HO. A more effective HO procedure can be executed.

With the method disclosed in the present embodiment, the information related the CA can be transmitted between the base stations, between the CU and the DU, and between the UE and the base station. By combining the information related the CA, for example, the information related the SCell with the input information, output information, and feedback information for the AI/ML model for HO/DC, it is possible to provide the AI/ML model for HO/DC considering the CA. By using the AI/ML model for CA-considered HO/DC, it is possible to select the HO target or the DC target where more effective CA can be performed. By performing the HO or DC procedure considering the CA, it is possible to achieve high-speed and large-capacity communication and to optimize various KPIs.

Embodiment 4.

In the present embodiment, another method that enables a more effective HO procedure or DC procedure using the AI/ML will be disclosed.

In the present embodiment, an AI/ML model for HO considering the beam (hereinafter, referred to as an AI/ML model for beam-considered HO) is introduced. In addition, an AI/ML model for DC considering the beam (hereinafter, referred to as an AI/ML model for beam-considered DC) is introduced. A method of considering a beam in the AI/ML model for HO and the AI/ML model for DC will be disclosed.

Input information for the AI/ML model for HO considering the beam and input information for the AI/ML model for DC considering the beam (hereinafter, collectively referred to as "input information for the AI/ML model for beam-considered HO/DC") are provided. Eight examples of the input information for the AI/ML model for beam-considered HO/DC will be disclosed below.

(1) Information related radio measurement of UE.
(2) Information related radio measurement by base station.
(3) Beam history information.
(4) Beam history information from neighboring base station.
(5) Communication failure status in past beam.
(6) Communication failure status in past beam from neighboring base station.
(7) Information related trajectory of UE.
(8) Combination of (1) to (7).

For example, (1) is information related the radio measurement by the UE. The radio measurement result for each beam from the base station may be added. In addition, the information related the location of the UE may be included. Time related information may be included. The radio measurement result for each beam and the information related the location or the time may be associated with each other.

For example, (2) is information related the radio measurement by the base station. The radio measurement result for each beam from the UE may be added. In addition, the information related the location of the UE may be included. Time related information may be included. The radio measurement result for each beam and the information related the location or the time may be associated with each other.

For example, (3) is a history of the beam information that has been received by the UE in the past. The beam information may be, for example, information related a synchronization signal block (SSB). Information related the CSI-RS may be used. Information related an SS/PBCH resource indicator (SSBRI) may be used. Information related a CSI-RS resource indicator (CRI) may be used. For example, information related a direction of the beam may be used. For example, information related a configuration of the beam may be used. History information of the past base station or cell (PCell, PSCell, SPCell, or SCell) of the UE and the information on the beam used in each base station or cell may be used. These pieces of information may be listed. As another example, information related the beam that has been received by the base station from the UE in the past may be used. In addition, the information related the location of the UE may be included. Time related information may be included. The information related the past beam and the information related the location or the time may be associated with each other.

(4) is history information of the beam of the neighboring base station. The beam information may be information disclosed in (3).

(5) is information related the communication failure in the past beam of the UE. For example, history information of the communication failure in the past beam of the UE may be used. The communication failure may be, for example, a beam failure. Information related a beam failure request may be used. For example, information for identifying the beam in which the communication failure has occurred may be used. The history information of the past base station or cell (PCell, PSCell, SPCell, or SCell) of the UE and the information on the communication failure in the beam used in each base station or cell may be used. These pieces of information may be listed. As another example, information related the communication failure in the beam that has been received by the base station from the UE in the past may be used. In addition, the information related the location of the UE may be included. Time related information may be included. The information related the communication failure in the past beam and the information related the location or the time may be associated with each other.

(6) is information related the communication failure of the past beam of the neighboring base station. The information related the communication failure in the past beam may be the information disclosed in (5).

The information related the trajectory of (7) may be, for example, the beam history information disclosed in (3). Information related the past and current trajectories of the UE may be used. The information related the past and current trajectories of the UE may be history information. The information related the trajectory may be information related a future trajectory of the UE. The information related the future trajectory may be predicted information. These pieces of information may be provided as a list. In addition, Time related information may be included. The information related the trajectory of the UE and the information related the time may be associated with each other.

The input information for the AI/ML model for beam-considered HO/DC may be obtained by combining the input information for the AI/ML model for beam-considered HO/DC disclosed above and the input information for the AI/ML model for HO/DC disclosed in Embodiment 3. Part or all of the pieces of information may be combined. As the AI/ML model for HO, for example, an AI/ML model for Mobility disclosed in Chapter 5.3.2 of Non Patent Document 30 may be applied. As the AI/ML model for DC, for example, an AI/ML model for DC disclosed in Embodiment 1 may be applied as appropriate.

The input information for the AI/ML model for beam-considered HO/DC is input, for training or for inference, to the AI/ML model for beam-considered HO and the AI/ML model for beam-considered DC (hereinafter, collectively referred to as "AI/ML model for beam-considered HO/DC"). In this way, it is possible to execute more effective HO or DC by using the AI/ML model for beam-considered HO/DC.

Output information of the AI/ML model for HO considering the beam (output information of the AI/ML model for beam-considered HO) and output information of the AI/ML model for DC considering the beam (output information of the AI/ML model for beam-considered DC) are provided. Hereinafter, these pieces of output information are collectively referred to as "output information of the AI/ML model for beam-considered HO/DC". As the output information of the AI/ML model for beam-considered HO/DC, the information related the beam may be added to the output information of the AI/ML model for HO/DC (output information of the AI/ML model for HO and output information of the AI/ML model for DC) disclosed in Embodiment 1. For example, the information related the beam may be added to the information on the HO target and the DC target. For example, the information related the beam at the base station or at the PCell is added to the information on the base station or PCell as the HO target. For example, the information related the beam at the base station or at the PSCell is added to the information on the base station or PSCell as the DC target. For example, the information related the beam used in the candidate PCell may be added to the information on the candidate PCell for the CHO. Information on the candidate beam may be added. For example, the information related the beam may be added to the information on the candidate PSCell for the CPC. Information on the candidate beam may be added.

In this way, output information of the AI/ML model for HO/DC considering the beam can be provided.

Feedback information of the HO procedure using the AI/ML model for HO considering the beam (feedback information of the HO procedure using the AI/ML model for beam-considered HO) and feedback information of the DC procedure using the AI/ML model for DC considering the beam (feedback information of the DC procedure using the AI/ML model for beam-considered DC) are provided. Hereinafter, these pieces of feedback information are collectively referred to as "feedback information of the HO/DC procedure using the AI/ML model for beam-considered HO/DC". As the feedback information of the HO/DC procedure using the AI/ML model for beam-considered HO/DC, the feedback information in which the information related the beam is added to the feedback information of the HO/DC procedure using the AI/ML model for HO/DC disclosed in Embodiment 1 (feedback information of the HO procedure using the AI/ML model for HO and feedback information of the DC procedure using the AI/ML model for DC) may be used. In this way, the feedback information of the HO/DC procedure using the AI/ML model for HO/DC considering the beam can be provided.

As the method of transmitting the input information, output information, and feedback information for the AI/ML model for HO/DC considering the beam between the base stations, between the CU and the DU, and between the UE and the base station, the method of transmitting the input information, output information, and feedback information for the AI/ML model for DC between the base stations, between the CU and the DU, and between the UE and the base station, which is disclosed in Embodiment 1, may be applied as appropriate.

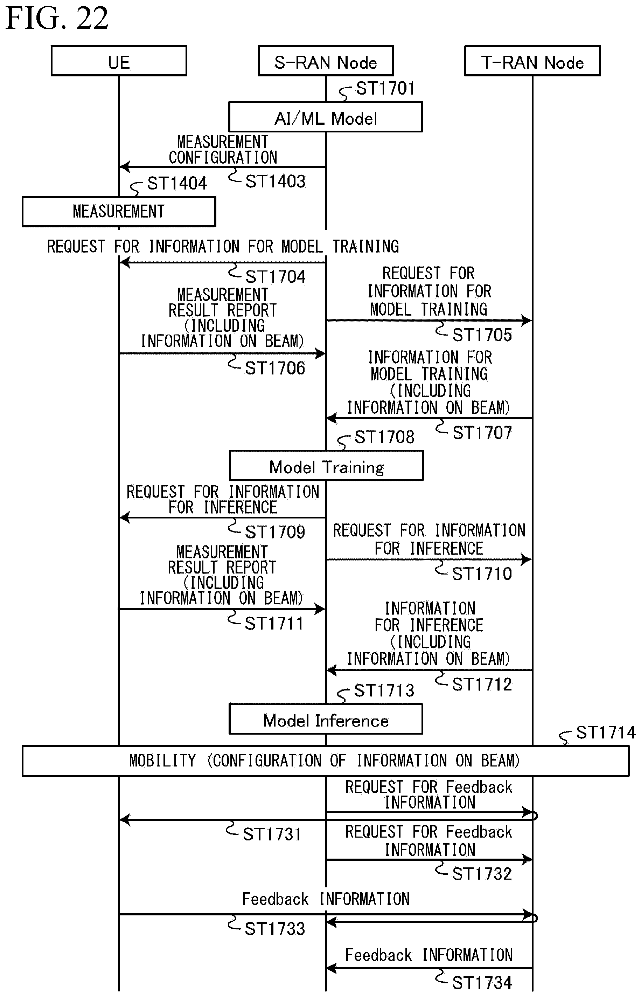

FIG. 22 is a diagram showing a sequence example of the HO procedure using the AI/ML for beam-considered HO. The steps common to those in FIG. 18 are denoted by the same step numbers, and the common description will be omitted. In step ST1701, the AI/ML model for beam-considered HO is provided in the RAN node (S-RAN node) that is the HO source.

In step ST1704, the S-RAN node transmits a request for the input information for the AI/ML model for beam-considered HO to the UE. The request may include information related the UE to be subjected to the HO. The information related the UE may be an identifier of the UE. In step ST1706, the UE transmits the input information for the AI/ML model for beam-considered HO to the S-RAN node. As the transmission method, the method disclosed in step ST1604 and step ST1606 of FIG. 21 may be applied as appropriate.

In step ST1705, the S-RAN node transmits a request for the input information for the AI/ML model for beam-considered HO to the neighboring base station. The request may include information related the UE to be subjected to the HO. The information related the UE may be an identifier of the UE. In step ST1707, the neighboring base station transmits the input information for the AI/ML model for beam-considered HO to the S-RAN node. As the transmission method, the method disclosed in step ST1605 and step ST1607 of FIG. 21 may be applied as appropriate.

In step ST1708, the S-RAN node trains the AI/ML model for beam-considered HO using the input information for the AI/ML model for beam-considered HO stored in its own node and the input information for the AI/ML model for beam-considered HO acquired from the UE and the neighboring base station. The AI/ML model for beam-considered HO is updated by training. These procedures may be performed as appropriate. These procedures may be performed periodically or may be performed each time the HO is performed at the serving base station or at the neighboring base station.

The S-RAN node determines to perform the HO considering the beam. In step ST1709 to step ST1712, the transmission of the request for the input information for the AI/ML model for beam-considered HO for inference and the transmission of the input information for the AI/ML model for beam-considered HO for inference are performed among the UE, the S-RAN node, and the T-RAN node. As these procedures, the procedures of step ST1704 to step ST1707 described above may be applied as appropriate. The term "for model training" may be replaced with the term "for inference". In step ST1713, the S-RAN node performs the inference by the AI/ML model for beam-considered HO, to derive the output information of the AI/ML model for beam-considered HO. The S-RAN node decides the T-RAN node that is the HO target and performs an HO configuration in consideration into the beam at the HO target by using the output information. In step ST1714, the HO procedure is performed among the S-RAN node, the DU, and the T-RAN node.

In this way, the HO procedure considering the beam can be performed among the UE, the S-RAN node, and the T-RAN node by using the output information derived by the AI/ML model for beam-considered HO.

In step ST1731 and step ST1732, the S-RAN node transmits a request for the feedback information of the HO procedure using the AI/ML model for beam-considered HO to the UE and the T-RAN node. The transmission may be performed from the S-RAN node to the UE via the T-RAN node. Information indicating necessary information may be included in the request. In step ST1733 and step ST1734, the UE and the T-RAN node transmit the feedback information of the HO procedure using the AI/ML model for beam-considered HO to the S-RAN node. The transmission may be performed from the UE to the S-RAN node via the T-RAN node. For the transmission of the information between the UE and the base station, for example, RRC signalling may be used. For example, the F1 signalling may be used for the transmission of the information between the base stations.

In this way, the S-RAN node can acquire the performance of the beam-considered HO procedure using the AI/ML model for beam-considered HO. The S-RAN node may evaluate the effect of the beam-considered HO procedure when the AI/ML model for beam-considered HO is used, by using the feedback information of the HO procedure using the AI/ML model for beam-considered HO stored in its own node and the feedback information of the HO procedure using the AI/ML model for beam-considered HO acquired from the UE and the T-RAN node.

In this way, it is possible to perform the beam-considered HO procedure by using the AI/ML model for beam-considered HO. A more effective HO procedure can be executed.

With the method disclosed in the present embodiment, the information related the beam can be transmitted between the base stations, between the CU and the DU, and between the UE and the base station. By adding the information related the beam to the input information, output information, and feedback information for the AI/ML model for HO/DC, it is possible to provide the AI/ML model for HO/DC considering the beam. By using the AI/ML model for beam-considered HO/DC, it is possible to select a more effective beam of the HO target or the DC target can be performed. For example, it is possible to configure the RACH corresponding to a more suitable beam of the HO target or the DC target, and it is possible to reduce the failure of the HO procedure or the DC procedure, or to reduce the access time to the HO target or the DC target. By performing the HO or DC procedure considering the beam, it is possible to achieve high-speed and large-capacity communication and to optimize various KPIs.

The information related the beam may be added to the input information, output information, and feedback information for the AI/ML model for CA disclosed in Embodiment 2 or the AI/ML model for CA-considered HO/DC disclosed in Embodiment 3. The CA or CA-considered HO/DC using the AI/ML considering the beam can be performed. It is possible to perform more effective CA or CA-considered HO/DC, which makes it possible to achieve high-speed and large-capacity communication and to optimize various KPIs.

The method disclosed in Embodiment 2 may be applied to beam-level mobility. The method disclosed in Embodiment 2 may also be applied to beam management between the cells. An AI/ML model considering the beam can be introduced into these procedures. It is possible to achieve more effective beam-level mobility and beam management between the cells.

Embodiment 5.

In a mobile communication system standardized by 3GPP, in order to improve reliability of communication, a packet duplication function using the DC or the CA is provided (Non Patent Document 2). Even in the packet duplication, a method by which a more effective packet duplication procedure can be executed is required in order to optimize not only the reliability but also various KPIs. In the present embodiment, a method of performing a more effective packet duplication procedure will be disclosed.

In the present embodiment, the AI/ML is introduced for the packet duplication. The AI/ML model for packet duplication is provided in the base station. The packet duplication configuration, for example, whether or not the packet duplication is required, the number of times of the packet duplication, or the like is performed by using the AI/ML model for packet duplication. By introducing the AI/ML into the packet duplication, more effective packet duplication can be achieved.

Input information for the AI/ML model for packet duplication is provided. Thirteen examples of the input information for the AI/ML model for packet duplication will be disclosed below.

(1) Information related packet duplication.
(2) History information of packet duplication of UE.
(3) History information of packet duplication of UE from neighboring base station.
(4) Information related performance of UE on which packet duplication is performed.
(5) Current resource status of base station.

(6) Predicted resource status of base station.
(7) Information related current traffic of UE.
(8) Information related predicted traffic of UE.
(9) Information related L2 measurement of UE.
(10) Predicted value of information related L2 measurement of UE.
(11) Information related L2 measurement from neighboring base station.
(12) Predicted value of information related L2 measurement from neighboring base station.
(13) Combination of (1) to (12).

For example, (1) may be configuration information of the packet duplication. For example, (1) may be a packet duplication state, information on whether the packet duplication is performed by the CA and/or performed by DC, information related the base station used for the packet duplication, information related the cell used for the packet duplication, information related the PDCP on which the packet duplication is performed, the number of times of the packet duplication, information related the RLC bearer of the packet duplication, the number of RLC bearers, information related a logical channel of the packet duplication, and the like. In addition, the information related the location of the UE may be included. Time related information may be included. The information related the packet duplication and the information related the location or the time may be associated with each other.

For example, (2) is a past packet duplication history. As the packet duplication history, for example, information related the base station and/or the cell used for the packet duplication of the UE may be used. A history of the information related the packet duplication in (1) described above may be used. A history of the configured packet duplication may be used. A history of activated packet duplication may be used. The amount of signalling can be reduced. Further, it is possible to perform accurate inference. These pieces of information may be listed. In addition, the information related the location of the UE may be included. Time related information may be included. The packet duplication history information of the UE and the information related the location or the time may be associated with each other.

(3) is the packet duplication history information of the UE in the neighboring base station. The packet duplication history information may be the information disclosed in (2).

For example, (4) may be a QoS of the UE on which the packet duplication is performed. A packet throughput, a packet loss rate, or a delay time may be used. A packet duplication count or a packet duplication rate may be used. The packet duplication count is a count of duplicated packets. The count of packets may be the number of packets or the number of bytes. The packet duplication rate may be, for example, a ratio of the count of duplicated packets to the count of received packets. The packet duplication count or the packet duplication rate within a predetermined period may be used. A packet discard count or a packet discard rate may be used. The packet discard count is a count of discarded packets. The packet discard rate may be, for example, a ratio of the count of discarded packets to the count of received packets. The packet discard count or the packet discard rate within a predetermined period may be used. The information related the performance of the UE may be information before the packet duplication is performed. Information after the packet duplication is performed may be used. These pieces of information may be provided for each RLC bearer. These pieces of information may be provided for each base station. These pieces of information may be provided for each SCell. In addition, the information related the location of the UE may be included. Time related information may be included. The information related the performance of the UE on which the packet duplication is performed and the information related the location or the time may be associated with each other.

For example, (5) may be a current resource usage amount of the base station or cell used for the packet duplication. A usage amount of a frequency resource may be used. A usage amount of a time resource may be used.

For example, (6) is information related a predicted resource of the base station or cell used for the packet duplication. The information related the resource of the base station or cell used for the packet duplication may be the information disclosed in (5).

In (7), the traffic of the UE may be, for example, the number of pieces of UE to be connected. For example, the number of pieces of UE constituting the RLC bearer may be used. For example, the number of pieces of UE using the resource may be used. For example, the current traffic of the UE of the base station or cell used for the packet duplication may be used.

For example, (8) is the information related the predicted traffic of the UE. The information related the traffic of the UE may be the information disclosed in (7).

For example, (9) may be a measurement result by the UE in L2 measurement information. The L2 measurement result by the UE may be an L2 measurement result by the UE in the packet duplication. The information related the L2 measurement of the UE of the input information for the AI/ML model disclosed in Embodiment 1 or Embodiment 2 may be applied as appropriate.

(10) is a predicted value of the L2 measurement information. The predicted value is a predicted value of the L2 measurement information measured by the UE. A predicted value of the L2 measurement information measured by the UE in the packet duplication may be used.

For example, (11) may be an L2 measurement result by the base station. An L2 measurement result in the neighboring base station may be used. The L2 measurement result by the base station may be an L2 measurement result by the base station in the packet duplication. The information related the L2 measurement of the input information for the AI/ML model disclosed in Embodiment 1 or Embodiment 2 from the neighboring base station may be applied as appropriate.

(12) is a predicted value of the L2 measurement information. The predicted value is a predicted value of the L2 measurement information measured by the base station. A predicted value of the L2 measurement information measured by the base station in the packet duplication may be used. A predicted value of the L2 measurement information by the base station in the neighboring base station may be used.

The input information for the AI/ML model for packet duplication may be information related the packet duplication of the DL or information related the packet duplication of the UL.

The input information for the AI/ML model for packet duplication may be obtained by combining the input information for the AI/ML model for packet duplication disclosed above with the input information for the AI/ML model for DC and the input information for the AI/ML model for CA. Part or all of the pieces of information may be combined.

The input information for the AI/ML model for packet duplication is input, for training or for inference, to the AI/ML model for packet duplication. In this way, it is possible to execute more effective packet duplication by using the AI/ML model for packet duplication.

Output information of the AI/ML model for packet duplication will be disclosed. Six examples of the output information of the AI/ML model for packet duplication will be disclosed below.

(1) Information related predicted packet duplication.
(2) Priority of predicted packet duplication.
(3) Predicted packet duplication procedure time.
(4) Predicted resource status of base station.
(5) Information related predicted traffic of UE.
(6) Combination of (1) to (5).

(1) is information related the packet duplication predicted by the AI/ML model. The information related the packet duplication may be the information disclosed in (1) of the example of the input information for the AI/ML model for packet duplication. For example, information related the base station for packet duplication may be used. Information related the cell for packet duplication may be used. The number of base stations or cells for the packet duplication may be one or plural. In addition, information related a predicted location of the UE may be included. Information related the predicted time may be included. The information related the predicted packet duplication and the information related the location or the time may be associated with each other. The number of pieces of information related the predicted packet duplication is not limited to one, but may more than one. Information related the prediction accuracy of the information on the packet duplication predicted by the AI/ML model may be included.

For example, (2) is information on the priority of the base station or cell for the predicted packet duplication disclosed in (1). The predicted base station or cell for packet duplication and the priority may be associated with each other. As another example, information on the priority of the information related the predicted packet duplication may be used. Information related the predicted packet duplication and the priority thereof may be associated with each other.

(3) is a predicted packet duplication procedure time. The packet duplication procedure time may be, for example, a time when the configuration of the packet duplication is started, a time when the configuration of the packet duplication is being performed, or a time when the configuration of the packet duplication is completed.

The packet duplication procedure time may be provided, for example, for each packet duplication configuration. For example, the packet duplication procedure time may be provided for each base station or cell for packet duplication. For example, a time for activation of the cell used for the packet duplication, a time during activation of the cell, a time for deactivation of the cell, or a time during deactivation of the cell may be used. For example, the packet duplication procedure time may be provided for each RLC bearer or for each logical channel. The predicted packet duplication procedure time and the information related the predicted packet duplication may be associated with each other.

(4) is information related the predicted resource status of the base station. The information related the resource status of the base station may be the information disclosed in (6) of the example of the input information for the AI/ML model for packet duplication. The resource status of the base station may be, for example, a predicted resource status in the predicted base station or cell for packet duplication.

(5) is the information related the predicted traffic of the UE. The information related the traffic of the UE may be the information disclosed in (8) of the example of the input information for the AI/ML model for packet duplication. The information related the predicted traffic of the UE may be, for example, information related the predicted traffic of the UE in the base station or cell for packet duplication.

The output information of the AI/ML model for packet duplication may be information related the packet duplication of the DL or information related the packet duplication of the UL.

The output information of the AI/ML model for packet duplication may be obtained by combining the output information of the AI/ML model for packet duplication disclosed above with the output information of the AI/ML model for DC and the output information of the AI/ML model for CA. Part or all of the pieces of information may be combined.

The RAN node or the UE that performs the packet duplication is notified of the output information of the AI/ML model for packet duplication disclosed above as appropriate. In this way, it is possible to execute more effective packet duplication by using the AI/ML model for packet duplication.

Feedback information obtained by the packet duplication using the AI/ML model for packet duplication will be disclosed. Six examples of the feedback information of the packet duplication procedure using the AI/ML model for packet duplication will be disclosed below.

(1) Information related performance of UE on which packet duplication is performed.
(2) Information related L2 measurement of UE.
(3) Information related L2 measurement of base station.
(4) Resource status of base station.
(5) Information related traffic of UE.
(6) Combination of (1) to (5).

For example, (1) may be (4) of the example of the input information for the AI/ML model for packet duplication.
For example, (2) may be (9) of the example of the input information for the AI/ML model for packet duplication.
For example, (3) may be (11) of the example of the input information for the AI/ML model for packet duplication.
For example, (4) may be (5) of the example of the input information for the AI/ML model for packet duplication.
For example, (5) may be (7) of the example of the input information for the AI/ML model for packet duplication.
The node including the AI/ML model for packet duplication is notified of the feedback information of the packet duplication procedure using the AI/ML model for packet duplication disclosed above, as appropriate. In this way, it is possible to evaluate the AI/ML model for packet duplication and to update the model. As a result, it is possible to execute more effective packet duplication.

As the method of transmitting the input information, output information, and feedback information for the AI/ML model for packet duplication between the base stations, between the CU and the DU, and between the UE and the base station, the method of transmitting the input information, output information, and feedback information for the AI/ML model for DC between the base stations, between the CU and the DU, and between the UE and the base station, which is disclosed in Embodiment 1, may be applied as appropriate.

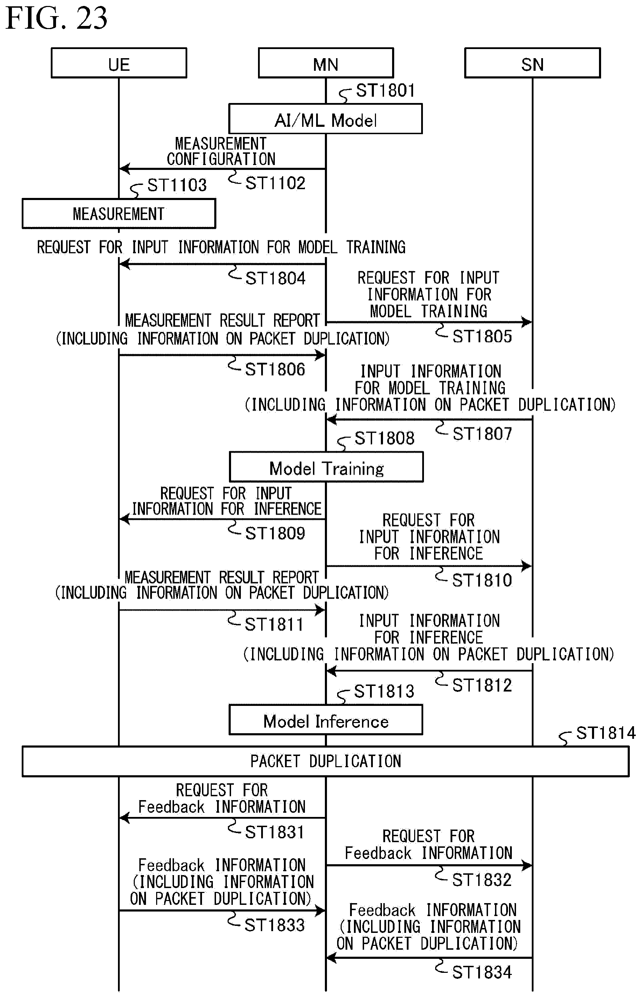

FIG. 23 is a diagram showing a sequence example of the packet duplication procedure using the AI/ML for packet duplication. The steps common to those in FIG. 15 are denoted by the same step numbers, and the common description will be omitted. In step ST1801, the AI/ML model for packet duplication is provided in the MN. The example of FIG. 23 discloses a case where the DC is performed by using the MN and the SN.

In step ST1804, the MN transmits a request for the input information for the AI/ML model for packet duplication to the UE. The request may include information related the UE subjected to the packet duplication. The information related the UE may be an identifier of the UE. In step ST1806, the UE transmits the input information for the AI/ML model for packet duplication to the MN. As the transmission method, the method disclosed in step ST1104 and step ST1106 of FIG. 15 may be applied as appropriate.

In step ST1805, the MN transmits the request for the input information for the AI/ML model for packet duplication to the SN. The request may include information related the UE subjected to the packet duplication. The information related the UE may be an identifier of the UE. In step ST1807, the SN transmits the input information for the AI/ML model for packet duplication to the MN. As the transmission method, the method disclosed in step ST1105 and step ST1107 of FIG. 15 may be applied as appropriate.

In step ST1808, the S-MN trains the AI/ML model for packet duplication using the input information for the AI/ML model for packet duplication stored in its own node and the input information for the AI/ML model for packet duplication acquired from the UE and the SN. The AI/ML model for packet duplication is updated by training. These procedures may be performed as appropriate. These procedures may be performed periodically or may be performed each time the packet duplication is performed by the MN or the SN.

The MN determines to perform the packet duplication. In step ST1809 to step ST1812, the transmission of the request for the input information for the AI/ML model for packet duplication for inference and the transmission of the input information for the AI/ML model for packet duplication for inference are performed among the UE, the MN, and the SN. As these procedures, the procedures of step ST1804 to step ST1807 described above may be applied as appropriate. The term "for model training" may be replaced with the term "for inference". In step ST1813, the MN performs the inference using the AI/ML model for packet duplication, to derive the output information of the AI/ML model for packet duplication. The MN decides the SN or the SCell to be used for the packet duplication by using the output information, and performs the configuration of the packet duplication. In step ST1814, the packet duplication procedure is performed among the MN, the SN, and the UE.

In this way, the packet duplication procedure can be performed among the MN, the SN, and the UE by using the output information derived by the AI/ML model for packet duplication.

In step ST1831 and step ST1832, the MN transmits a request for the feedback information of the packet duplication procedure using the AI/ML model for packet duplication to the UE and the SN. Information indicating necessary information may be included in the request. In step ST1833 and step ST1834, the UE and the SN transmit the feedback information of the packet duplication procedure using the AI/ML model for packet duplication to the MN. For the transmission of the information between the UE and the base station, for example, RRC signalling may be used. For example, the F1 signalling may be used for the transmission of the information between the base stations.

In this way, the MN can acquire the performance of the packet duplication procedure using the AI/ML model for packet duplication. The MN may evaluate the effect of the packet duplication procedure when the AI/ML model for packet duplication is used, by using the feedback information of the packet duplication procedure using the AI/ML model for packet duplication stored in its own node and the feedback information of the packet duplication procedure using the AI/ML model for packet duplication acquired from the UE and the SN.

In this way, it is possible to perform the packet duplication procedure using the AI/ML model for packet duplication. A more effective packet duplication procedure can be executed.

With the method as disclosed in the present embodiment, it is possible to perform training and inference in the packet duplication procedure by using the AI/ML model for packet duplication. By using the result of inference using the AI/ML model for packet duplication, for example, it is possible to more effectively configure the packet duplication, such as the selection of the base station or cell used for the packet duplication or the configuration of the RLC bearer. As a result, it is possible to achieve high reliability in the packet duplication procedure and to optimize various KPIs.

The method disclosed in the present embodiment may be combined with the DC procedure using the AI/ML model for DC disclosed in the embodiment 1 or the CA procedure using the AI/ML model for CA disclosed in the embodiment 2. The input information and output information for the AI/ML model for packet duplication may be combined with the input information for the AI/ML model for DC and the input information and output information for the AI/ML model for CA. Part or all of the pieces of information may be combined. In this way, it is possible to perform a more effective DC or CA procedure in consideration of the packet duplication.

The method disclosed in the present embodiment may be combined with the HO procedure using the AI/ML model for HO. The input information and output information for the AI/ML model for packet duplication may be combined with the input information and output information for the AI/ML model for HO. Part or all of the pieces of information may be combined. In this way, it is possible to perform a more effective HO procedure in consideration of the packet duplication.

Each of the AI/ML models, the learning device for each AI/ML model, and the inference device using each AI/ML model disclosed in the present specification may be applied to the base station, may be applied to the UE, may be applied to the CN node, for example, the AMF, may be applied to the SMF, may be applied to the UPF, may be applied to the LMF, or may be applied to a Network Data Analytics Function (NWDAF). As another example, each of the AI/ML models, the learning device for each AI/ML model, and the inference device using each AI/ML model disclosed in the present specification may be applied to a management service (MnS) or may be applied to an OAM. Each of the AI/ML models, the learning device for each AI/ML model, and the inference device using each AI/ML model disclosed in the present specification may be applied to, for example, a management system (MaS) as the MnS. Each of the AI/ML models, the learning device for each AI/ML model, and the inference device using each AI/ML model disclosed in the present specification may be applied to the same node or may be applied to different nodes. For example, the learning device for the AI/ML model is applied to the MnS node, the CN node, or the OAM, and training that takes a required time in advance is executed, the inference device using the AI/ML model is applied to the RAN node to execute the inference, and the output information required for executing the dynamic communication procedure is obtained. In this way, it is possible to provide a communication system capable of performing the communication procedure with lower delay.

The input information for each AI/ML model and the feedback information disclosed in the present specification may be transmitted to a node in which each AI/ML model, the learning device for each AI/ML model, and the inference device using each AI/ML model are provided. In this way, the AI/ML model can be generated or updated in various nodes. For example, various communication procedures suitable for the status of the communication system can be executed, such as causing a node with a low load to execute the AI/ML.

The input information, output information, and feedback information for each AI/ML model disclosed in the present specification are not limited to the use of the procedure disclosed above, and may be applied as appropriate to other uses. The input information, output information, and feedback information for each AI/ML model disclosed in the present specification may be transmitted to the base station, may be transmitted to the UE, may be transmitted to the CN node, for example, the AMF, may be transmitted to the SMF, may be transmitted to the UPF, may be transmitted to the LMF, or may be transmitted to the NWDAF. As another example, these pieces of information may be transmitted to the MnS or may be transmitted to the OAM. These pieces of information may be transmitted to, for example, the MaS, as the MnS. In addition, for example, these pieces of information may be transmitted to an application function (AF) via a network exposure function (NEF). Various procedures can be executed using these pieces of information.

In the present specification, the node may be a function.

In the communication system according to the present disclosure, one or a plurality of cells are formed in one gNB. In the present disclosure, the gNB or the cell is described, but either the gNB or the cell may be used unless otherwise specified.

In the present disclosure, the gNB may be the MCG or the SCG.

Each of the above-described embodiments and the modification examples thereof is merely an example, and the respective embodiments and the modification examples thereof can be freely combined. In addition, any component of each of the embodiments and the modification examples thereof can be changed or omitted as appropriate.

For example, in each of the above-described embodiments and the modification examples thereof, the slot is an example of the time unit of communication in the 5th generation communication system. The slot may be a unit of scheduling. In each of the above-described embodiments and the modification examples thereof, the procedure described in the units of the slot may be performed in units of a TTI, units of a subframe, units of a subslot, or units of a mini-slot.

For example, the methods disclosed in the above-described embodiments and the modification examples thereof may be applied to the IAB. The methods disclosed in the above-described embodiments and the modification examples thereof may be applied to the communication between the IAB donor and the IAB node. The methods disclosed in the above-described embodiments and the modification examples thereof may be applied to a procedure in which the Uu is used in the IAB.

Hereinafter, various aspects of the present disclosure will be collectively described as supplementary notes.

(Supplementary Note 1)

A base station of a communication system that supports dual connectivity in which a communication terminal is simultaneously connected to two base stations, in which, when the base station operates as a master base station that is a master node of the dual connectivity, the base station decides another base station that operates as a secondary base station that is a secondary node of the dual connectivity, by using a model that has been trained using information acquired from a communication terminal connected to a serving base station and other neighboring base stations.

(Supplementary Note 2)

The base station according to Supplementary Note 1, in which, in a case where it is determined that a change of the secondary base station is required when the base station operates as the master base station, the base station decides another base station that operates as the secondary base station after the change, by using the model.

(Supplementary Note 3)

The base station according to Supplementary Note 1, in which, in a case where it is determined that a change of the secondary base station is required when the base station operates as the secondary base station, the base station decides another base station that operates as the secondary base station after the change, by using the model.

(Supplementary Note 4)

The base station according to any one of Supplementary Notes 1 to 3, in which, in a case where it is determined that a change of the master base station is required when the base station operates as the master base station, the base station decides another base station that operates as the master base station after the change, by using the model.

(Supplementary Note 5)

The base station according to Supplementary Note 4, in which the base station supports carrier aggregation in which a plurality of component carriers are used in combination, and information used for training the model includes information related decision of the component carriers to be subjected to the carrier aggregation.

(Supplementary Note 6)

The base station according to Supplementary Note 4, in which information used for training the model includes information related decision of a beam used for communication with the communication terminal.

(Supplementary Note 7)

The base station according to Supplementary Note 4, in which information used for training the model includes information on a configuration of a packet duplication function used for communication with the communication terminal.

(Supplementary Note 8)

The base station according to any one of Supplementary Notes 1 to 7, in which, in a case where the serving base station starts to operate as the master base station after a change due to a procedure of changing the master base station, the base station decides another base station that operates as the secondary base station, by using the model.

(Supplementary Note 9)

A base station of a communication system, which is composed of a central unit and one or more distributed units and which supports carrier aggregation in which a plurality of component carriers are used in combination, in which the central unit decides the component carriers to be subjected to the carrier aggregation, by using a model that has been trained using information acquired from a communication terminal connected to a serving base station and the distributed unit.

(Supplementary Note 10)

A communication system that supports dual connectivity in which a communication terminal is simultaneously connected to two base stations, in which a base station that operates as a master node of the dual connectivity decides another base station that operates as a secondary node of the dual connectivity, by using a model that has been trained using information acquired from a communication terminal connected to a serving base station and other neighboring base stations.

(Supplementary Note 11)

A communication system including: a base station that supports carrier aggregation in which a plurality of component carriers are used in combination, in which the base station that supports the carrier aggregation is composed of a central unit and one or more distributed units, and the central unit decides the component carriers to be subjected to the carrier aggregation, by using a model that has been trained using information acquired from a communication terminal connected to a serving base station and the distributed unit.

[Reference Signs List]

202 Communication terminal device (user equipment)
210 Communication system
213, 240-1, 240-2, 750 Base station device (NG-RAN NodeB, base station)
214 5G core unit
215 Central unit
216 Distributed unit
217 Central unit for control plane
218 Central unit for user plane
219 TRP
301, 403 Protocol processing unit
302 Application unit
304, 405 Encoder unit
305, 406 Modulation unit
306, 407 Frequency conversion unit
307-1 to 307-4, 408-1 to 408-4 Antenna
308, 409 Demodulation unit
309, 410 Decoder unit
310, 411, 526 Control unit
401 EPC communication unit

402 Other-base station communication unit
412 5GC communication unit
521 Data network communication unit
522 Base station communication unit
523 User plane communication unit
523-1 PDU processing unit
523-2 Mobility anchoring unit
525 Control plane control unit
525-1 NAS security unit
525-2 Idle state mobility management unit
527 Session management unit
527-1 PDU session control unit
527-2 UE IP address allocation unit
751-1 to 751-8 Beam
752 Cell
1100 Learning device
1110, 1210 Data acquisition unit
1120 Model generation unit
1121 Reward calculation unit
1122 Function update unit
1130 Trained model storage unit
1200 Inference device
1220 Inference unit

**Claims**

1. A base station of a communication system that supports dual connectivity in which a communication terminal is simultaneously connected to two base stations,

   wherein, when the base station operates as a master base station that is a master node of the dual connectivity, the base station decides another base station that operates as a secondary base station that is a secondary node of the dual connectivity, by using a model that has been trained using information acquired from a communication terminal connected to a serving base station and other neighboring base stations.

2. The base station according to Claim 1,
   wherein, in a case where it is determined that a change of the secondary base station is required when the base station operates as the master base station, the base station decides another base station that operates as the secondary base station after the change, by using the model.

3. The base station according to Claim 1,
   wherein, in a case where it is determined that a change of the secondary base station is required when the base station operates as the secondary base station, the base station decides another base station that operates as the secondary base station after the change, by using the model.

4. The base station according to any one of Claims 1 to 3,
   wherein, in a case where it is determined that a change of the master base station is required when the base station operates as the master base station, the base station decides another base station that operates as the master base station after the change, by using the model.

5. The base station according to Claim 4,

   wherein the base station supports carrier aggregation in which a plurality of component carriers are used in combination, and
   information used for training the model includes information related decision of the component carriers to be subjected to the carrier aggregation.

6. The base station according to Claim 4,

wherein information used for training the model includes information related decision of a beam used for communication with the communication terminal.

7. The base station according to Claim 4,
wherein information used for training the model includes information related a configuration of a packet duplication function used for communication with the communication terminal.

8. The base station according to any one of Claims 1 to 7,
wherein, in a case where the serving base station starts to operate as the master base station after a change due to a procedure of changing the master base station, the base station decides another base station that operates as the secondary base station, by using the model.

9. A base station of a communication system, which is composed of a central unit and one or more distributed units and which supports carrier aggregation in which a plurality of component carriers are used in combination,
wherein the central unit decides the component carriers to be subjected to the carrier aggregation, by using a model that has been trained using information acquired from a communication terminal connected to a serving base station and the distributed unit.

10. A communication system that supports dual connectivity in which a communication terminal is simultaneously connected to two base stations,
wherein a base station that operates as a master node of the dual connectivity decides another base station that operates as a secondary node of the dual connectivity, by using a model that has been trained using information acquired from a communication terminal connected to a serving base station and other neighboring base stations.

11. A communication system comprising:

a base station that supports carrier aggregation in which a plurality of component carriers are used in combination, wherein the base station that supports the carrier aggregation is composed of a central unit and one or more distributed units, and
the central unit decides the component carriers to be subjected to the carrier aggregation, by using a model that has been trained using information acquired from a communication terminal connected to a serving base station and the distributed unit.

# FIG. 1

RADIO FRAME

SUBFRAME

| #0 | #1 | ... | #9 |

SCS=15kHz

SYMBOL

SLOT

SCS=30kHz

SYMBOL

SLOT

EP 4 694 348 A1

FIG. 2

# FIG. 3

214 ~| 5G Core |

240-1 ~ ( Master Node )    ( Secondary Node ) ~ 240-2

202 ~| UE |

## FIG. 4

**310**
CONTROL UNIT

**302**
APPLICATION UNIT

**202**

**301**
PROTOCOL PROCESSING UNIT

**304**
ENCODER UNIT

**305**
MODULATION UNIT

**306**
FREQUENCY CONVERSION UNIT

**307-1**

**307-2**

**307-3**

**307-4**

**309**
DECODER UNIT

**308**
DEMODULATION UNIT

EP 4 694 348 A1

FIG. 5

EP 4 694 348 A1

# FIG. 6

<u>214</u>

# FIG. 7

CELL SEARCH START

↓ ⌐ST601

DETECT SYNCHRONIZATION PCI
BY USING P-SS AND S-SS

↓ ⌐ST602

RECEIVE PBCH, RECEIVE MIB,
AND ACQUIRE SS BLOCK IDENTIFIER

↓ ⌐ST603

MEASURE RECEIVED POWER

↓ ⌐ST604

SELECT BEST CELL AND
SELECT BEST BEAM

↓ ⌐ST605

RECEIVE DL-SCH AND RECEIVE SIB1

↓ ⌐ST606

Yes ← IS TAC OF SIB1 SAME AS
TAC POSSESSED BY UE? → No

TO IDLE MODE                    TO IDLE MODE AFTER TAU

FIG. 8

## FIG. 9

## FIG. 10

FIG. 11

LEARNING DEVICE 1100

DATA ACQUISITION UNIT 1110

INPUT INFORMATION

FEEDBACK INFORMATION

MODEL GENERATION UNIT 1120

REWARD CALCULATION UNIT 1121

FUNCTION UPDATE UNIT 1122

TRAINED MODEL

TRAINED MODEL STORAGE UNIT 1130

## FIG. 12

```
        ┌─────────────┐
        │    START    │
        └─────────────┘
               │
               ▼
         ┌ b1
   ┌─────────────────┐
   │  ACQUIRE DATA   │
   └─────────────────┘
               │
               ▼
         ┌ b2                    D3 REWARD DECREASE
       ◇─────────◇                   CRITERION
      ◇  CALCULATE ◇─────────────────┐      ┌ b4
      ◇   REWARD   ◇            ┌──────────────────┐
       ◇─────────◇             │  DECREASE REWARD │
            │                  └──────────────────┘
     D2 REWARD
     INCREASE
     CRITERION
            │
            ▼  ┌ b3
   ┌─────────────────┐
   │ INCREASE REWARD │
   └─────────────────┘
            │
            ▼  ┌ b5
   ┌─────────────────┐
   │ UPDATE FUNCTION │         REPETITIVE EXECUTION
   └─────────────────┘
            │
            ▼
   ┌─────────────────┐
   │      END        │
   └─────────────────┘
```

## FIG. 13

```
                              ┌ 1130
                      ┌──────────────────┐
                      │  TRAINED MODEL   │
                      │  STORAGE UNIT    │
                      └──────────────────┘
                              │  TRAINED MODEL
                              │
                              ▼  ┌ 1200
        ┌───────────────────────────────────────────┐
        │         INFERENCE DEVICE                   │
        │  ┌ 1210                    ┌ 1220          │
 INPUT  │ ┌──────────────┐    ┌──────────────┐       │ OUTPUT
 INFORMATION│ DATA ACQUISITION│    │              │   │ INFORMATION
────────┼▶│     UNIT      │───▶│ INFERENCE UNIT│──┼──────▶
        │ └──────────────┘    └──────────────┘       │
        └───────────────────────────────────────────┘
```

FIG. 14

```
        ┌─────────────────┐
        │      START      │
        └─────────────────┘
                 │
                 ▼           ⌒c1
        ┌─────────────────────────┐
        │       ACQUIRE DATA       │
        └─────────────────────────┘
                 │
                 ▼           ⌒c2
        ┌─────────────────────────┐
        │  INPUT DATA TO TRAINED MODEL │
        └─────────────────────────┘
                 │
                 ▼           ⌒c3
        ┌─────────────────────────┐
        │        OUTPUT DATA        │
        └─────────────────────────┘
                 │
                 ▼           ⌒c4
        ┌─────────────────────────┐
        │  COMMUNICATION PROCEDURE  │
        └─────────────────────────┘
                 │
                 ▼
        ┌─────────────────┐
        │       END       │
        └─────────────────┘
```

# FIG. 15

# FIG. 16

| UE | MN | S-SN | T-SN |
|---|---|---|---|

ST1101

AI/ML Model

MEASUREMENT CONFIGURATION

ST1103    ST1102

MEASUREMENT

REQUEST FOR INPUT INFORMATION FOR MODEL TRAINING

ST1104

REQUEST FOR INPUT INFORMATION FOR MODEL TRAINING

ST1201

MEASUREMENT RESULT REPORT

REQUEST FOR INPUT INFORMATION FOR MODEL TRAINING

ST1202

ST1106

INPUT INFORMATION FOR MODEL TRAINING

ST1203

INPUT INFORMATION FOR MODEL TRAINING

ST1204

ST1108

Model Training

REQUEST FOR INPUT INFORMATION FOR INFERENCE

REQUEST FOR INPUT INFORMATION FOR INFERENCE

ST1109

ST1205

REQUEST FOR INPUT INFORMATION FOR INFERENCE

ST1206

MEASUREMENT RESULT REPORT

INPUT INFORMATION FOR INFERENCE

ST1111

ST1207

INPUT INFORMATION FOR INFERENCE

ST1113    ST1208

Model Inference

ST1209

SN Change

REQUEST FOR Feedback INFORMATION

REQUEST FOR Feedback INFORMATION

ST1115

ST1210

REQUEST FOR Feedback INFORMATION

ST1211

Feedback INFORMATION

Feedback INFORMATION

ST1117

ST1212

Feedback INFORMATION

ST1213

# FIG. 17

| UE | MN | S-SN | T-SN |
|---|---|---|---|

ST1301

AI/ML Model

MEASUREMENT
CONFIGURATION

ST1103   ST1102

MEASUREMENT

MEASUREMENT RESULT REPORT
ST1106
MEASUREMENT CONFIGURATION
ST1303                    ST1302

MEASUREMENT

REQUEST FOR INPUT INFORMATION FOR MODEL TRAINING
ST1304
REQUEST FOR INPUT INFORMATION FOR MODEL TRAINING
ST1305
REQUEST FOR INPUT INFORMATION FOR MODEL TRAINING
MEASUREMENT RESULT REPORT              ST1306
ST1307
INPUT INFORMATION FOR MODEL TRAINING
ST1308
INPUT INFORMATION FOR MODEL TRAINING
ST1310   ST1309

Model Training

REQUEST FOR INPUT INFORMATION FOR INFERENCE
ST1311
REQUEST FOR INPUT INFORMATION FOR INFERENCE
ST1312
REQUEST FOR INPUT INFORMATION FOR INFERENCE
MEASUREMENT RESULT REPORT              ST1313
INPUT   ST1314
INFORMATION FOR INFERENCE
ST1315
INPUT INFORMATION FOR INFERENCE
ST1317   ST1316

Model Inference
                                                    ST1318

SN Change

REQUEST FOR Feedback INFORMATION
REQUEST FOR   ST1319
Feedback INFORMATION
ST1320
REQUEST FOR Feedback INFORMATION
Feedback INFORMATION              ST1321
ST1322
Feedback INFORMATION
ST1323
Feedback INFORMATION
ST1324

# FIG. 18

FIG. 19

# FIG. 20

| UE | DU#1 | DU#2 | CU |
|----|------|------|-----|

ST1501
AI/ML Model

MEASUREMENT
CONFIGURATION

ST1404
ST1403

MEASUREMENT

REQUEST FOR INPUT INFORMATION FOR MODEL TRAINING

ST1511
REQUEST FOR INPUT INFORMATION FOR MODEL TRAINING

ST1512
REQUEST FOR INPUT INFORMATION FOR MODEL TRAINING

ST1513
MEASUREMENT RESULT REPORT (INCLUDING INFORMATION ON SCell)

ST1514
INPUT INFORMATION FOR MODEL TRAINING (INCLUDING INFORMATION ON SCell)

ST1515
INPUT INFORMATION FOR MODEL TRAINING (INCLUDING INFORMATION ON SCell)

ST1516   ST1517
REQUEST FOR
INPUT INFORMATION
FOR INFERENCE
Model Training

ST1521
REQUEST FOR INPUT INFORMATION FOR INFERENCE

ST1522
REQUEST FOR INPUT
INFORMATION FOR INFERENCE

ST1523
MEASUREMENT RESULT REPORT (INCLUDING INFORMATION ON SCell)

INPUT INFORMATION   ST1524
FOR INFERENCE (INCLUDING INFORMATION ON SCell)

ST1525
INPUT INFORMATION FOR INFERENCE (INCLUDING INFORMATION ON SCell)

ST1526   ST1527
Model Inference

ST1531

CA PROCEDURE

REQUEST FOR Feedback INFORMATION

ST1541
REQUEST FOR Feedback INFORMATION

REQUEST FOR ST1542
Feedback INFORMATION

ST1543
Feedback INFORMATION (INCLUDING INFORMATION ON SCell)

Feedback INFORMATION   ST1544
(INCLUDING INFORMATION ON SCell)

ST1545
Feedback INFORMATION (INCLUDING INFORMATION ON SCell)

ST1546

# FIG. 21

# FIG. 22

```
┌──────────┐        ┌────────────┐        ┌────────────┐
│    UE    │        │ S-RAN Node │        │ T-RAN Node │
└──────────┘        └────────────┘        └────────────┘
                            ⌐ST1701
                     ┌──────────────┐
                     │  AI/ML Model │
                     └──────────────┘
              MEASUREMENT
              CONFIGURATION
           ◄─────────────────────
      ⌐ST1404      ⌐ST1403
 ┌──────────────┐
 │ MEASUREMENT  │
 └──────────────┘
 REQUEST FOR INFORMATION FOR MODEL TRAINING
      ◄─────────────────────             REQUEST FOR
              ⌐ST1704                    INFORMATION FOR
              MEASUREMENT                MODEL TRAINING
              RESULT REPORT        ──────────────────────►
              (INCLUDING                      ⌐ST1705
       INFORMATION ON BEAM)               INFORMATION FOR
      ──────────────────────►             MODEL TRAINING
              ⌐ST1706                     (INCLUDING
                                    INFORMATION ON BEAM)
                                   ◄──────────────────────
                            ⌐ST1708      ⌐ST1707
                     ┌──────────────┐
                     │ Model Training│
                     └──────────────┘
          REQUEST FOR INFORMATION
               FOR INFERENCE
      ◄─────────────────────
              ⌐ST1709              REQUEST FOR INFORMATION
              MEASUREMENT               FOR INFERENCE
              RESULT REPORT       ──────────────────────►
              (INCLUDING                      ⌐ST1710
       INFORMATION ON BEAM)              INFORMATION
      ──────────────────────►           FOR INFERENCE
              ⌐ST1711                    (INCLUDING
                                    INFORMATION ON BEAM)
                                   ◄──────────────────────
                            ⌐ST1713      ⌐ST1712
                     ┌──────────────┐
                     │Model Inference│
                     └──────────────┘                ⌐ST1714
 ┌───────────────────────────────────────────────────────┐
 │ MOBILITY (CONFIGURATION OF INFORMATION ON BEAM)        │
 └───────────────────────────────────────────────────────┘
                                    REQUEST FOR Feedback
                                         INFORMATION
      ◄───────────────────────────────────────────────►
              ⌐ST1731               REQUEST FOR Feedback
                                         INFORMATION
                                   ──────────────────────►
                                             ⌐ST1732
                 Feedback INFORMATION
      ◄───────────────────────────────────────────────►
              ⌐ST1733
                                    Feedback INFORMATION
                                   ◄──────────────────────
                                             ⌐ST1734
```

# FIG. 23

```
        UE                    MN                      SN
        ┌──────────┐       ┌──────────┐           ┌──────────┐
        │    UE    │       │    MN    │           │    SN    │
        └──────────┘       └──────────┘           └──────────┘
                                   ⌐ST1801
                           ┌──────────────────┐
                           │    AI/ML Model    │
                           └──────────────────┘
                    MEASUREMENT
                    CONFIGURATION
                ◄─────────────────────
                ⌐ST1103      ⌐ST1102
        ┌──────────────┐
        │ MEASUREMENT  │
        └──────────────┘
        REQUEST FOR INPUT INFORMATION FOR MODEL TRAINING
                ◄─────────────────────
                        ⌐ST1804       REQUEST FOR INPUT
                                      INFORMATION FOR
                                      MODEL TRAINING
                MEASUREMENT RESULT REPORT ───────────────────►
        (INCLUDING INFORMATION ON PACKET DUPLICATION)  ⌐ST1805
                ─────────────────────►
                        ⌐ST1806        INPUT INFORMATION
                                     FOR MODEL TRAINING
                    (INCLUDING INFORMATION ON PACKET DUPLICATION)
                                     ◄─────────────────────
                                   ⌐ST1808      ⌐ST1807
                           ┌──────────────────┐
                           │  Model Training   │
                           └──────────────────┘
                    REQUEST FOR INPUT
                INFORMATION FOR INFERENCE
                ◄─────────────────────
                        ⌐ST1809        REQUEST FOR
                                     INPUT INFORMATION
                                      FOR INFERENCE
                MEASUREMENT RESULT REPORT ───────────────────►
        (INCLUDING INFORMATION ON PACKET DUPLICATION)  ⌐ST1810
                ─────────────────────►
                        ⌐ST1811        INPUT INFORMATION
                                        FOR INFERENCE
                    (INCLUDING INFORMATION ON PACKET DUPLICATION)
                                     ◄─────────────────────
                                   ⌐ST1813      ⌐ST1812
                           ┌──────────────────┐
                           │  Model Inference  │
                           └──────────────────┘
                                                          ⌐ST1814
        ┌───────────────────────────────────────────────────────┐
        │                 PACKET DUPLICATION                     │
        └───────────────────────────────────────────────────────┘
                REQUEST FOR
            Feedback INFORMATION
                ◄─────────────────────
                        ⌐ST1831        REQUEST FOR
                                     Feedback INFORMATION
            Feedback INFORMATION
        (INCLUDING INFORMATION             ⌐ST1832
        ON PACKET DUPLICATION)
                ─────────────────────►  Feedback INFORMATION
                        ⌐ST1833      (INCLUDING INFORMATION
                                     ON PACKET DUPLICATION)
                                     ◄─────────────────────
                                              ⌐ST1834
```

## INTERNATIONAL SEARCH REPORT

International application No.

**PCT/JP2024/011425**

| A. | CLASSIFICATION OF SUBJECT MATTER |
|---|---|

*H04W 36/08*(2009.01)i; *H04W 72/0457*(2023.01)i
FI:   H04W36/08; H04W72/0457 110

According to International Patent Classification (IPC) or to both national classification and IPC

| B. | FIELDS SEARCHED |
|---|---|

Minimum documentation searched (classification system followed by classification symbols)

H04W36/08; H04W72/0457

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | ERICSSON, AI/ML Load Balancing and Mobility Optimization use cases, 3GPP TSG-RAN WG3 Meeting #114-e R3-215474, 21 October 2021, pp. 1-14<br>chapter 3 | 1-8, 10, 11 |
| X | 3GPP TR37.817 V17.0.0, 06 April 2022, pp. 1-23<br>chapter 5.3 | 1-8, 10, 11 |
| X | WO 2021/148136 A1 (NOKIA TECHNOLOGIES OY) 29 July 2021 (2021-07-29)<br>p. 12, line 17 to p. 14, line 17 | 9 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **31 May 2024** | **11 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/011425**

| Patent document cited in search report | Publication date (day/month/year) | Patent family member(s) | Publication date (day/month/year) |
|---|---|---|---|
| WO 2021/148136 A1 | 29 July 2021 | US 2023/0055959 A1 paragraphs [0052]-[0061] CN 115066698 A | |

Form PCT/ISA/210 (patent family annex) (July 2022)